(19)

**Europäisches Patentamt**
**European Patent Office**
**Office européen des brevets**

(11)  **EP 4 454 345 B1**

(12)  # EUROPEAN PATENT SPECIFICATION

(45) Date of publication and mention
of the grant of the patent:
**02.07.2025  Bulletin 2025/27**

(21) Application number: **23705451.5**

(22) Date of filing: **04.01.2023**

(51) International Patent Classification (IPC):
$H04W\ 48/14^{(2009.01)}$    $H04W\ 48/18^{(2009.01)}$
$H04W\ 48/20^{(2009.01)}$    $H04W\ 74/08^{(2024.01)}$
$H04L\ 41/0853^{(2022.01)}$    $H04L\ 41/0893^{(2022.01)}$
$H04L\ 41/0816^{(2022.01)}$

(52) Cooperative Patent Classification (CPC):
**H04W 48/14; H04L 41/0853; H04L 41/0893;**
H04L 41/0816; H04L 41/0895; H04W 48/18;
H04W 48/20

(86) International application number:
**PCT/US2023/010130**

(87) International publication number:
**WO 2023/133150 (13.07.2023 Gazette 2023/28)**

(54)  **NETWORK SLICE GROUP INFORMATION**

NETZWERK-SLICE-GRUPPENINFORMATIONEN

INFORMATIONS DE GROUPE DE TRANCHES DE RÉSEAU

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **07.01.2022   US 202263297551 P**

(43) Date of publication of application:
**30.10.2024   Bulletin 2024/44**

(73) Proprietor: **Ofinno, LLC**
**Reston, VA 20190 (US)**

(72) Inventors:
• **PARK, Kyungmin**
**Reston, Virginia 20190 (US)**
• **KIM, Taehun**
**Reston, Virginia 20190 (US)**
• **DINAN, Esmael Hejazi**
**Reston, Virginia 20190 (US)**
• **TALEBI FARD, Peyman**
**Reston, Virginia 20190 (US)**
• **QIAO, Weihua**
**Reston, Virginia 20190 (US)**
• **CHUN, SungDuck**
**Reston, Virginia 20190 (US)**
• **XU, Jian**
**Reston, Virginia 20190 (US)**

(74) Representative: **Westphal, Mussgnug  & Partner,
Patentanwälte mbB
Werinherstraße 79
81541 München (DE)**

(56) References cited:
**WO-A1-2023/057980     WO-A1-2023/080057**

• **CHINA MOBILE: "Support of slice priority and
slice group information for cell (re)selection",
vol. SA WG2, no. Electronic; 20211018 -
20211022, 11 October 2021 (2021-10-11),
XP052062409, Retrieved from the Internet
<URL:https://ftp.3gpp.org/tsg_sa/WG2_Arch/
TSGS2_147E_Electronic_2021-10/Docs/
S2-2107535.zip S2-2107535Â 502Â cr1.docx>
[retrieved on 20211011]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

- SAMSUNG: "Support Slice group for cell re-selection", vol. SA WG2, no. 20211115 - 20211119, 8 November 2021 (2021-11-08), XP052075725, Retrieved from the Internet <URL:https://ftp.3gpp.org/tsg_sa/WG2_Arch/TSGS2_148E_Electronic_2021-11/Docs/S2-2108620.zip S2-2108620_NSlice_Core_23.502_Support Slice Group for Cell Reselection.docx> [retrieved on 20211108]
- LENOVO ET AL: "Considerations on scenarios and solution space of RAN slicing enhancements", vol. RAN WG2, no. Electronic; 20210125 - 20210205, 14 January 2021 (2021-01-14), XP051972813, Retrieved from the Internet <URL:https://ftp.3gpp.org/tsg_ran/WG2_RL2/TSGR2_113-e/Docs/R2-2101061.zip R2-2101061_RAN_slicing_enh-v1.doc> [retrieved on 20210114]
- NOKIA ET AL: "Enabling configuration of Network Slice AS Groups", vol. SA WG2, no. E-meeting; 20211115 - 20211122, 8 November 2021 (2021-11-08), XP052076726, Retrieved from the Internet <URL:https://ftp.3gpp.org/tsg_sa/WG2_Arch/TSGS2_148E_Electronic_2021-11/Docs/S2-2108866.zip S2-2108866-23502 CR_NSAG.docx> [retrieved on 20211108]
- ERICSSON: "Running 38.304 CR for RAN slicing", vol. RAN WG2, no. Electronic Meeting; 20220117 - 20220125, 5 January 2022 (2022-01-05), XP052089820, Retrieved from the Internet <URL:https://ftp.3gpp.org/tsg_ran/WG2_RL2/TSGR2_116bis-e/Docs/R2-2200044.zip R2-2200044 Running 38304CR for slicing.doc> [retrieved on 20220105]
- OPPO: "38.321 running CR for RAN Slicing", vol. RAN WG2, no. Electronic Meeting; 20211101 - 20211112, 2 December 2021 (2021-12-02), XP052086079, Retrieved from the Internet <URL:https://ftp.3gpp.org/tsg_ran/WG2_RL2/TSGR2_116-e/Docs/R2-2111435.zip R2-2111435 38_321_Running_CR_for_Slicing_in_NR_clean.docx> [retrieved on 20211202]
- "3rd Generation Partnership Project; Technical Specification Group Radio Access Network; NR; Radio Resource Control (RRC) protocol specification (Release 16)", vol. RAN WG2, no. V16.7.0, 23 December 2021 (2021-12-23), pages 1 - 963, XP052083424, Retrieved from the Internet <URL:https://ftp.3gpp.org/Specs/archive/38_series/38.331/38331-g70.zip 38331-g70.docx> [retrieved on 20211223]

**Description**

**TECHNICAL FIELD**

This application relates to the field of wireless communication systems such as 4G communication systems (e.g., LTE), 5G communication systems, other communication systems compatible with 4G and/or 5G communication systems, and related methods, systems and apparatuses.

**BACKGROUND**

With regard to the prior art, reference is made to the relevant 3GPP standards such as TS 38.331 (V16.7.0) as well as to the 3GPP publications China Mobile, "Support of slice priority and slice group information for cell (re)selection", in: 3GPP doc. S2-2107535, SA WG2 Meeting #S2-147e, Oct. 18-22, 2021*;* Samsung, "Support Slice group for cell re-selection", in: 3GPP doc. S2-2108620, 3GPP TSG-SA2 Meeting #148E, Nov. 15-19, 2021*;* Lenovo et al. "Considerations on scenarios and solution space of RAN slicing enhancements", in: 3GPP doc. R2-2101061, 3GPP TSG RAN WG2 Meeting #113-e, Jan. 25 - Feb. 5, 2021*;* Nokia et al., "Enabling configuration of Network Slice AS Groups", in: 3GPP doc. S2-2108866, 3GPP TSG-WG SA2 Meeting #148e, Nov. 15-22, 2021; Ericsson, "Running 38.304 CR for RAN slicing", in: 3GPP doc. R2-2200044, 3GPP TSG-RAN WG2 Meeting #116-bis, Jan. 17-25 2022; and OPPO, "38.321 running CR for RAN Slicing", in: 3GPP doc. R2-2111435, 3GPP TSG-RAN WG2 Meeting #116-e, Nov. 1-12, 2021. Further reference is made to the published patent applications WO 2023/080057 A1 and WO 2023/057980 A1.

**SUMMARY**

The invention is set out in the appended claims. Accordingly, a method for a core network device of a wireless communication network is described herein. In one embodiment, the method includes receiving - by the core network device from a wireless device - a first message indicating a request for network slice group information, wherein the first message comprises: an indication that the at least one first network slice is supported, requested, and/or used by the wireless device; an identifier of the at least one first network slice; an indication that at least one second network slice is not supported, requested, and/or used by the wireless device; and/or an identifier of the at least one second network slice. The first message further comprises an indication of a coverage area associated with the supporting, not supporting, requesting, not requesting, using, and/or not using of the at least one network slice. The method further includes sending - by the core network device to the wireless device - a second message comprising the network slice group information, wherein the network slice group information indicates that a first network slice group comprises at least one first network slice. Moreover, a corresponding method for the wireless device as well as related apparatuses, devices and systems are described.

**BRIEF DESCRIPTION OF THE DRAWINGS**

Examples of several of the various embodiments of the present disclosure are described herein with reference to the drawings.

FIG. 1A and FIG. 1B illustrate example mobile communication networks in which embodiments of the present disclosure may be implemented.

FIG. 2A and FIG. 2B respectively illustrate a New Radio (NR) user plane and control plane protocol stack.

FIG. 3 illustrates an example of services provided between protocol layers of the NR user plane protocol stack of FIG. 2A.

FIG. 4A illustrates an example downlink data flow through the NR user plane protocol stack of FIG. 2A.

FIG. 4B illustrates an example format of a MAC subheader in a MAC PDU.

FIG. 5A and FIG. 5B respectively illustrate a mapping between logical channels, transport channels, and physical channels for the downlink and uplink.

FIG. 6 is an example diagram showing RRC state transitions of a UE.

FIG. 7 illustrates an example configuration of an NR frame into which OFDM symbols are grouped.

FIG. 8 illustrates an example configuration of a slot in the time and frequency domain for an NR carrier.

FIG. 9 illustrates an example of bandwidth adaptation using three configured BWPs for an NR carrier.

FIG. 10A illustrates three carrier aggregation configurations with two component carriers.

FIG. 10B illustrates an example of how aggregated cells may be configured into one or more PUCCH groups.

FIG. 11A illustrates an example of an SS/PBCH block structure and location.

FIG. 11B illustrates an example of CSI-RSs that are mapped in the time and frequency domains.

FIG. 12A and FIG. 12B respectively illustrate examples of three downlink and uplink beam management procedures.

FIG. 13A, FIG. 13B, and FIG. 13C respectively illustrate a four-step contention-based random access procedure, a two-step contention-free random access procedure, and another two-step random access procedure.

FIG. 14A illustrates an example of CORESET configurations for a bandwidth part.

FIG. 14B illustrates an example of a CCE-to-REG mapping for DCI transmission on a CORESET and PDCCH processing.

FIG. 15 illustrates an example of a wireless device in communication with a base station.

FIG. 16A, FIG. 16B, FIG. 16C, and FIG. 16D illustrate example structures for uplink and downlink transmission.

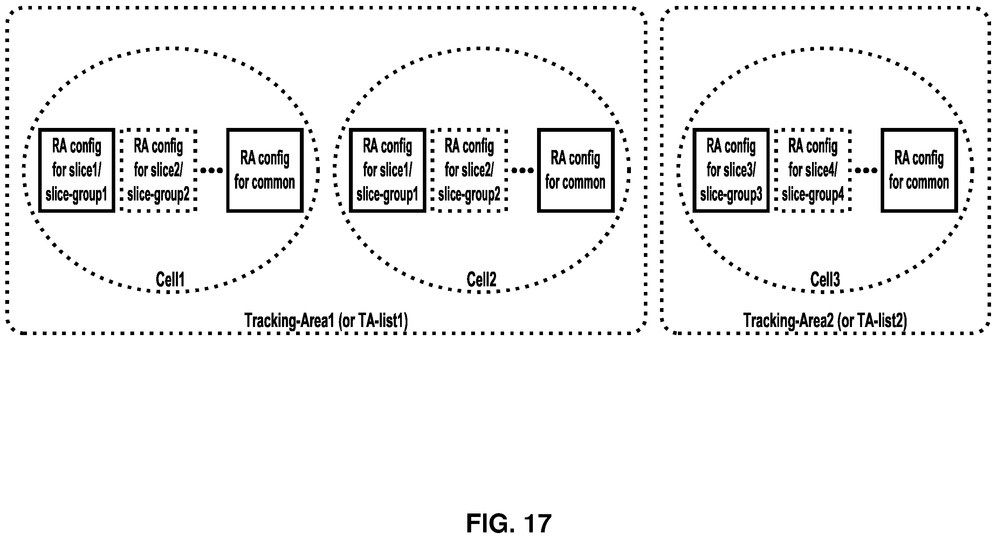

FIG. 17 is an example diagram of an aspect of an embodiment of the present disclosure.

FIG. 18 is an example diagram of an aspect of an embodiment of the present disclosure.

FIG. 19 is an example diagram of an aspect of an embodiment of the present disclosure.

FIG. 20 is an example diagram of an aspect of an embodiment of the present disclosure.

FIG. 21 is an example diagram of an aspect of an embodiment of the present disclosure.

FIG. 22 is an example diagram of an aspect of an embodiment of the present disclosure.

FIG. 23 is an example diagram of an aspect of an embodiment of the present disclosure.

FIG. 24 is an example diagram of an aspect of an embodiment of the present disclosure.

FIG. 25 is an example diagram of an aspect of an embodiment of the present disclosure.

FIG. 26 is an example diagram of an aspect of an embodiment of the present disclosure.

## DETAILED DESCRIPTION

In the present disclosure, various embodiments are presented as examples of how the disclosed techniques may be implemented and/or how the disclosed techniques may be practiced in environments and scenarios. It will be apparent to persons skilled in the relevant art that various changes in form and detail can be made therein without departing from the scope. In fact, after reading the description, it will be apparent to one skilled in the relevant art how to implement alternative embodiments. The present embodiments should not be limited by any of the described exemplary embodiments. The embodiments of the present disclosure will be described with reference to the accompanying drawings. Limitations, features, and/or elements from the disclosed example embodiments may be combined to create further embodiments within the scope of the disclosure. Any figures which highlight the functionality and advantages, are presented for example purposes only. The disclosed architecture is sufficiently flexible and configurable, such that it may be utilized in ways other than that shown. For example, the actions listed in any flowchart may be re-ordered or only optionally used in some embodiments.

Embodiments may be configured to operate as needed. The disclosed mechanism may be performed when certain criteria are met, for example, in a wireless device, a base station, a radio environment, a network, a combination of the above, and/or the like. Example criteria may be based, at least in part, on for example, wireless device or network node configurations, traffic load, initial system set up, packet sizes, traffic characteristics, a combination of the above, and/or the like. When the one or more criteria are met, various example embodiments may be applied. Therefore, it may be possible to implement example embodiments that selectively implement disclosed protocols.

A base station may communicate with a mix of wireless devices. Wireless devices and/or base stations may support multiple technologies, and/or multiple releases of the same technology. Wireless devices may have some specific capability(ies) depending on wireless device category and/or capability(ies). When this disclosure refers to a base station communicating with a plurality of wireless devices, this disclosure may refer to a subset of the total wireless devices in a coverage area. This disclosure may refer to, for example, a plurality of wireless devices of a given LTE or 5G release with a given capability and in a given sector of the base station. The plurality of wireless devices in this disclosure may refer to a selected plurality of wireless devices, and/or a subset of total wireless devices in a coverage area which perform according to disclosed methods, and/or the like. There may be a plurality of base stations or a plurality of wireless devices in a coverage area that may not comply with the disclosed methods, for example, those wireless devices or base stations may perform based on older releases of LTE or 5G technology.

In this disclosure, "a" and "an" and similar phrases are to be interpreted as "at least one" and "one or more." Similarly, any term that ends with the suffix "(s)" is to be interpreted as "at least one" and "one or more." In this disclosure, the term "may" is to be interpreted as "may, for example." In other words, the term "may" is indicative that the phrase following the term "may" is an example of one of a multitude of suitable possibilities that may, or may not, be employed by one or more of the various embodiments. The terms "comprises" and "consists of", as used herein, enumerate one or more components of the element being described. The term "comprises" is interchangeable with "includes" and does not exclude unenumerated components from being included in the element being described. By contrast, "consists of" provides a complete enumeration of the one or more components of the element being described. The term "based on", as used herein, should be interpreted as "based at least in part on" rather than, for example, "based solely on". The term "and/or" as used herein represents any possible combination of enumerated elements. For example, "A, B, and/or C" may represent A; B; C; A and B; A and C; B and C; or A, B, and C.

If A and B are sets and every element of A is an element of B, A is called a subset of B. In this specification, only non-empty sets and subsets are considered. For example, possible subsets of B = {cell1, cell2} are: {cell1}, {cell2}, and {cell1, cell2}. The phrase "based on" (or equally "based at least on") is indicative that the phrase following the term "based on" is an example of one of a multitude of suitable possibilities that may, or may not, be employed to one or more of the various embodiments. The phrase "in response to" (or equally "in response at least to") is indicative that the phrase following the phrase "in response to" is an example of one of a multitude of suitable possibilities that may, or may not, be employed to one or more of the various embodiments. The phrase "depending on" (or equally "depending at least to") is indicative that the phrase following the phrase "depending on" is an example of one of a multitude of suitable possibilities that may, or may not, be employed to one or more of the various embodiments. The phrase "employing/using" (or equally "employing/using at least") is indicative that the phrase following the phrase "employing/using" is an example of one of a multitude of suitable possibilities that may, or may not, be employed to one or more of the various embodiments.

The term configured may relate to the capacity of a device whether the device is in an operational or non-operational state. Configured may refer to specific settings in a device that effect the operational characteristics of the device whether the device is in an operational or non-operational state. In other words, the hardware, software, firmware, registers, memory values, and/or the like may be "configured" within a device, whether the device is in an operational or nonoperational state, to provide the device with specific characteristics. Terms such as "a control message to cause in a device" may mean that a control message has parameters that may be used to configure specific characteristics or may be used to implement certain actions in the device, whether the device is in an operational or non-operational state.

In this disclosure, parameters (or equally called, fields, or Information elements: IEs) may comprise one or more information objects, and an information object may comprise one or more other objects. For example, if parameter (IE) N comprises parameter (IE) M, and parameter (IE) M comprises parameter (IE) K, and parameter (IE) K comprises parameter (information element) J. Then, for example, N comprises K, and N comprises J. In an example embodiment, when one or more messages comprise a plurality of parameters, it implies that a parameter in the plurality of parameters is in at least one of the one or more messages, but does not have to be in each of the one or more messages.

Many features presented are described as being optional through the use of "may" or the use of parentheses. For the sake of brevity and legibility, the present disclosure does not explicitly recite each and every permutation that may be obtained by choosing from the set of optional features. The present disclosure is to be interpreted as explicitly disclosing all such permutations. For example, a system described as having three optional features may be embodied in seven ways, namely with just one of the three possible features, with any two of the three possible features or with three of the three possible features.

Many of the elements described in the disclosed embodiments may be implemented as modules. A module is defined here as an element that performs a defined function and has a defined interface to other elements. The modules described in this disclosure may be implemented in hardware, software in combination with hardware, firmware, wetware (e.g. hardware with a biological element) or a combination thereof, which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. It may be possible to implement modules using physical hardware that incorporates discrete or programmable analog, digital and/or quantum hardware. Examples of programmable hardware comprise: computers, microcontrollers, microprocessors, application-specific integrated circuits (ASICs); field programmable gate arrays (FPGAs); and complex programmable logic devices (CPLDs). Computers, microcontrollers and microprocessors are programmed using languages such as assembly, C, C++ or the like. FPGAs, ASICs and CPLDs are often programmed using hardware description languages (HDL) such as VHSIC hardware description language (VHDL) or Verilog that configure connections between internal hardware modules with lesser functionality on a programmable device. The mentioned technologies are often used in combination to achieve the result of a functional module.

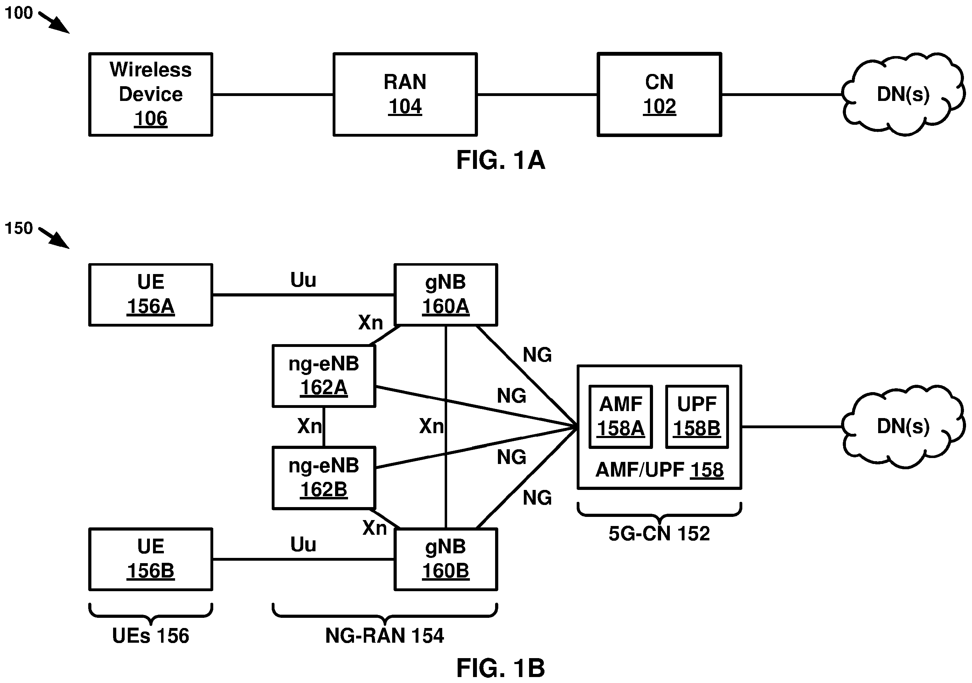

FIG. 1A illustrates an example of a mobile communication network 100 in which embodiments of the present disclosure may be implemented. The mobile communication network 100 may be, for example, a public land mobile network (PLMN) run by a network operator. As illustrated in FIG. 1A, the mobile communication network 100 includes a core network (CN) 102, a radio access network (RAN) 104, and a wireless device 106.

The CN 102 may provide the wireless device 106 with an interface to one or more data networks (DNs), such as public DNs (e.g., the Internet), private DNs, and/or intra-operator DNs. As part of the interface functionality, the CN 102 may set up end-to-end connections between the wireless device 106 and the one or more DNs, authenticate the wireless device 106, and provide charging functionality.

The RAN 104 may connect the CN 102 to the wireless device 106 through radio communications over an air interface. As part of the radio communications, the RAN 104 may provide scheduling, radio resource management, and retransmission protocols. The communication direction from the RAN 104 to the wireless device 106 over the air interface is known as the downlink and the communication direction from the wireless device 106 to the RAN 104 over the air interface is known as the uplink. Downlink transmissions may be separated from uplink transmissions using frequency division duplexing (FDD), time-division duplexing (TDD), and/or some combination of the two duplexing techniques.

The term wireless device may be used throughout this disclosure to refer to and encompass any mobile device or fixed (non-mobile) device for which wireless communication is needed or usable. For example, a wireless device may be a telephone, smart phone, tablet, computer, laptop, sensor, meter, wearable device, Internet of Things (IoT) device, vehicle road side unit (RSU), relay node, automobile, and/or any combination thereof. The term wireless device encompasses other terminology, including user equipment (UE), user terminal (UT), access terminal (AT), mobile station, handset, wireless transmit and receive unit (WTRU), and/or wireless communication device.

The RAN 104 may include one or more base stations (not shown). The term base station may be used throughout this disclosure to refer to and encompass a Node B (associated with UMTS and/or 3G standards), an Evolved Node B (eNB, associated with E-UTRA and/or 4G standards), a remote radio head (RRH), a baseband processing unit coupled to one or more RRHs, a repeater node or relay node used to extend the coverage area of a donor node, a Next Generation Evolved Node B (ng-eNB), a Generation Node B (gNB, associated with NR and/or 5G standards), an access point (AP, associated with, for example, WiFi or any other suitable wireless communication standard), and/or any combination thereof. A base station may comprise at least one gNB Central Unit (gNB-CU) and at least one a gNB Distributed Unit (gNB-DU).

A base station included in the RAN 104 may include one or more sets of antennas for communicating with the wireless device 106 over the air interface. For example, one or more of the base stations may include three sets of antennas to respectively control three cells (or sectors). The size of a cell may be determined by a range at which a receiver (e.g., a base station receiver) can successfully receive the transmissions from a transmitter (e.g., a wireless device transmitter) operating in the cell. Together, the cells of the base stations may provide radio coverage to the wireless device 106 over a wide geographic area to support wireless device mobility.

In addition to three-sector sites, other implementations of base stations are possible. For example, one or more of the base stations in the RAN 104 may be implemented as a sectored site with more or less than three sectors. One or more of the base stations in the RAN 104 may be implemented as an access point, as a baseband processing unit coupled to several remote radio heads (RRHs), and/or as a repeater or relay node used to extend the coverage area of a donor node. A baseband processing unit coupled to RRHs may be part of a centralized or cloud RAN architecture, where the baseband processing unit may be either centralized in a pool of baseband processing units or virtualized. A repeater node may amplify and rebroadcast a radio signal received from a donor node. A relay node may perform the same/similar functions as a repeater node but may decode the radio signal received from the donor node to remove noise before amplifying and rebroadcasting the radio signal.

The RAN 104 may be deployed as a homogenous network of macrocell base stations that have similar antenna patterns and similar high-level transmit powers. The RAN 104 may be deployed as a heterogeneous network. In heterogeneous networks, small cell base stations may be used to provide small coverage areas, for example, coverage areas that overlap with the comparatively larger coverage areas provided by macrocell base stations. The small coverage areas may be provided in areas with high data traffic (or so-called "hotspots") or in areas with weak macrocell coverage. Examples of small cell base stations include, in order of decreasing coverage area, microcell base stations, picocell base stations, and femtocell base stations or home base stations.

The Third-Generation Partnership Project (3GPP) was formed in 1998 to provide global standardization of specifications for mobile communication networks similar to the mobile communication network 100 in FIG. 1A. To date, 3GPP has produced specifications for three generations of mobile networks: a third generation (3G) network known as Universal Mobile Telecommunications System (UMTS), a fourth generation (4G) network known as Long-Term Evolution (LTE), and a fifth generation (5G) network known as 5G System (5GS). Embodiments of the present disclosure are described with reference to the RAN of a 3GPP 5G network, referred to as next-generation RAN (NG-RAN). Embodiments may be applicable to RANs of other mobile communication networks, such as the RAN 104 in FIG. 1A, the RANs of earlier 3G and 4G networks, and those of future networks yet to be specified (e.g., a 3GPP 6G network). NG-RAN implements 5G radio access technology known as New Radio (NR) and may be provisioned to implement 4G radio access technology or other radio access technologies, including non-3GPP radio access technologies.

FIG. 1B illustrates another example mobile communication network 150 in which embodiments of the present disclosure may be implemented. Mobile communication network 150 may be, for example, a PLMN run by a network operator. As illustrated in FIG. 1B, mobile communication network 150 includes a 5G core network (5G-CN) 152, an NG-RAN 154, and UEs 156A and 156B (collectively UEs 156). These components may be implemented and operate in the same or similar manner as corresponding components described with respect to FIG. 1A.

The 5G-CN 152 provides the UEs 156 with an interface to one or more DNs, such as public DNs (e.g., the Internet), private DNs, and/or intra-operator DNs. As part of the interface functionality, the 5G-CN 152 may set up end-to-end connections between the UEs 156 and the one or more DNs, authenticate the UEs 156, and provide charging functionality. Compared to the CN of a 3GPP 4G network, the basis of the 5G-CN 152 may be a service-based architecture. This means that the architecture of the nodes making up the 5G-CN 152 may be defined as network functions that offer

EP 4 454 345 B1

services via interfaces to other network functions. The network functions of the 5G-CN 152 may be implemented in several ways, including as network elements on dedicated or shared hardware, as software instances running on dedicated or shared hardware, or as virtualized functions instantiated on a platform (e.g., a cloud-based platform).

As illustrated in FIG. 1B, the 5G-CN 152 includes an Access and Mobility Management Function (AMF) 158A and a User Plane Function (UPF) 158B, which are shown as one component AMF/UPF 158 in FIG. 1B for ease of illustration. The UPF 158B may serve as a gateway between the NG-RAN 154 and the one or more DNs. The UPF 158B may perform functions such as packet routing and forwarding, packet inspection and user plane policy rule enforcement, traffic usage reporting, uplink classification to support routing of traffic flows to the one or more DNs, quality of service (QoS) handling for the user plane (e.g., packet filtering, gating, uplink/downlink rate enforcement, and uplink traffic verification), downlink packet buffering, and downlink data notification triggering. The UPF 158B may serve as an anchor point for intra-linter-Radio Access Technology (RAT) mobility, an external protocol (or packet) data unit (PDU) session point of interconnect to the one or more DNs, and/or a branching point to support a multi-homed PDU session. The UEs 156 may be configured to receive services through a PDU session, which is a logical connection between a UE and a DN.

The AMF 158A may perform functions such as Non-Access Stratum (NAS) signaling termination, NAS signaling security, Access Stratum (AS) security control, inter-CN node signaling for mobility between 3GPP access networks, idle mode UE reachability (e.g., control and execution of paging retransmission), registration area management, intra-system and inter-system mobility support, access authentication, access authorization including checking of roaming rights, mobility management control (subscription and policies), network slicing support, and/or session management function (SMF) selection. NAS may refer to the functionality operating between a CN and a UE, and AS may refer to the functionality operating between the UE and a RAN.

The 5G-CN 152 may include one or more additional network functions that are not shown in FIG. 1B for the sake of clarity. For example, the 5G-CN 152 may include one or more of a Session Management Function (SMF), an NR Repository Function (NRF), a Policy Control Function (PCF), a Network Exposure Function (NEF), a Unified Data Management (UDM), an Application Function (AF), and/or an Authentication Server Function (AUSF).

The NG-RAN 154 may connect the 5G-CN 152 to the UEs 156 through radio communications over the air interface. The NG-RAN 154 may include one or more gNBs, illustrated as gNB 160A and gNB 160B (collectively gNBs 160) and/or one or more ng-eNBs, illustrated as ng-eNB 162A and ng-eNB 162B (collectively ng-eNBs 162). The gNBs 160 and ng-eNBs 162 may be more generically referred to as base stations. The gNBs 160 and ng-eNBs 162 may include one or more sets of antennas for communicating with the UEs 156 over an air interface. For example, one or more of the gNBs 160 and/or one or more of the ng-eNBs 162 may include three sets of antennas to respectively control three cells (or sectors). Together, the cells of the gNBs 160 and the ng-eNBs 162 may provide radio coverage to the UEs 156 over a wide geographic area to support UE mobility.

As shown in FIG. 1B, the gNBs 160 and/or the ng-eNBs 162 may be connected to the 5G-CN 152 by means of an NG interface and to other base stations by an Xn interface. The NG and Xn interfaces may be established using direct physical connections and/or indirect connections over an underlying transport network, such as an internet protocol (IP) transport network. The gNBs 160 and/or the ng-eNBs 162 may be connected to the UEs 156 by means of a Uu interface. For example, as illustrated in FIG. 1B, gNB 160A may be connected to the UE 156A by means of a Uu interface. The NG, Xn, and Uu interfaces are associated with a protocol stack. The protocol stacks associated with the interfaces may be used by the network elements in FIG. 1B to exchange data and signaling messages and may include two planes: a user plane and a control plane. The user plane may handle data of interest to a user. The control plane may handle signaling messages of interest to the network elements.

The gNBs 160 and/or the ng-eNBs 162 may be connected to one or more AMF/UPF functions of the 5G-CN 152, such as the AMF/UPF 158, by means of one or more NG interfaces. For example, the gNB 160A may be connected to the UPF 158B of the AMF/UPF 158 by means of an NG-User plane (NG-U) interface. The NG-U interface may provide delivery (e.g., non-guaranteed delivery) of user plane PDUs between the gNB 160A and the UPF 158B. The gNB 160A may be connected to the AMF 158A by means of an NG-Control plane (NG-C) interface. The NG-C interface may provide, for example, NG interface management, UE context management, UE mobility management, transport of NAS messages, paging, PDU session management, and configuration transfer and/or warning message transmission.

The gNBs 160 may provide NR user plane and control plane protocol terminations towards the UEs 156 over the Uu interface. For example, the gNB 160A may provide NR user plane and control plane protocol terminations toward the UE 156A over a Uu interface associated with a first protocol stack. The ng-eNBs 162 may provide Evolved UMTS Terrestrial Radio Access (E-UTRA) user plane and control plane protocol terminations towards the UEs 156 over a Uu interface, where E-UTRA refers to the 3GPP 4G radio-access technology. For example, the ng-eNB 162B may provide E-UTRA user plane and control plane protocol terminations towards the UE 156B over a Uu interface associated with a second protocol stack.

The 5G-CN 152 was described as being configured to handle NR and 4G radio accesses. It will be appreciated by one of ordinary skill in the art that it may be possible for NR to connect to a 4G core network in a mode known as "non-standalone operation." In non-standalone operation, a 4G core network is used to provide (or at least support) control-

7

plane functionality (e.g., initial access, mobility, and paging). Although only one AMF/UPF 158 is shown in FIG. 1B, one gNB or ng-eNB may be connected to multiple AMF/UPF nodes to provide redundancy and/or to load share across the multiple AMF/UPF nodes.

As discussed, an interface (e.g., Uu, Xn, and NG interfaces) between the network elements in FIG. 1B may be associated with a protocol stack that the network elements use to exchange data and signaling messages. A protocol stack may include two planes: a user plane and a control plane. The user plane may handle data of interest to a user, and the control plane may handle signaling messages of interest to the network elements.

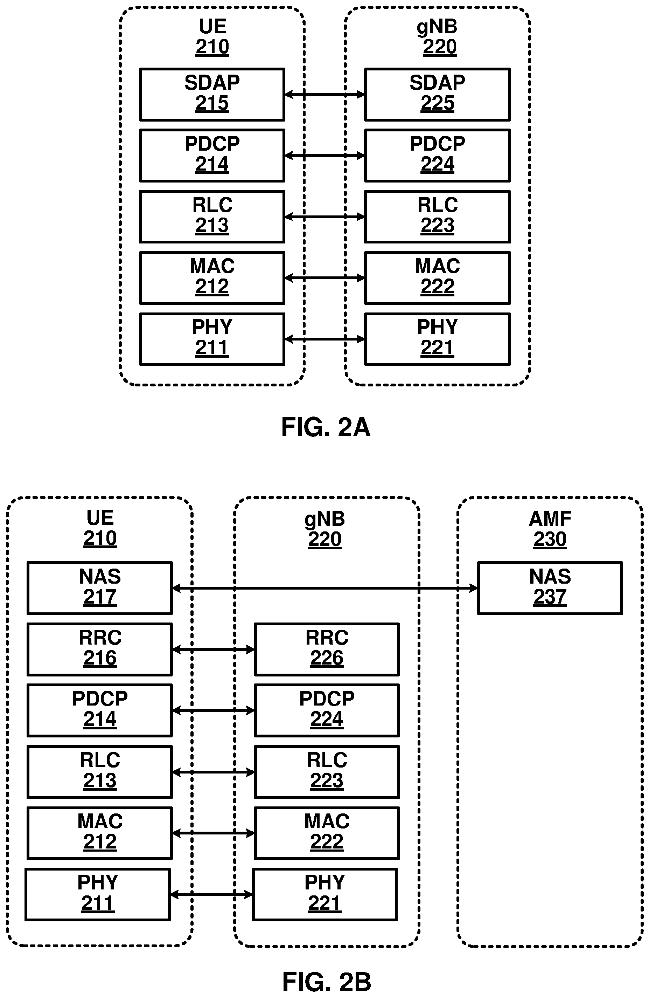

FIG. 2A and FIG. 2B respectively illustrate examples of NR user plane and NR control plane protocol stacks for the Uu interface that lies between a UE 210 and a gNB 220. The protocol stacks illustrated in FIG. 2A and FIG. 2B may be the same or similar to those used for the Uu interface between, for example, the UE 156A and the gNB 160A shown in FIG. 1B.

FIG. 2A illustrates a NR user plane protocol stack comprising five layers implemented in the UE 210 and the gNB 220. At the bottom of the protocol stack, physical layers (PHYs) 211 and 221 may provide transport services to the higher layers of the protocol stack and may correspond to layer 1 of the Open Systems Interconnection (OSI) model. The next four protocols above PHYs 211 and 221 comprise media access control layers (MACs) 212 and 222, radio link control layers (RLCs) 213 and 223, packet data convergence protocol layers (PDCPs) 214 and 224, and service data application protocol layers (SDAPs) 215 and 225. Together, these four protocols may make up layer 2, or the data link layer, of the OSI model.

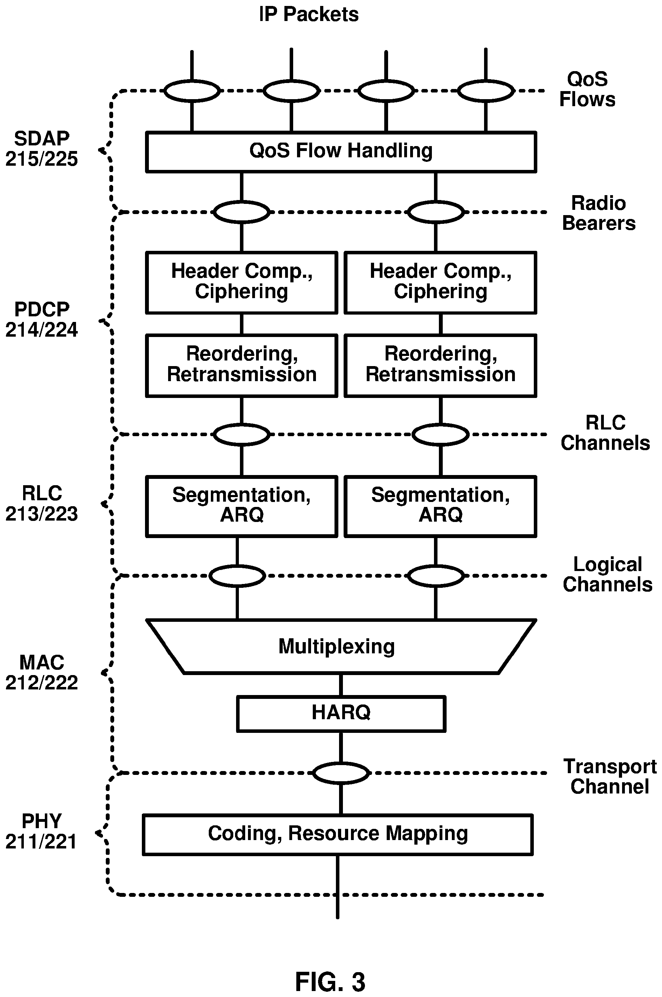

FIG. 3 illustrates an example of services provided between protocol layers of the NR user plane protocol stack. Starting from the top of FIG. 2A and FIG. 3, the SDAPs 215 and 225 may perform QoS flow handling. The UE 210 may receive services through a PDU session, which may be a logical connection between the UE 210 and a DN. The PDU session may have one or more QoS flows. A UPF of a CN (e.g., the UPF 158B) may map IP packets to the one or more QoS flows of the PDU session based on QoS requirements (e.g., in terms of delay, data rate, and/or error rate). The SDAPs 215 and 225 may perform mapping/de-mapping between the one or more QoS flows and one or more data radio bearers. The mapping/de-mapping between the QoS flows and the data radio bearers may be determined by the SDAP 225 at the gNB 220. The SDAP 215 at the UE 210 may be informed of the mapping between the QoS flows and the data radio bearers through reflective mapping or control signaling received from the gNB 220. For reflective mapping, the SDAP 225 at the gNB 220 may mark the downlink packets with a QoS flow indicator (QFI), which may be observed by the SDAP 215 at the UE 210 to determine the mapping/de-mapping between the QoS flows and the data radio bearers.

The PDCPs 214 and 224 may perform header compression/decompression to reduce the amount of data that needs to be transmitted over the air interface, ciphering/deciphering to prevent unauthorized decoding of data transmitted over the air interface, and integrity protection (to ensure control messages originate from intended sources. The PDCPs 214 and 224 may perform retransmissions of undelivered packets, in-sequence delivery and reordering of packets, and removal of packets received in duplicate due to, for example, an intra-gNB handover. The PDCPs 214 and 224 may perform packet duplication to improve the likelihood of the packet being received and, at the receiver, remove any duplicate packets. Packet duplication may be useful for services that require high reliability.

Although not shown in FIG. 3, PDCPs 214 and 224 may perform mapping/de-mapping between a split radio bearer and RLC channels in a dual connectivity scenario. Dual connectivity is a technique that allows a UE to connect to two cells or, more generally, two cell groups: a master cell group (MCG) and a secondary cell group (SCG). A split bearer is when a single radio bearer, such as one of the radio bearers provided by the PDCPs 214 and 224 as a service to the SDAPs 215 and 225, is handled by cell groups in dual connectivity. The PDCPs 214 and 224 may map/de-map the split radio bearer between RLC channels belonging to cell groups.

The RLCs 213 and 223 may perform segmentation, retransmission through Automatic Repeat Request (ARQ), and removal of duplicate data units received from MACs 212 and 222, respectively. The RLCs 213 and 223 may support three transmission modes: transparent mode (TM); unacknowledged mode (UM); and acknowledged mode (AM). Based on the transmission mode an RLC is operating, the RLC may perform one or more of the noted functions. The RLC configuration may be per logical channel with no dependency on numerologies and/or Transmission Time Interval (TTI) durations. As shown in FIG. 3, the RLCs 213 and 223 may provide RLC channels as a service to PDCPs 214 and 224, respectively.

The MACs 212 and 222 may perform multiplexing/demultiplexing of logical channels and/or mapping between logical channels and transport channels. The multiplexing/demultiplexing may include multiplexing/demultiplexing of data units, belonging to the one or more logical channels, into/from Transport Blocks (TBs) delivered to/from the PHYs 211 and 221. The MAC 222 may be configured to perform scheduling, scheduling information reporting, and priority handling between UEs by means of dynamic scheduling. Scheduling may be performed in the gNB 220 (at the MAC 222) for downlink and uplink. The MACs 212 and 222 may be configured to perform error correction through Hybrid Automatic Repeat Request (HARQ) (e.g., one HARQ entity per carrier in case of Carrier Aggregation (CA)), priority handling between logical channels of the UE 210 by means of logical channel prioritization, and/or padding. The MACs 212 and 222 may support one or more numerologies and/or transmission timings. In an example, mapping restrictions in a logical channel prioritization may control which numerology and/or transmission timing a logical channel may use. As shown in FIG. 3, the MACs 212 and 222 may provide logical channels as a service to the RLCs 213 and 223.

The PHYs 211 and 221 may perform mapping of transport channels to physical channels and digital and analog signal processing functions for sending and receiving information over the air interface. These digital and analog signal processing functions may include, for example, coding/decoding and modulation/demodulation. The PHYs 211 and 221 may perform multi-antenna mapping. As shown in FIG. 3, the PHYs 211 and 221 may provide one or more transport channels as a service to the MACs 212 and 222.

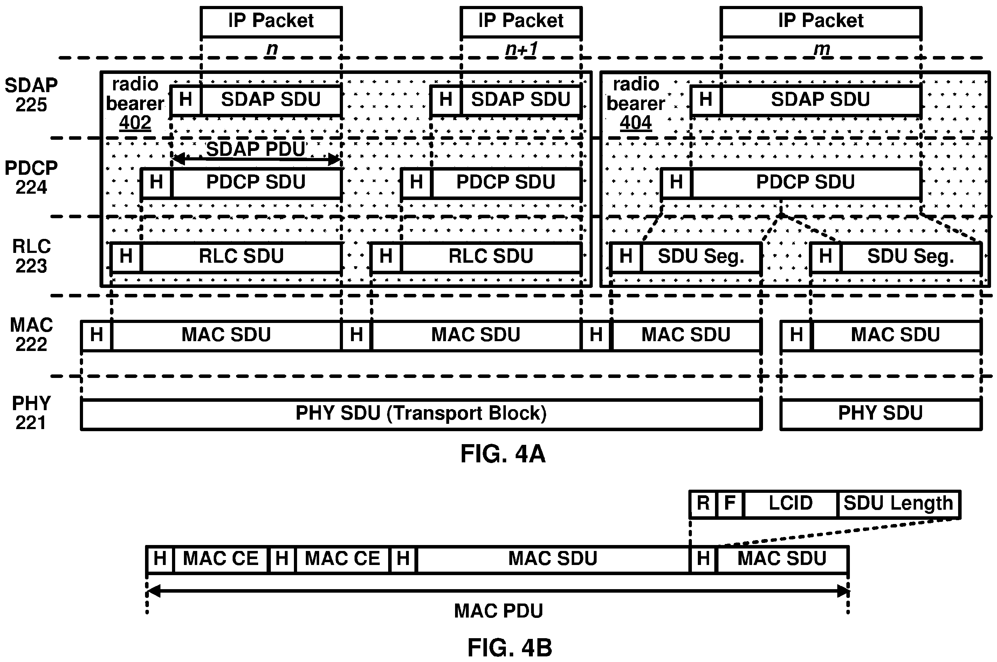

FIG. 4A illustrates an example downlink data flow through the NR user plane protocol stack. FIG. 4A illustrates a downlink data flow of three IP packets ($n$, $n+1$, and $m$) through the NR user plane protocol stack to generate two TBs at the gNB 220. An uplink data flow through the NR user plane protocol stack may be similar to the downlink data flow depicted in FIG. 4A.

The downlink data flow of FIG. 4A begins when SDAP 225 receives the three IP packets from one or more QoS flows and maps the three packets to radio bearers. In FIG. 4A, the SDAP 225 maps IP packets n and $n+1$ to a first radio bearer 402 and maps IP packet m to a second radio bearer 404. An SDAP header (labeled with an "H" in FIG. 4A) is added to an IP packet. The data unit from/to a higher protocol layer is referred to as a service data unit (SDU) of the lower protocol layer and the data unit to/from a lower protocol layer is referred to as a protocol data unit (PDU) of the higher protocol layer. As shown in FIG. 4A, the data unit from the SDAP 225 is an SDU of lower protocol layer PDCP 224 and is a PDU of the SDAP 225.

The remaining protocol layers in FIG. 4A may perform their associated functionality (e.g., with respect to FIG. 3), add corresponding headers, and forward their respective outputs to the next lower layer. For example, the PDCP 224 may perform IP-header compression and ciphering and forward its output to the RLC 223. The RLC 223 may optionally perform segmentation (e.g., as shown for IP packet m in FIG. 4A) and forward its output to the MAC 222. The MAC 222 may multiplex a number of RLC PDUs and may attach a MAC subheader to an RLC PDU to form a transport block. In NR, the MAC subheaders may be distributed across the MAC PDU, as illustrated in FIG. 4A. In LTE, the MAC subheaders may be entirely located at the beginning of the MAC PDU. The NR MAC PDU structure may reduce processing time and associated latency because the MAC PDU subheaders may be computed before the full MAC PDU is assembled.

FIG. 4B illustrates an example format of a MAC subheader in a MAC PDU. The MAC subheader includes: an SDU length field for indicating the length (e.g., in bytes) of the MAC SDU to which the MAC subheader corresponds; a logical channel identifier (LCID) field for identifying the logical channel from which the MAC SDU originated to aid in the demultiplexing process; a flag (F) for indicating the size of the SDU length field; and a reserved bit (R) field for future use.

FIG. 4B further illustrates MAC control elements (CEs) inserted into the MAC PDU by a MAC, such as MAC 223 or MAC 222. For example, FIG. 4B illustrates two MAC CEs inserted into the MAC PDU. MAC CEs may be inserted at the beginning of a MAC PDU for downlink transmissions (as shown in FIG. 4B) and at the end of a MAC PDU for uplink transmissions. MAC CEs may be used for in-band control signaling. Example MAC CEs include: scheduling-related MAC CEs, such as buffer status reports and power headroom reports; activation/deactivation MAC CEs, such as those for activation/deactivation of PDCP duplication detection, channel state information (CSI) reporting, sounding reference signal (SRS) transmission, and prior configured components; discontinuous reception (DRX) related MAC CEs; timing advance MAC CEs; and random access related MAC CEs. A MAC CE may be preceded by a MAC subheader with a similar format as described for MAC SDUs and may be identified with a reserved value in the LCID field that indicates the type of control information included in the MAC CE.

Before describing the NR control plane protocol stack, logical channels, transport channels, and physical channels are first described as well as a mapping between the channel types. One or more of the channels may be used to carry out functions associated with the NR control plane protocol stack described later below.

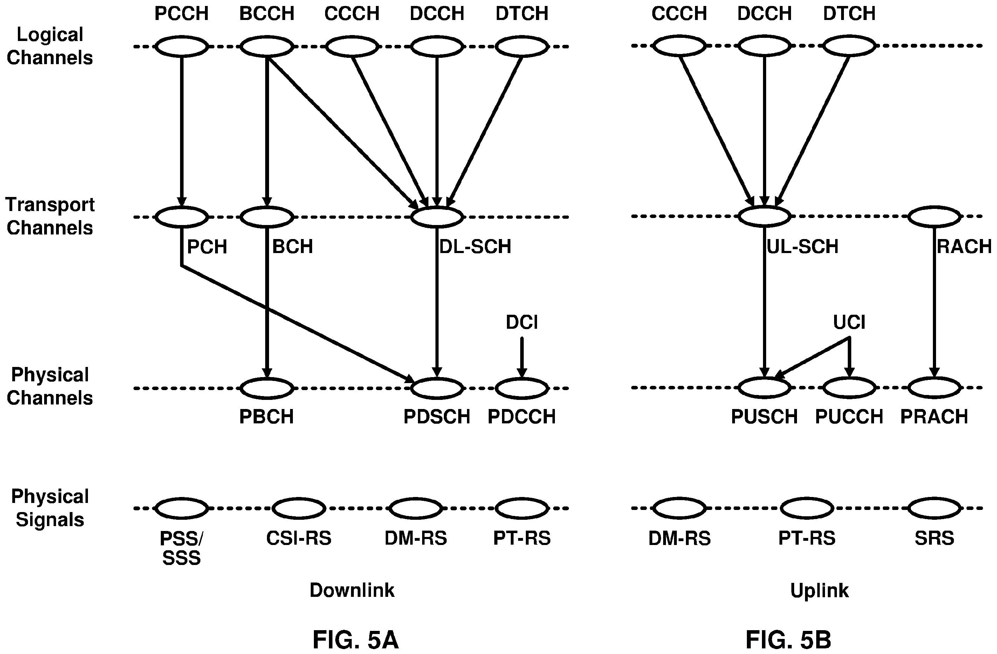

FIG. 5A and FIG. 5B illustrate, for downlink and uplink respectively, a mapping between logical channels, transport channels, and physical channels. Information is passed through channels between the RLC, the MAC, and the PHY of the NR protocol stack. A logical channel may be used between the RLC and the MAC and may be classified as a control channel that carries control and configuration information in the NR control plane or as a traffic channel that carries data in the NR user plane. A logical channel may be classified as a dedicated logical channel that is dedicated to a specific UE or as a common logical channel that may be used by more than one UE. A logical channel may also be defined by the type of information it carries. The set of logical channels defined by NR include, for example:

- a paging control channel (PCCH) for carrying paging messages used to page a UE whose location is not known to the network on a cell level;
- a broadcast control channel (BCCH) for carrying system information messages in the form of a master information block (MIB) and several system information blocks (SIBs), wherein the system information messages may be used by the UEs to obtain information about how a cell is configured and how to operate within the cell;
- a common control channel (CCCH) for carrying control messages together with random access;
- a dedicated control channel (DCCH) for carrying control messages to/from a specific the UE to configure the UE; and

- a dedicated traffic channel (DTCH) for carrying user data to/from a specific the UE.

Transport channels are used between the MAC and PHY layers and may be defined by how the information they carry is transmitted over the air interface. The set of transport channels defined by NR include, for example:

- a paging channel (PCH) for carrying paging messages that originated from the PCCH;
- a broadcast channel (BCH) for carrying the MIB from the BCCH;
- a downlink shared channel (DL-SCH) for carrying downlink data and signaling messages, including the SIBs from the BCCH;
- an uplink shared channel (UL-SCH) for carrying uplink data and signaling messages; and
- a random access channel (RACH) for allowing a UE to contact the network without any prior scheduling.

The PHY may use physical channels to pass information between processing levels of the PHY. A physical channel may have an associated set of time-frequency resources for carrying the information of one or more transport channels. The PHY may generate control information to support the low-level operation of the PHY and provide the control information to the lower levels of the PHY via physical control channels, known as L1/L2 control channels. The set of physical channels and physical control channels defined by NR include, for example:

- a physical broadcast channel (PBCH) for carrying the MIB from the BCH;
- a physical downlink shared channel (PDSCH) for carrying downlink data and signaling messages from the DL-SCH, as well as paging messages from the PCH;
- a physical downlink control channel (PDCCH) for carrying downlink control information (DCI), which may include downlink scheduling commands, uplink scheduling grants, and uplink power control commands;
- a physical uplink shared channel (PUSCH) for carrying uplink data and signaling messages from the UL-SCH and in some instances uplink control information (UCI) as described below;
- a physical uplink control channel (PUCCH) for carrying UCI, which may include HARQ acknowledgments, channel quality indicators (CQI), pre-coding matrix indicators (PMI), rank indicators (RI), and scheduling requests (SR); and
- a physical random access channel (PRACH) for random access.

Similar to the physical control channels, the physical layer generates physical signals to support the low-level operation of the physical layer. As shown in FIG. 5A and FIG. 5B, the physical layer signals defined by NR include: primary synchronization signals (PSS), secondary synchronization signals (SSS), channel state information reference signals (CSI-RS), demodulation reference signals (DMRS), sounding reference signals (SRS), and phase-tracking reference signals (PT-RS). These physical layer signals will be described in greater detail below.

FIG. 2B illustrates an example NR control plane protocol stack. As shown in FIG. 2B, the NR control plane protocol stack may use the same/similar first four protocol layers as the example NR user plane protocol stack. These four protocol layers include the PHYs 211 and 221, the MACs 212 and 222, the RLCs 213 and 223, and the PDCPs 214 and 224. Instead of having the SDAPs 215 and 225 at the top of the stack as in the NR user plane protocol stack, the NR control plane stack has radio resource controls (RRCs) 216 and 226 and NAS protocols 217 and 237 at the top of the NR control plane protocol stack.

The NAS protocols 217 and 237 may provide control plane functionality between the UE 210 and the AMF 230 (e.g., the AMF 158A) or, more generally, between the UE 210 and the CN. The NAS protocols 217 and 237 may provide control plane functionality between the UE 210 and the AMF 230 via signaling messages, referred to as NAS messages. There is no direct path between the UE 210 and the AMF 230 through which the NAS messages can be transported. The NAS messages may be transported using the AS of the Uu and NG interfaces. NAS protocols 217 and 237 may provide control plane functionality such as authentication, security, connection setup, mobility management, and session management.

The RRCs 216 and 226 may provide control plane functionality between the UE 210 and the gNB 220 or, more generally, between the UE 210 and the RAN. The RRCs 216 and 226 may provide control plane functionality between the UE 210 and the gNB 220 via signaling messages, referred to as RRC messages. RRC messages may be transmitted between the UE 210 and the RAN using signaling radio bearers and the same/similar PDCP, RLC, MAC, and PHY protocol layers. The MAC may multiplex control-plane and user-plane data into the same transport block (TB). The RRCs 216 and 226 may provide control plane functionality such as: broadcast of system information related to AS and NAS; paging initiated by the CN or the RAN; establishment, maintenance and release of an RRC connection between the UE 210 and the RAN; security functions including key management; establishment, configuration, maintenance and release of signaling radio bearers and data radio bearers; mobility functions; QoS management functions; the UE measurement reporting and control of the reporting; detection of and recovery from radio link failure (RLF); and/or NAS message transfer. As part of establishing an RRC connection, RRCs 216 and 226 may establish an RRC context, which may involve configuring parameters for communication between the UE 210 and the RAN.

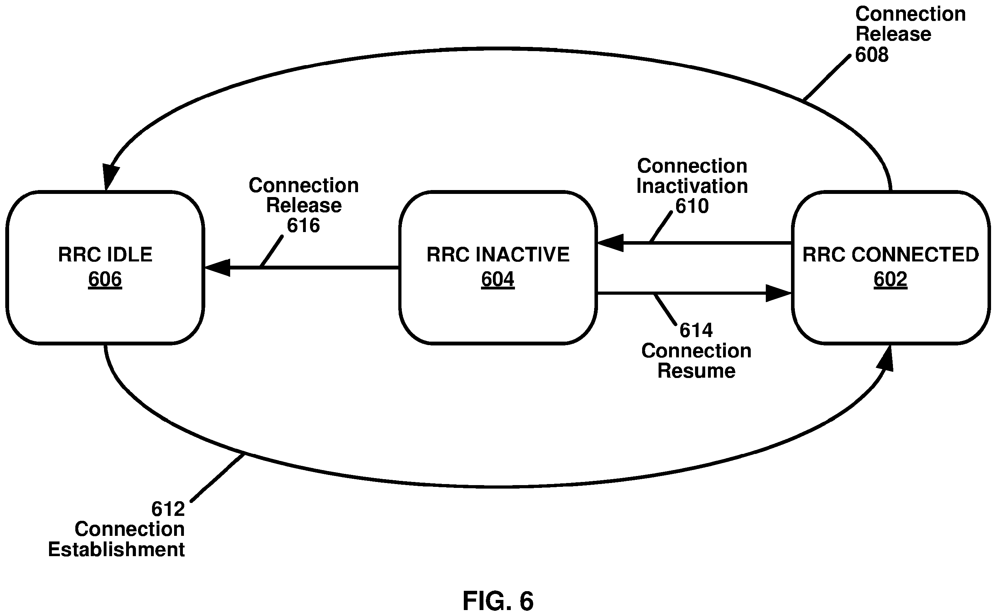

FIG. 6 is an example diagram showing RRC state transitions of a UE. The UE may be the same or similar to the wireless device 106 depicted in FIG. 1A, the UE 210 depicted in FIG. 2A and FIG. 2B, or any other wireless device described in the present disclosure. As illustrated in FIG. 6, a UE may be in at least one of three RRC states: RRC connected 602 (e.g., RRC_CONNECTED), RRC idle 604 (e.g., RRC_IDLE), and RRC inactive 606 (e.g., RRC_INACTIVE).

In RRC connected 602, the UE has an established RRC context and may have at least one RRC connection with a base station. The base station may be similar to one of the one or more base stations included in the RAN 104 depicted in FIG. 1A, one of the gNBs 160 or ng-eNBs 162 depicted in FIG. 1B, the gNB 220 depicted in FIG. 2A and FIG. 2B, or any other base station described in the present disclosure. The base station with which the UE is connected may have the RRC context for the UE. The RRC context, referred to as the UE context, may comprise parameters for communication between the UE and the base station. These parameters may include, for example: one or more AS contexts; one or more radio link configuration parameters; bearer configuration information (e.g., relating to a data radio bearer, signaling radio bearer, logical channel, QoS flow, and/or PDU session); security information; and/or PHY, MAC, RLC, PDCP, and/or SDAP layer configuration information. While in RRC connected 602, mobility of the UE may be managed by the RAN (e.g., the RAN 104 or the NG-RAN 154). The UE may measure the signal levels (e.g., reference signal levels) from a serving cell and neighboring cells and report these measurements to the base station currently serving the UE. The UE's serving base station may request a handover to a cell of one of the neighboring base stations based on the reported measurements. The RRC state may transition from RRC connected 602 to RRC idle 604 through a connection release procedure 608 or to RRC inactive 606 through a connection inactivation procedure 610.

In RRC idle 604, an RRC context may not be established for the UE. In RRC idle 604, the UE may not have an RRC connection with the base station. While in RRC idle 604, the UE may be in a sleep state for the majority of the time (e.g., to conserve battery power). The UE may wake up periodically (e.g., once in every discontinuous reception cycle) to monitor for paging messages from the RAN. Mobility of the UE may be managed by the UE through a procedure known as cell reselection. The RRC state may transition from RRC idle 604 to RRC connected 602 through a connection establishment procedure 612, which may involve a random access procedure as discussed in greater detail below.

In RRC inactive 606, the RRC context previously established is maintained in the UE and the base station. This allows for a fast transition to RRC connected 602 with reduced signaling overhead as compared to the transition from RRC idle 604 to RRC connected 602. While in RRC inactive 606, the UE may be in a sleep state and mobility of the UE may be managed by the UE through cell reselection. The RRC state may transition from RRC inactive 606 to RRC connected 602 through a connection resume procedure 614 or to RRC idle 604 though a connection release procedure 616 that may be the same as or similar to connection release procedure 608.

An RRC state may be associated with a mobility management mechanism. In RRC idle 604 and RRC inactive 606, mobility is managed by the UE through cell reselection. The purpose of mobility management in RRC idle 604 and RRC inactive 606 is to allow the network to be able to notify the UE of an event via a paging message without having to broadcast the paging message over the entire mobile communications network. The mobility management mechanism used in RRC idle 604 and RRC inactive 606 may allow the network to track the UE on a cell-group level so that the paging message may be broadcast over the cells of the cell group that the UE currently resides within instead of the entire mobile communication network. The mobility management mechanisms for RRC idle 604 and RRC inactive 606 track the UE on a cell-group level. They may do so using different granularities of grouping. For example, there may be three levels of cell-grouping granularity: individual cells; cells within a RAN area identified by a RAN area identifier (RAI); and cells within a group of RAN areas, referred to as a tracking area and identified by a tracking area identifier (TAI).

Tracking areas may be used to track the UE at the CN level. The CN (e.g., the CN 102 or the 5G-CN 152) may provide the UE with a list of TAIs associated with a UE registration area. If the UE moves, through cell reselection, to a cell associated with a TAI not included in the list of TAIs associated with the UE registration area, the UE may perform a registration update with the CN to allow the CN to update the UE's location and provide the UE with a new the UE registration area.

RAN areas may be used to track the UE at the RAN level. For a UE in RRC inactive 606 state, the UE may be assigned a RAN notification area. A RAN notification area may comprise one or more cell identities, a list of RAIs, or a list of TAIs. In an example, a base station may belong to one or more RAN notification areas. In an example, a cell may belong to one or more RAN notification areas. If the UE moves, through cell reselection, to a cell not included in the RAN notification area assigned to the UE, the UE may perform a notification area update with the RAN to update the UE's RAN notification area.

A base station storing an RRC context for a UE or a last serving base station of the UE may be referred to as an anchor base station. An anchor base station may maintain an RRC context for the UE at least during a period of time that the UE stays in a RAN notification area of the anchor base station and/or during a period of time that the UE stays in RRC inactive 606.

A gNB, such as gNBs 160 in FIG. 1B, may be split in two parts: a central unit (gNB-CU), and one or more distributed units (gNB-DU). A gNB-CU may be coupled to one or more gNB-DUs using an F1 interface. The gNB-CU may comprise the RRC, the PDCP, and the SDAP. A gNB-DU may comprise the RLC, the MAC, and the PHY.

In NR, the physical signals and physical channels (discussed with respect to FIG. 5A and FIG. 5B) may be mapped onto orthogonal frequency divisional multiplexing (OFDM) symbols. OFDM is a multicarrier communication scheme that transmits data over F orthogonal subcarriers (or tones). Before transmission, the data may be mapped to a series of complex symbols (e.g., M-quadrature amplitude modulation (M-QAM) or M-phase shift keying (M-PSK) symbols), referred to as source symbols, and divided into F parallel symbol streams. The F parallel symbol streams may be treated as though they are in the frequency domain and used as inputs to an Inverse Fast Fourier Transform (IFFT) block that transforms them into the time domain. The IFFT block may take in F source symbols at a time, one from each of the F parallel symbol streams, and use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. After some processing (e.g., addition of a cyclic prefix) and up-conversion, an OFDM symbol provided by the IFFT block may be transmitted over the air interface on a carrier frequency. The F parallel symbol streams may be mixed using an FFT block before being processed by the IFFT block. This operation produces Discrete Fourier Transform (DFT)-precoded OFDM symbols and may be used by UEs in the uplink to reduce the peak to average power ratio (PAPR). Inverse processing may be performed on the OFDM symbol at a receiver using an FFT block to recover the data mapped to the source symbols.

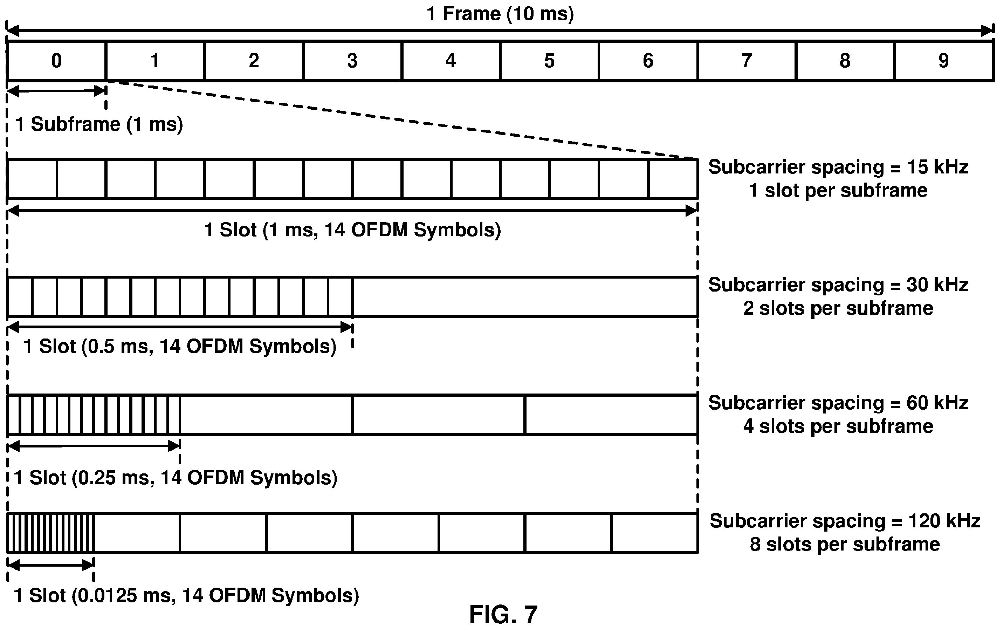

FIG. 7 illustrates an example configuration of an NR frame into which OFDM symbols are grouped. An NR frame may be identified by a system frame number (SFN). The SFN may repeat with a period of 1024 frames. As illustrated, one NR frame may be 10 milliseconds (ms) in duration and may include 10 subframes that are 1 ms in duration. A subframe may be divided into slots that include, for example, 14 OFDM symbols per slot.

The duration of a slot may depend on the numerology used for the OFDM symbols of the slot. In NR, a flexible numerology is supported to accommodate different cell deployments (e.g., cells with carrier frequencies below 1 GHz up to cells with carrier frequencies in the mm-wave range). A numerology may be defined in terms of subcarrier spacing and cyclic prefix duration. For a numerology in NR, subcarrier spacings may be scaled up by powers of two from a baseline subcarrier spacing of 15 kHz, and cyclic prefix durations may be scaled down by powers of two from a baseline cyclic prefix duration of 4.7 $\mu$s. For example, NR defines numerologies with the following subcarrier spacing/cyclic prefix duration combinations: 15 kHz/4.7 $\mu$s; 30 kHz/2.3 $\mu$s; 60 kHz/1.2 $\mu$s; 120 kHz/0.59 $\mu$s; and 240 kHz/0.29 $\mu$s.

A slot may have a fixed number of OFDM symbols (e.g., 14 OFDM symbols). A numerology with a higher subcarrier spacing has a shorter slot duration and, correspondingly, more slots per subframe. FIG. 7 illustrates this numerology-dependent slot duration and slots-per-subframe transmission structure (the numerology with a subcarrier spacing of 240 kHz is not shown in FIG. 7 for ease of illustration). A subframe in NR may be used as a numerology-independent time reference, while a slot may be used as the unit upon which uplink and downlink transmissions are scheduled. To support low latency, scheduling in NR may be decoupled from the slot duration and start at any OFDM symbol and last for as many symbols as needed for a transmission. These partial slot transmissions may be referred to as mini-slot or subslot transmissions.

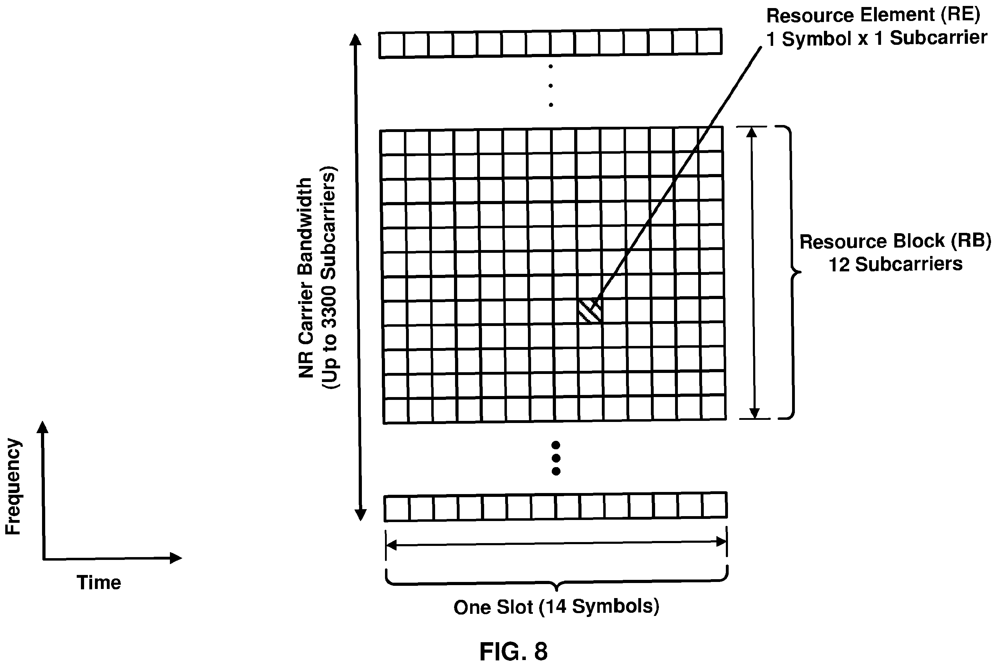

FIG. 8 illustrates an example configuration of a slot in the time and frequency domain for an NR carrier. The slot includes resource elements (REs) and resource blocks (RBs). An RE is the smallest physical resource in NR. An RE spans one OFDM symbol in the time domain by one subcarrier in the frequency domain as shown in FIG. 8. An RB spans twelve consecutive REs in the frequency domain as shown in FIG. 8. An NR carrier may be limited to a width of 275 RBs or 275$\times$12 = 3300 subcarriers. Such a limitation, if used, may limit the NR carrier to 50, 100, 200, and 400 MHz for subcarrier spacings of 15, 30, 60, and 120 kHz, respectively, where the 400 MHz bandwidth may be set based on a 400 MHz per carrier bandwidth limit.

FIG. 8 illustrates a single numerology being used across the entire bandwidth of the NR carrier. In other example configurations, multiple numerologies may be supported on the same carrier.

NR may support wide carrier bandwidths (e.g., up to 400 MHz for a subcarrier spacing of 120 kHz). Not all UEs may be able to receive the full carrier bandwidth (e.g., due to hardware limitations). Also, receiving the full carrier bandwidth may be prohibitive in terms of UE power consumption. In an example, to reduce power consumption and/or for other purposes, a UE may adapt the size of the UE's receive bandwidth based on the amount of traffic the UE is scheduled to receive. This is referred to as bandwidth adaptation.

NR defines bandwidth parts (BWPs) to support UEs not capable of receiving the full carrier bandwidth and to support bandwidth adaptation. In an example, a BWP may be defined by a subset of contiguous RBs on a carrier. A UE may be configured (e.g., via RRC layer) with one or more downlink BWPs and one or more uplink BWPs per serving cell (e.g., up to four downlink BWPs and up to four uplink BWPs per serving cell). At a given time, one or more of the configured BWPs for a serving cell may be active. These one or more BWPs may be referred to as active BWPs of the serving cell. When a serving cell is configured with a secondary uplink carrier, the serving cell may have one or more first active BWPs in the uplink carrier and one or more second active BWPs in the secondary uplink carrier.

For unpaired spectra, a downlink BWP from a set of configured downlink BWPs may be linked with an uplink BWP from a set of configured uplink BWPs if a downlink BWP index of the downlink BWP and an uplink BWP index of the uplink BWP are the same. For unpaired spectra, a UE may expect that a center frequency for a downlink BWP is the same as a center frequency for an uplink BWP.

For a downlink BWP in a set of configured downlink BWPs on a primary cell (PCell), a base station may configure a UE with one or more control resource sets (CORESETs) for at least one search space. A search space is a set of locations in the time and frequency domains where the UE may find control information. The search space may be a UE-specific search space or a common search space (potentially usable by a plurality of UEs). For example, a base station may configure a UE with a common search space, on a PCell or on a primary secondary cell (PSCell), in an active downlink BWP.

For an uplink BWP in a set of configured uplink BWPs, a BS may configure a UE with one or more resource sets for one or more PUCCH transmissions. A UE may receive downlink receptions (e.g., PDCCH or PDSCH) in a downlink BWP according to a configured numerology (e.g., subcarrier spacing and cyclic prefix duration) for the downlink BWP. The UE may transmit uplink transmissions (e.g., PUCCH or PUSCH) in an uplink BWP according to a configured numerology (e.g., subcarrier spacing and cyclic prefix length for the uplink BWP).

One or more BWP indicator fields may be provided in Downlink Control Information (DCI). A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a UE with a default downlink BWP within a set of configured downlink BWPs associated with a PCell. If the base station does not provide the default downlink BWP to the UE, the default downlink BWP may be an initial active downlink BWP. The UE may determine which BWP is the initial active downlink BWP based on a CORESET configuration obtained using the PBCH.

A base station may configure a UE with a BWP inactivity timer value for a PCell. The UE may start or restart a BWP inactivity timer at any appropriate time. For example, the UE may start or restart the BWP inactivity timer (a) when the UE detects a DCI indicating an active downlink BWP other than a default downlink BWP for a paired spectra operation; or (b) when a UE detects a DCI indicating an active downlink BWP or active uplink BWP other than a default downlink BWP or uplink BWP for an unpaired spectra operation. If the UE does not detect DCI during an interval of time (e.g., 1 ms or 0.5 ms), the UE may run the BWP inactivity timer toward expiration (for example, increment from zero to the BWP inactivity timer value, or decrement from the BWP inactivity timer value to zero). When the BWP inactivity timer expires, the UE may switch from the active downlink BWP to the default downlink BWP.

In an example, a base station may semi-statically configure a UE with one or more BWPs. A UE may switch an active BWP from a first BWP to a second BWP in response to receiving a DCI indicating the second BWP as an active BWP and/or in response to an expiry of the BWP inactivity timer (e.g., if the second BWP is the default BWP).

Downlink and uplink BWP switching (where BWP switching refers to switching from a currently active BWP to a not currently active BWP) may be performed independently in paired spectra. In unpaired spectra, downlink and uplink BWP switching may be performed simultaneously. Switching between configured BWPs may occur based on RRC signaling, DCI, expiration of a BWP inactivity timer, and/or an initiation of random access.

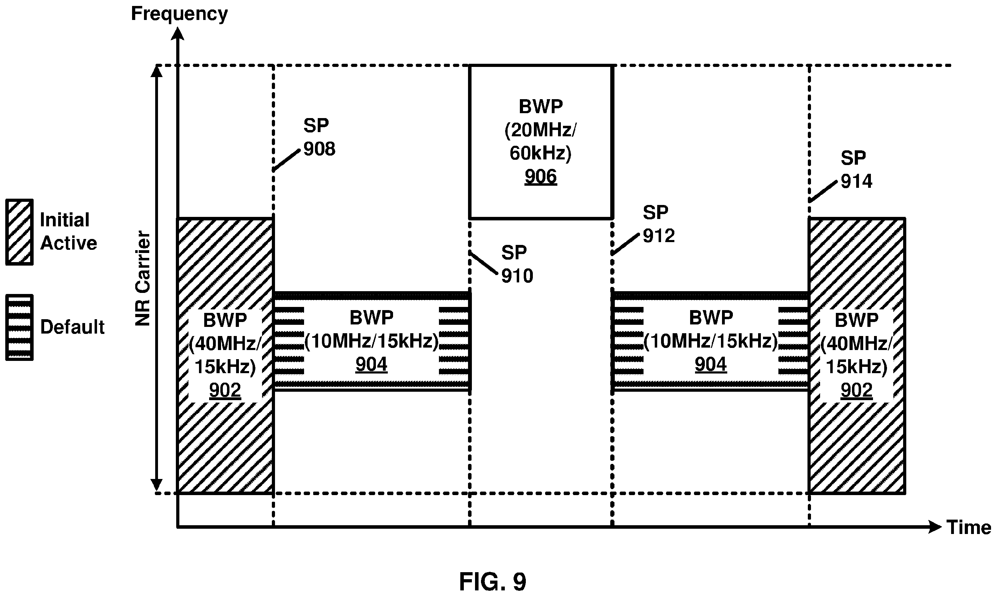

FIG. 9 illustrates an example of bandwidth adaptation using three configured BWPs for an NR carrier. A UE configured with the three BWPs may switch from one BWP to another BWP at a switching point. In the example illustrated in FIG. 9, the BWPs include: a BWP 902 with a bandwidth of 40 MHz and a subcarrier spacing of 15 kHz; a BWP 904 with a bandwidth of 10 MHz and a subcarrier spacing of 15 kHz; and a BWP 906 with a bandwidth of 20 MHz and a subcarrier spacing of 60 kHz. The BWP 902 may be an initial active BWP, and the BWP 904 may be a default BWP. The UE may switch between BWPs at switching points. In the example of FIG. 9, the UE may switch from the BWP 902 to the BWP 904 at a switching point 908. The switching at the switching point 908 may occur for any suitable reason, for example, in response to an expiry of a BWP inactivity timer (indicating switching to the default BWP) and/or in response to receiving a DCI indicating BWP 904 as the active BWP. The UE may switch at a switching point 910 from active BWP 904 to BWP 906 in response receiving a DCI indicating BWP 906 as the active BWP. The UE may switch at a switching point 912 from active BWP 906 to BWP 904 in response to an expiry of a BWP inactivity timer and/or in response receiving a DCI indicating BWP 904 as the active BWP. The UE may switch at a switching point 914 from active BWP 904 to BWP 902 in response receiving a DCI indicating BWP 902 as the active BWP.

If a UE is configured for a secondary cell with a default downlink BWP in a set of configured downlink BWPs and a timer value, UE procedures for switching BWPs on a secondary cell may be the same/similar as those on a primary cell. For example, the UE may use the timer value and the default downlink BWP for the secondary cell in the same/similar manner as the UE would use these values for a primary cell.

To provide for greater data rates, two or more carriers can be aggregated and simultaneously transmitted to/from the same UE using carrier aggregation (CA). The aggregated carriers in CA may be referred to as component carriers (CCs). When CA is used, there are a number of serving cells for the UE, one for a CC. The CCs may have three configurations in the frequency domain.

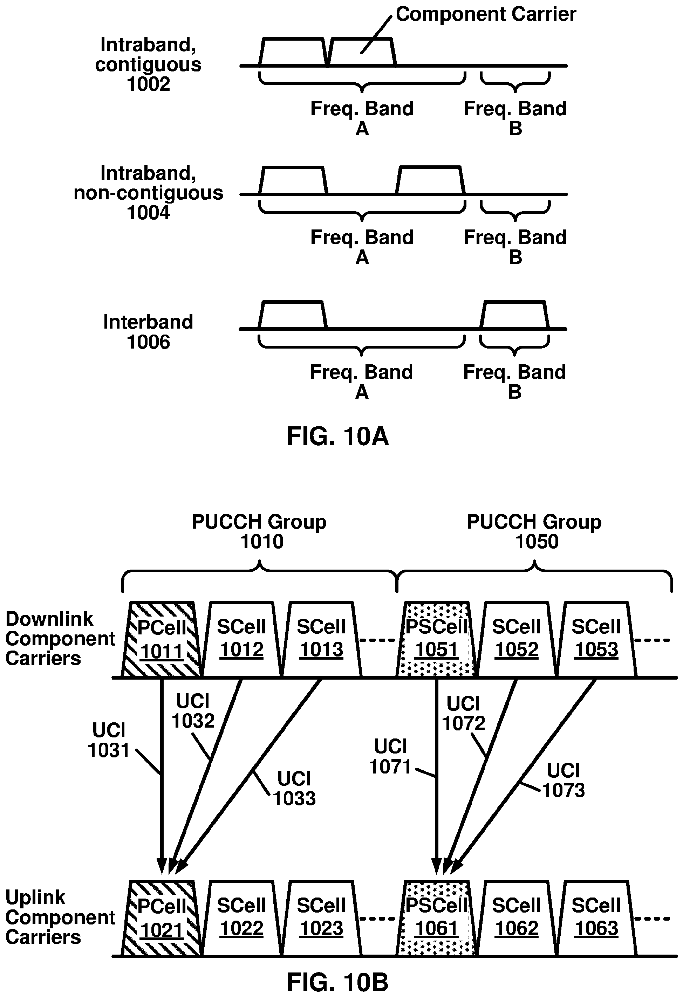

FIG. 10A illustrates the three CA configurations with two CCs. In the intraband, contiguous configuration 1002, the two CCs are aggregated in the same frequency band (frequency band A) and are located directly adjacent to each other within the frequency band. In the intraband, non-contiguous configuration 1004, the two CCs are aggregated in the same frequency band (frequency band A) and are separated in the frequency band by a gap. In the interband configuration 1006, the two CCs are located in frequency bands (frequency band A and frequency band B).

In an example, up to 32 CCs may be aggregated. The aggregated CCs may have the same or different bandwidths, subcarrier spacing, and/or duplexing schemes (TDD or FDD). A serving cell for a UE using CA may have a downlink CC. For FDD, one or more uplink CCs may be optionally configured for a serving cell. The ability to aggregate more downlink carriers than uplink carriers may be useful, for example, when the UE has more data traffic in the downlink than in the uplink.

When CA is used, one of the aggregated cells for a UE may be referred to as a primary cell (PCell). The PCell may be the serving cell that the UE initially connects to at RRC connection establishment, reestablishment, and/or handover. The PCell may provide the UE with NAS mobility information and the security input. UEs may have different PCells. In the downlink, the carrier corresponding to the PCell may be referred to as the downlink primary CC (DL PCC). In the uplink, the carrier corresponding to the PCell may be referred to as the uplink primary CC (UL PCC). The other aggregated cells for the UE may be referred to as secondary cells (SCells). In an example, the SCells may be configured after the PCell is configured for the UE. For example, an SCell may be configured through an RRC Connection Reconfiguration procedure. In the downlink, the carrier corresponding to an SCell may be referred to as a downlink secondary CC (DL SCC). In the uplink, the carrier corresponding to the SCell may be referred to as the uplink secondary CC (UL SCC).

Configured SCells for a UE may be activated and deactivated based on, for example, traffic and channel conditions. Deactivation of an SCell may mean that PDCCH and PDSCH reception on the SCell is stopped and PUSCH, SRS, and CQI transmissions on the SCell are stopped. Configured SCells may be activated and deactivated using a MAC CE with respect to FIG. 4B. For example, a MAC CE may use a bitmap (e.g., one bit per SCell) to indicate which SCells (e.g., in a subset of configured SCells) for the UE are activated or deactivated. Configured SCells may be deactivated in response to an expiration of an SCell deactivation timer (e.g., one SCell deactivation timer per SCell).

Downlink control information, such as scheduling assignments and scheduling grants, for a cell may be transmitted on the cell corresponding to the assignments and grants, which is known as self-scheduling. The DCI for the cell may be transmitted on another cell, which is known as cross-carrier scheduling. Uplink control information (e.g., HARQ acknowledgments and channel state feedback, such as CQI, PMI, and/or RI) for aggregated cells may be transmitted on the PUCCH of the PCell. For a larger number of aggregated downlink CCs, the PUCCH of the PCell may become overloaded. Cells may be divided into multiple PUCCH groups.

FIG. 10B illustrates an example of how aggregated cells may be configured into one or more PUCCH groups. A PUCCH group 1010 and a PUCCH group 1050 may include one or more downlink CCs, respectively. In the example of FIG. 10B, the PUCCH group 1010 includes three downlink CCs: a PCell 1011, an SCell 1012, and an SCell 1013. The PUCCH group 1050 includes three downlink CCs in the present example: a PCell 1051, an SCell 1052, and an SCell 1053. One or more uplink CCs may be configured as a PCell 1021, an SCell 1022, and an SCell 1023. One or more other uplink CCs may be configured as a primary Scell (PSCell) 1061, an SCell 1062, and an SCell 1063. Uplink control information (UCI) related to the downlink CCs of the PUCCH group 1010, shown as UCI 1031, UCI 1032, and UCI 1033, may be transmitted in the uplink of the PCell 1021. Uplink control information (UCI) related to the downlink CCs of the PUCCH group 1050, shown as UCI 1071, UCI 1072, and UCI 1073, may be transmitted in the uplink of the PSCell 1061. In an example, if the aggregated cells depicted in FIG. 10B were not divided into the PUCCH group 1010 and the PUCCH group 1050, a single uplink PCell to transmit UCI relating to the downlink CCs, and the PCell may become overloaded. By dividing transmissions of UCI between the PCell 1021 and the PSCell 1061, overloading may be prevented.

A cell, comprising a downlink carrier and optionally an uplink carrier, may be assigned with a physical cell ID and a cell index. The physical cell ID or the cell index may identify a downlink carrier and/or an uplink carrier of the cell, for example, depending on the context in which the physical cell ID is used. A physical cell ID may be determined using a synchronization signal transmitted on a downlink component carrier. A cell index may be determined using RRC messages. In the disclosure, a physical cell ID may be referred to as a carrier ID, and a cell index may be referred to as a carrier index. For example, when the disclosure refers to a first physical cell ID for a first downlink carrier, the disclosure may mean the first physical cell ID is for a cell comprising the first downlink carrier. The same/similar concept may apply to, for example, a carrier activation. When the disclosure indicates that a first carrier is activated, the specification may mean that a cell comprising the first carrier is activated.

In CA, a multi-carrier nature of a PHY may be exposed to a MAC. In an example, a HARQ entity may operate on a serving cell. A transport block may be generated per assignment/grant per serving cell. A transport block and potential HARQ retransmissions of the transport block may be mapped to a serving cell.

In the downlink, a base station may transmit (e.g., unicast, multicast, and/or broadcast) one or more Reference Signals (RSs) to a UE (e.g., PSS, SSS, CSI-RS, DMRS, and/or PT-RS, as shown in FIG. 5A). In the uplink, the UE may transmit one or more RSs to the base station (e.g., DMRS, PT-RS, and/or SRS, as shown in FIG. 5B). The PSS and the SSS may be transmitted by the base station and used by the UE to synchronize the UE to the base station. The PSS and the SSS may be provided in a synchronization signal (SS) / physical broadcast channel (PBCH) block that includes the PSS, the SSS, and the PBCH. The base station may periodically transmit a burst of SS/PBCH blocks.

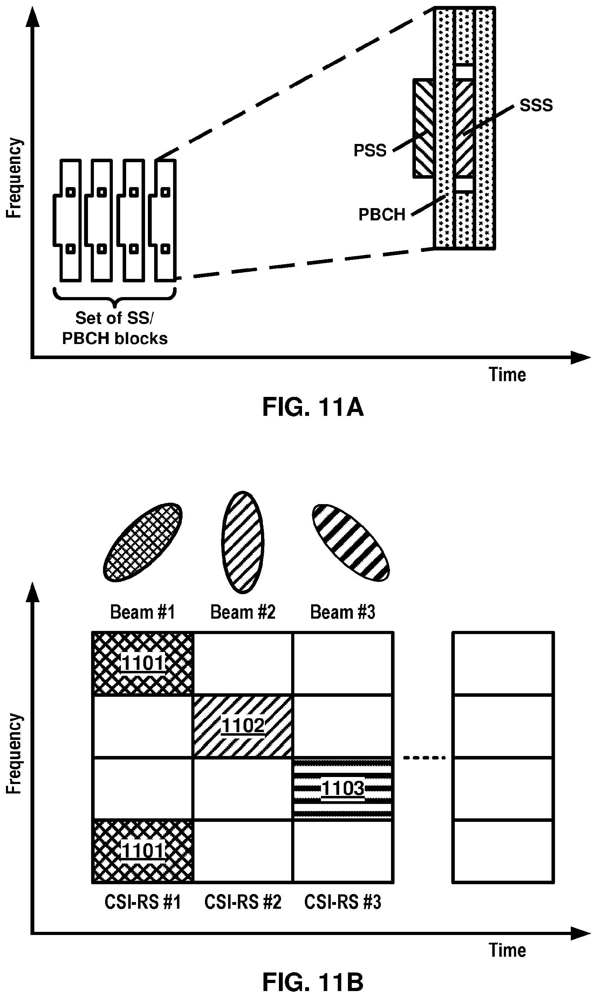

FIG. 11A illustrates an example of an SS/PBCH block's structure and location. A burst of SS/PBCH blocks may include one or more SS/PBCH blocks (e.g., 4 SS/PBCH blocks, as shown in FIG. 11A). Bursts may be transmitted periodically (e.g., every 2 frames or 20 ms). A burst may be restricted to a half-frame (e.g., a first half-frame having a duration of 5 ms). It will be understood that FIG. 11A is an example, and that these parameters (number of SS/PBCH blocks per burst, periodicity of bursts, position of burst within the frame) may be configured based on, for example: a carrier frequency of a cell in which the SS/PBCH block is transmitted; a numerology or subcarrier spacing of the cell; a configuration by the network (e.g., using RRC signaling); or any other suitable factor. In an example, the UE may assume a subcarrier spacing for the SS/PBCH block based on the carrier frequency being monitored, unless the radio network configured the UE to assume a different subcarrier spacing.

The SS/PBCH block may span one or more OFDM symbols in the time domain (e.g., 4 OFDM symbols, as shown in the example of FIG. 11A) and may span one or more subcarriers in the frequency domain (e.g., 240 contiguous subcarriers). The PSS, the SSS, and the PBCH may have a common center frequency. The PSS may be transmitted first and may span, for example, 1 OFDM symbol and 127 subcarriers. The SSS may be transmitted after the PSS (e.g., two symbols later) and may span 1 OFDM symbol and 127 subcarriers. The PBCH may be transmitted after the PSS (e.g., across the next 3 OFDM symbols) and may span 240 subcarriers.

The location of the SS/PBCH block in the time and frequency domains may not be known to the UE (e.g., if the UE is searching for the cell). To find and select the cell, the UE may monitor a carrier for the PSS. For example, the UE may monitor a frequency location within the carrier. If the PSS is not found after a certain duration (e.g., 20 ms), the UE may search for the PSS at a different frequency location within the carrier, as indicated by a synchronization raster. If the PSS is found at a location in the time and frequency domains, the UE may determine, based on a known structure of the SS/PBCH block, the locations of the SSS and the PBCH, respectively. The SS/PBCH block may be a cell-defining SS block (CD-SSB). In an example, a primary cell may be associated with a CD-SSB. The CD-SSB may be located on a synchronization raster. In an example, a cell selection/search and/or reselection may be based on the CD-SSB.

The SS/PBCH block may be used by the UE to determine one or more parameters of the cell. For example, the UE may determine a physical cell identifier (PCI) of the cell based on the sequences of the PSS and the SSS, respectively. The UE may determine a location of a frame boundary of the cell based on the location of the SS/PBCH block. For example, the SS/PBCH block may indicate that it has been transmitted in accordance with a transmission pattern, wherein a SS/PBCH block in the transmission pattern is a known distance from the frame boundary.

The PBCH may use a QPSK modulation and may use forward error correction (FEC). The FEC may use polar coding. One or more symbols spanned by the PBCH may carry one or more DMRSs for demodulation of the PBCH. The PBCH may include an indication of a current system frame number (SFN) of the cell and/or a SS/PBCH block timing index. These parameters may facilitate time synchronization of the UE to the base station. The PBCH may include a master information block (MIB) used to provide the UE with one or more parameters. The MIB may be used by the UE to locate remaining minimum system information (RMSI) associated with the cell. The RMSI may include a System Information Block Type 1 (SIB1). The SIB1 may contain information needed by the UE to access the cell. The UE may use one or more parameters of the MIB to monitor PDCCH, which may be used to schedule PDSCH. The PDSCH may include the SIB1. The SIB1 may be decoded using parameters provided in the MIB. The PBCH may indicate an absence of SIB1. Based on the PBCH indicating the absence of SIB1, the UE may be pointed to a frequency. The UE may search for an SS/PBCH block at the frequency to which the UE is pointed.

The UE may assume that one or more SS/PBCH blocks transmitted with a same SS/PBCH block index are quasi co-located (QCLed) (e.g., having the same/similar Doppler spread, Doppler shift, average gain, average delay, and/or spatial Rx parameters). The UE may not assume QCL for SS/PBCH block transmissions having different SS/PBCH block indices.

SS/PBCH blocks (e.g., those within a half-frame) may be transmitted in spatial directions (e.g., using different beams that span a coverage area of the cell). In an example, a first SS/PBCH block may be transmitted in a first spatial direction using a first beam, and a second SS/PBCH block may be transmitted in a second spatial direction using a second beam.

In an example, within a frequency span of a carrier, a base station may transmit a plurality of SS/PBCH blocks. In an example, a first PCI of a first SS/PBCH block of the plurality of SS/PBCH blocks may be different from a second PCI of a second SS/PBCH block of the plurality of SS/PBCH blocks. The PCIs of SS/PBCH blocks transmitted in different frequency locations may be different or the same.

The CSI-RS may be transmitted by the base station and used by the UE to acquire channel state information (CSI). The base station may configure the UE with one or more CSI-RSs for channel estimation or any other suitable purpose. The base station may configure a UE with one or more of the same/similar CSI-RSs. The UE may measure the one or more CSI-RSs. The UE may estimate a downlink channel state and/or generate a CSI report based on the measuring of the one or more downlink CSI-RSs. The UE may provide the CSI report to the base station. The base station may use feedback provided by the UE (e.g., the estimated downlink channel state) to perform link adaptation.

The base station may semi-statically configure the UE with one or more CSI-RS resource sets. A CSI-RS resource may be associated with a location in the time and frequency domains and a periodicity. The base station may selectively activate and/or deactivate a CSI-RS resource. The base station may indicate to the UE that a CSI-RS resource in the CSI-RS resource set is activated and/or deactivated.

The base station may configure the UE to report CSI measurements. The base station may configure the UE to provide CSI reports periodically, aperiodically, or semi-persistently. For periodic CSI reporting, the UE may be configured with a timing and/or periodicity of a plurality of CSI reports. For aperiodic CSI reporting, the base station may request a CSI report. For example, the base station may command the UE to measure a configured CSI-RS resource and provide a CSI report relating to the measurements. For semi-persistent CSI reporting, the base station may configure the UE to transmit periodically, and selectively activate or deactivate the periodic reporting. The base station may configure the UE with a CSI-RS resource set and CSI reports using RRC signaling.

The CSI-RS configuration may comprise one or more parameters indicating, for example, up to 32 antenna ports. The UE may be configured to employ the same OFDM symbols for a downlink CSI-RS and a control resource set (CORESET) when the downlink CSI-RS and CORESET are spatially QCLed and resource elements associated with the downlink CSI-RS are outside of the physical resource blocks (PRBs) configured for the CORESET. The UE may be configured to employ the same OFDM symbols for downlink CSI-RS and SS/PBCH blocks when the downlink CSI-RS and SS/PBCH blocks are spatially QCLed and resource elements associated with the downlink CSI-RS are outside of PRBs configured for the SS/PBCH blocks.

Downlink DMRSs may be transmitted by a base station and used by a UE for channel estimation. For example, the downlink DMRS may be used for coherent demodulation of one or more downlink physical channels (e.g., PDSCH). An NR network may support one or more variable and/or configurable DMRS patterns for data demodulation. At least one downlink DMRS configuration may support a front-loaded DMRS pattern. A front-loaded DMRS may be mapped over one or more OFDM symbols (e.g., one or two adjacent OFDM symbols). A base station may semi-statically configure the UE with a number (e.g. a maximum number) of front-loaded DMRS symbols for PDSCH. A DMRS configuration may support one or more DMRS ports. For example, for single user-MIMO, a DMRS configuration may support up to eight orthogonal downlink DMRS ports per UE. For multiuser-MIMO, a DMRS configuration may support up to 4 orthogonal downlink DMRS ports per UE. A radio network may support (e.g., at least for CP-OFDM) a common DMRS structure for downlink and uplink, wherein a DMRS location, a DMRS pattern, and/or a scrambling sequence may be the same or different. The base station may transmit a downlink DMRS and a corresponding PDSCH using the same precoding matrix. The UE may use the one or more downlink DMRSs for coherent demodulation/channel estimation of the PDSCH.

In an example, a transmitter (e.g., a base station) may use a precoder matrices for a part of a transmission bandwidth. For example, the transmitter may use a first precoder matrix for a first bandwidth and a second precoder matrix for a second bandwidth. The first precoder matrix and the second precoder matrix may be different based on the first bandwidth being different from the second bandwidth. The UE may assume that a same precoding matrix is used across a set of PRBs. The set of PRBs may be denoted as a precoding resource block group (PRG).

A PDSCH may comprise one or more layers. The UE may assume that at least one symbol with DMRS is present on a layer of the one or more layers of the PDSCH. A higher layer may configure up to 3 DMRSs for the PDSCH.

Downlink PT-RS may be transmitted by a base station and used by a UE for phase-noise compensation. Whether a downlink PT-RS is present or not may depend on an RRC configuration. The presence and/or pattern of the downlink PT-RS may be configured on a UE-specific basis using a combination of RRC signaling and/or an association with one or more parameters employed for other purposes (e.g., modulation and coding scheme (MCS)), which may be indicated by DCI. When configured, a dynamic presence of a downlink PT-RS may be associated with one or more DCI parameters comprising at least MCS. An NR network may support a plurality of PT-RS densities defined in the time and/or frequency domains. When present, a frequency domain density may be associated with at least one configuration of a scheduled bandwidth. The UE may assume a same precoding for a DMRS port and a PT-RS port. A number of PT-RS ports may be fewer than a number of DMRS ports in a scheduled resource. Downlink PT-RS may be confined in the scheduled time/frequency duration for the UE. Downlink PT-RS may be transmitted on symbols to facilitate phase tracking at the receiver.

The UE may transmit an uplink DMRS to a base station for channel estimation. For example, the base station may use the uplink DMRS for coherent demodulation of one or more uplink physical channels. For example, the UE may transmit an uplink DMRS with a PUSCH and/or a PUCCH. The uplink DM-RS may span a range of frequencies that is similar to a range of frequencies associated with the corresponding physical channel. The base station may configure the UE with one or more uplink DMRS configurations. At least one DMRS configuration may support a front-loaded DMRS pattern. The front-loaded DMRS may be mapped over one or more OFDM symbols (e.g., one or two adjacent OFDM symbols). One or more uplink DMRSs may be configured to transmit at one or more symbols of a PUSCH and/or a PUCCH.

The base station may semi-statically configure the UE with a number (e.g. maximum number) of front-loaded DMRS symbols for the PUSCH and/or the PUCCH, which the UE may use to schedule a single-symbol DMRS and/or a double-symbol DMRS. An NR network may support (e.g., for cyclic prefix orthogonal frequency division multiplexing (CP-OFDM)) a common DMRS structure for downlink and uplink, wherein a DMRS location, a DMRS pattern, and/or a scrambling sequence for the DMRS may be the same or different.

A PUSCH may comprise one or more layers, and the UE may transmit at least one symbol with DMRS present on a layer of the one or more layers of the PUSCH. In an example, a higher layer may configure up to three DMRSs for the PUSCH.

Uplink PT-RS (which may be used by a base station for phase tracking and/or phase-noise compensation) may or may not be present depending on an RRC configuration of the UE. The presence and/or pattern of uplink PT-RS may be configured on a UE-specific basis by a combination of RRC signaling and/or one or more parameters employed for other purposes (e.g., Modulation and Coding Scheme (MCS)), which may be indicated by DCI. When configured, a dynamic presence of uplink PT-RS may be associated with one or more DCI parameters comprising at least MCS. A radio network may support a plurality of uplink PT-RS densities defined in time/frequency domain. When present, a frequency domain density may be associated with at least one configuration of a scheduled bandwidth. The UE may assume a same precoding for a DMRS port and a PT-RS port. A number of PT-RS ports may be fewer than a number of DMRS ports in a scheduled resource. For example, uplink PT-RS may be confined in the scheduled time/frequency duration for the UE.

SRS may be transmitted by a UE to a base station for channel state estimation to support uplink channel dependent scheduling and/or link adaptation. SRS transmitted by the UE may allow a base station to estimate an uplink channel state at one or more frequencies. A scheduler at the base station may employ the estimated uplink channel state to assign one or more resource blocks for an uplink PUSCH transmission from the UE. The base station may semi-statically configure the UE with one or more SRS resource sets. For an SRS resource set, the base station may configure the UE with one or more SRS resources. An SRS resource set applicability may be configured by a higher layer (e.g., RRC) parameter. For example, when a higher layer parameter indicates beam management, an SRS resource in a SRS resource set of the one or more SRS resource sets (e.g., with the same/similar time domain behavior, periodic, aperiodic, and/or the like) may be transmitted at a time instant (e.g., simultaneously). The UE may transmit one or more SRS resources in SRS resource sets. An NR network may support aperiodic, periodic and/or semi-persistent SRS transmissions. The UE may transmit SRS resources based on one or more trigger types, wherein the one or more trigger types may comprise higher layer signaling (e.g., RRC) and/or one or more DCI formats. In an example, at least one DCI format may be employed for the UE to select at least one of one or more configured SRS resource sets. An SRS trigger type 0 may refer to an SRS triggered based on a higher layer signaling. An SRS trigger type 1 may refer to an SRS triggered based on one or more DCI formats. In an example, when PUSCH and SRS are transmitted in a same slot, the UE may be configured to transmit SRS after a transmission of a PUSCH and a corresponding uplink DMRS.

The base station may semi-statically configure the UE with one or more SRS configuration parameters indicating at least one of following: a SRS resource configuration identifier; a number of SRS ports; time domain behavior of an SRS resource configuration (e.g., an indication of periodic, semi-persistent, or aperiodic SRS); slot, mini-slot, and/or subframe level periodicity; offset for a periodic and/or an aperiodic SRS resource; a number of OFDM symbols in an SRS resource; a starting OFDM symbol of an SRS resource; an SRS bandwidth; a frequency hopping bandwidth; a cyclic shift; and/or an SRS sequence ID.

An antenna port is defined such that the channel over which a symbol on the antenna port is conveyed can be inferred from the channel over which another symbol on the same antenna port is conveyed. If a first symbol and a second symbol are transmitted on the same antenna port, the receiver may infer the channel (e.g., fading gain, multipath delay, and/or the like) for conveying the second symbol on the antenna port, from the channel for conveying the first symbol on the antenna port. A first antenna port and a second antenna port may be referred to as quasi co-located (QCLed) if one or more large-scale properties of the channel over which a first symbol on the first antenna port is conveyed may be inferred from the channel over which a second symbol on a second antenna port is conveyed. The one or more large-scale properties may comprise at least one of: a delay spread; a Doppler spread; a Doppler shift; an average gain; an average delay; and/or spatial Receiving (Rx) parameters.

Channels that use beamforming require beam management. Beam management may comprise beam measurement, beam selection, and beam indication. A beam may be associated with one or more reference signals. For example, a beam may be identified by one or more beamformed reference signals. The UE may perform downlink beam measurement based on downlink reference signals (e.g., a channel state information reference signal (CSI-RS)) and generate a beam measurement report. The UE may perform the downlink beam measurement procedure after an RRC connection is set up with a base station.

FIG. 11B illustrates an example of channel state information reference signals (CSI-RSs) that are mapped in the time and frequency domains. A square shown in FIG. 11B may span a resource block (RB) within a bandwidth of a cell. A base station may transmit one or more RRC messages comprising CSI-RS resource configuration parameters indicating one or more CSI-RSs. One or more of the following parameters may be configured by higher layer signaling (e.g., RRC and/or MAC signaling) for a CSI-RS resource configuration: a CSI-RS resource configuration identity, a number of CSI-RS ports, a CSI-RS configuration (e.g., symbol and resource element (RE) locations in a subframe), a CSI-RS subframe configuration (e.g., subframe location, offset, and periodicity in a radio frame), a CSI-RS power parameter, a CSI-RS sequence parameter, a code division multiplexing (CDM) type parameter, a frequency density, a transmission comb, quasi co-location (QCL) parameters (e.g., QCL-scramblingidentity, crs-portscount, mbsfn-subframeconfiglist, csi-rs-configZPid, qcl-csi-rs-configNZPid), and/or other radio resource parameters.

The three beams illustrated in FIG. 11B may be configured for a UE in a UE-specific configuration. Three beams are illustrated in FIG. 11B (beam #1, beam #2, and beam #3), more or fewer beams may be configured. Beam #1 may be allocated with CSI-RS 1101 that may be transmitted in one or more subcarriers in an RB of a first symbol. Beam #2 may be allocated with CSI-RS 1102 that may be transmitted in one or more subcarriers in an RB of a second symbol. Beam #3 may be allocated with CSI-RS 1103 that may be transmitted in one or more subcarriers in an RB of a third symbol. By using frequency division multiplexing (FDM), a base station may use other subcarriers in a same RB (for example, those that are not used to transmit CSI-RS 1101) to transmit another CSI-RS associated with a beam for another UE. By using time domain multiplexing (TDM), beams used for the UE may be configured such that beams for the UE use symbols from beams of other UEs.

CSI-RSs such as those illustrated in FIG. 11B (e.g., CSI-RS 1101, 1102, 1103) may be transmitted by the base station and used by the UE for one or more measurements. For example, the UE may measure a reference signal received power (RSRP) of configured CSI-RS resources. The base station may configure the UE with a reporting configuration and the UE may report the RSRP measurements to a network (for example, via one or more base stations) based on the reporting configuration. In an example, the base station may determine, based on the reported measurement results, one or more transmission configuration indication (TCI) states comprising a number of reference signals. In an example, the base station may indicate one or more TCI states to the UE (e.g., via RRC signaling, a MAC CE, and/or a DCI). The UE may receive a downlink transmission with a receive (Rx) beam determined based on the one or more TCI states. In an example, the UE may or may not have a capability of beam correspondence. If the UE has the capability of beam correspondence, the UE may determine a spatial domain filter of a transmit (Tx) beam based on a spatial domain filter of the corresponding Rx beam. If the UE does not have the capability of beam correspondence, the UE may perform an uplink beam selection procedure to determine the spatial domain filter of the Tx beam. The UE may perform the uplink beam selection procedure based on one or more sounding reference signal (SRS) resources configured to the UE by the base station. The base station may select and indicate uplink beams for the UE based on measurements of the one or more SRS resources transmitted by the UE.

In a beam management procedure, a UE may assess (e.g., measure) a channel quality of one or more beam pair links, a beam pair link comprising a transmitting beam transmitted by a base station and a receiving beam received by the UE. Based on the assessment, the UE may transmit a beam measurement report indicating one or more beam pair quality parameters comprising, e.g., one or more beam identifications (e.g., a beam index, a reference signal index, or the like), RSRP, a precoding matrix indicator (PMI), a channel quality indicator (CQI), and/or a rank indicator (RI).

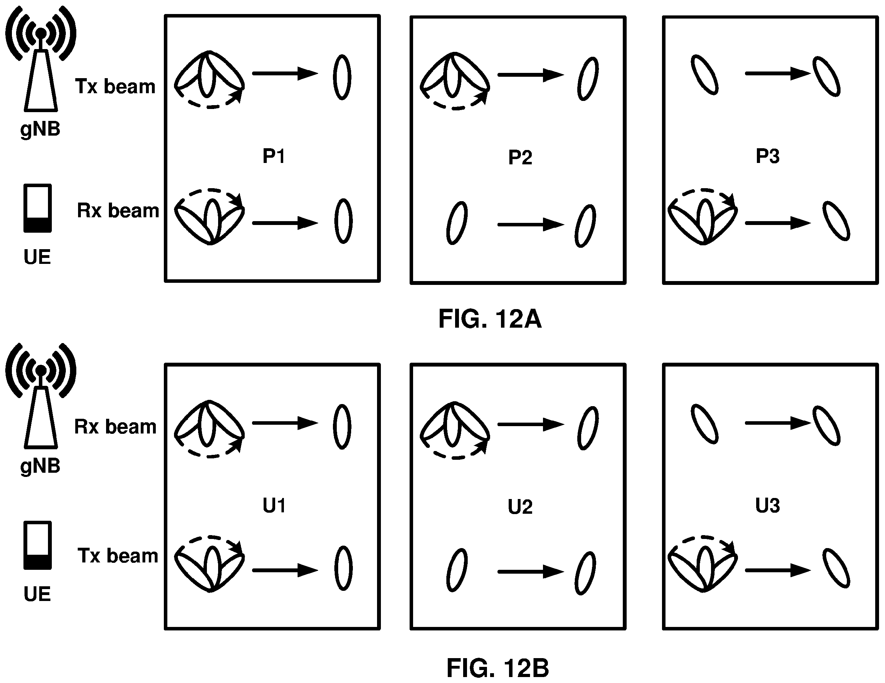

FIG. 12A illustrates examples of three downlink beam management procedures: P1, P2, and P3. Procedure P1 may enable a UE measurement on transmit (Tx) beams of a transmission reception point (TRP) (or multiple TRPs), e.g., to support a selection of one or more base station Tx beams and/or UE Rx beams (shown as ovals in the top row and bottom row, respectively, of P1). Beamforming at a TRP may comprise a Tx beam sweep for a set of beams (shown, in the top rows of P1 and P2, as ovals rotated in a counter-clockwise direction indicated by the dashed arrow). Beamforming at a UE may comprise an Rx beam sweep for a set of beams (shown, in the bottom rows of P1 and P3, as ovals rotated in a clockwise direction indicated by the dashed arrow). Procedure P2 may be used to enable a UE measurement on Tx beams of a TRP (shown, in the top row of P2, as ovals rotated in a counter-clockwise direction indicated by the dashed arrow). The UE and/or the base station may perform procedure P2 using a smaller set of beams than is used in procedure P1, or using narrower beams than the beams used in procedure P1. This may be referred to as beam refinement. The UE may perform procedure P3 for Rx beam determination by using the same Tx beam at the base station and sweeping an Rx beam at the UE.

FIG. 12B illustrates examples of three uplink beam management procedures: U1, U2, and U3. Procedure U1 may be used to enable a base station to perform a measurement on Tx beams of a UE, e.g., to support a selection of one or more UE Tx beams and/or base station Rx beams (shown as ovals in the top row and bottom row, respectively, of U1). Beamforming at the UE may include, e.g., a Tx beam sweep from a set of beams (shown in the bottom rows of U1 and U3 as ovals rotated in a clockwise direction indicated by the dashed arrow). Beamforming at the base station may include, e.g., an Rx beam sweep from a set of beams (shown, in the top rows of U1 and U2, as ovals rotated in a counter-clockwise direction indicated by the dashed arrow). Procedure U2 may be used to enable the base station to adjust its Rx beam when the UE uses a fixed Tx beam. The UE and/or the base station may perform procedure U2 using a smaller set of beams than is used in procedure P1, or using narrower beams than the beams used in procedure P1. This may be referred to as beam refinement The UE may perform procedure U3 to adjust its Tx beam when the base station uses a fixed Rx beam.

A UE may initiate a beam failure recovery (BFR) procedure based on detecting a beam failure. The UE may transmit a BFR request (e.g., a preamble, a UCI, an SR, a MAC CE, and/or the like) based on the initiating of the BFR procedure. The UE may detect the beam failure based on a determination that a quality of beam pair link(s) of an associated control channel is unsatisfactory (e.g., having an error rate higher than an error rate threshold, a received signal power lower than a received signal power threshold, an expiration of a timer, and/or the like).

The UE may measure a quality of a beam pair link using one or more reference signals (RSs) comprising one or more SS/PBCH blocks, one or more CSI-RS resources, and/or one or more demodulation reference signals (DMRSs). A quality of the beam pair link may be based on one or more of a block error rate (BLER), an RSRP value, a signal to interference plus noise ratio (SINR) value, a reference signal received quality (RSRQ) value, and/or a CSI value measured on RS resources. The base station may indicate that an RS resource is quasi co-located (QCLed) with one or more DM-RSs of a channel (e.g., a control channel, a shared data channel, and/or the like). The RS resource and the one or more DMRSs of the channel may be QCLed when the channel characteristics (e.g., Doppler shift, Doppler spread, average delay, delay spread, spatial Rx parameter, fading, and/or the like) from a transmission via the RS resource to the UE are similar or the same as the channel characteristics from a transmission via the channel to the UE.

A network (e.g., a gNB and/or an ng-eNB of a network) and/or the UE may initiate a random access procedure. A UE in an RRC_IDLE state and/or an RRC_INACTIVE state may initiate the random access procedure to request a connection setup to a network. The UE may initiate the random access procedure from an RRC_CONNECTED state. The UE may initiate the random access procedure to request uplink resources (e.g., for uplink transmission of an SR when there is no PUCCH resource available) and/or acquire uplink timing (e.g., when uplink synchronization status is non-synchronized). The UE may initiate the random access procedure to request one or more system information blocks (SIBs) (e.g., other system information such as SIB2, SIB3, and/or the like). The UE may initiate the random access procedure for a beam failure recovery request. A network may initiate a random access procedure for a handover and/or for establishing time alignment for an SCell addition.

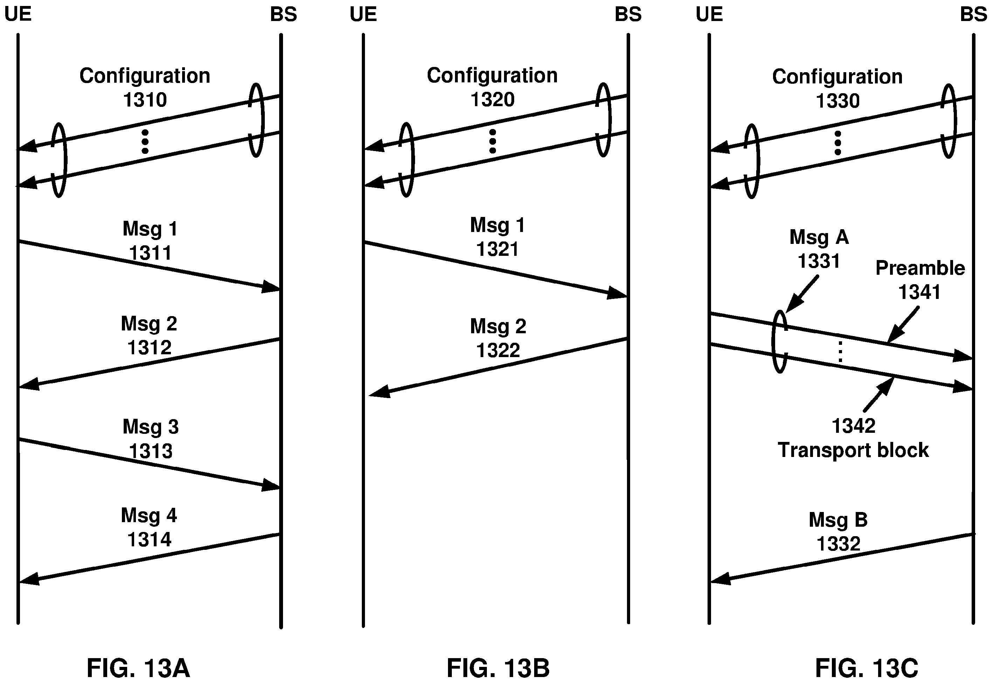

FIG. 13A illustrates a four-step contention-based random access procedure. Prior to initiation of the procedure, a base station may transmit a configuration message 1310 to the UE. The procedure illustrated in FIG. 13A comprises transmission of four messages: a Msg 1 1311, a Msg 2 1312, a Msg 3 1313, and a Msg 4 1314. The Msg 1 1311 may include and/or be referred to as a preamble (or a random access preamble). The Msg 2 1312 may include and/or be referred to as a random access response (RAR).

The configuration message 1310 may be transmitted, for example, using one or more RRC messages. The one or more RRC messages may indicate one or more random access channel (RACH) parameters to the UE. The one or more RACH parameters may comprise at least one of following: general parameters for one or more random access procedures (e.g., RACH-configGeneral); cell-specific parameters (e.g., RACH-ConfigCommon); and/or dedicated parameters (e.g., RACH-configDedicated). The base station may broadcast or multicast the one or more RRC messages to one or more UEs. The one or more RRC messages may be UE-specific (e.g., dedicated RRC messages transmitted to a UE in an RRC_CONNECTED state and/or in an RRC_INACTIVE state). The UE may determine, based on the one or more RACH parameters, a time-frequency resource and/or an uplink transmit power for transmission of the Msg 1 1311 and/or the Msg 3 1313. Based on the one or more RACH parameters, the UE may determine a reception timing and a downlink channel for receiving the Msg 2 1312 and the Msg 4 1314.

The one or more RACH parameters provided in the configuration message 1310 may indicate one or more Physical RACH (PRACH) occasions available for transmission of the Msg 1 1311. The one or more PRACH occasions may be predefined. The one or more RACH parameters may indicate one or more available sets of one or more PRACH occasions (e.g., prach-ConfigIndex). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. For example, the one or more RACH parameters may indicate a number of SS/PBCH blocks mapped to a PRACH occasion and/or a number of preambles mapped to a SS/PBCH blocks.

The one or more RACH parameters provided in the configuration message 1310 may be used to determine an uplink transmit power of Msg 1 1311 and/or Msg 3 1313. For example, the one or more RACH parameters may indicate a reference power for a preamble transmission (e.g., a received target power and/or an initial power of the preamble transmission). There may be one or more power offsets indicated by the one or more RACH parameters. For example, the one or more RACH parameters may indicate: a power ramping step; a power offset between SSB and CSI-RS; a power offset between transmissions of the Msg 1 1311 and the Msg 3 1313; and/or a power offset value between preamble groups. The one or more RACH parameters may indicate one or more thresholds based on which the UE may determine at least one reference signal (e.g., an SSB and/or CSI-RS) and/or an uplink carrier (e.g., a normal uplink (NUL) carrier and/or a supplemental uplink (SUL) carrier).

The Msg 1 1311 may include one or more preamble transmissions (e.g., a preamble transmission and one or more preamble retransmissions). An RRC message may be used to configure one or more preamble groups (e.g., group A and/or group B). A preamble group may comprise one or more preambles. The UE may determine the preamble group based on a pathloss measurement and/or a size of the Msg 3 1313. The UE may measure an RSRP of one or more reference signals (e.g., SSBs and/or CSI-RSs) and determine at least one reference signal having an RSRP above an RSRP threshold (e.g., rsrp-ThresholdSSB and/or rsrp-ThresholdCSI-RS). The UE may select at least one preamble associated with the one or more reference signals and/or a selected preamble group, for example, if the association between the one or more preambles and the at least one reference signal is configured by an RRC message.

The UE may determine the preamble based on the one or more RACH parameters provided in the configuration message 1310. For example, the UE may determine the preamble based on a pathloss measurement, an RSRP measurement, and/or a size of the Msg 3 1313. As another example, the one or more RACH parameters may indicate: a preamble format; a maximum number of preamble transmissions; and/or one or more thresholds for determining one or more preamble groups (e.g., group A and group B). A base station may use the one or more RACH parameters to configure the UE with an association between one or more preambles and one or more reference signals (e.g., SSBs and/or CSI-RSs). If the association is configured, the UE may determine the preamble to include in Msg 1 1311 based on the association. The Msg 1 1311 may be transmitted to the base station via one or more PRACH occasions. The UE may use one or more reference signals (e.g., SSBs and/or CSI-RSs) for selection of the preamble and for determining of the PRACH occasion. One or more RACH parameters (e.g., ra-ssb-OccasionMskIndex and/or ra-OccasionList) may indicate an association between the PRACH occasions and the one or more reference signals.

The UE may perform a preamble retransmission if no response is received following a preamble transmission. The UE may increase an uplink transmit power for the preamble retransmission. The UE may select an initial preamble transmit power based on a pathloss measurement and/or a target received preamble power configured by the network. The UE may determine to retransmit a preamble and may ramp up the uplink transmit power. The UE may receive one or more RACH parameters (e.g., PREAMBLE_POWER_RAMPING_STEP) indicating a ramping step for the preamble retransmission. The ramping step may be an amount of incremental increase in uplink transmit power for a retransmission. The UE may ramp up the uplink transmit power if the UE determines a reference signal (e.g., SSB and/or CSI-RS) that is the same as a previous preamble transmission. The UE may count a number of preamble transmissions and/or retransmissions (e.g., PREAMBLE_TRANSMISSION_COUNTER). The UE may determine that a random access procedure completed unsuccessfully, for example, if the number of preamble transmissions exceeds a threshold configured by the one or more RACH parameters (e.g., preambleTransMax).

The Msg 2 1312 received by the UE may include an RAR. In some scenarios, the Msg 2 1312 may include multiple RARs corresponding to multiple UEs. The Msg 2 1312 may be received after or in response to the transmitting of the Msg 1 1311. The Msg 2 1312 may be scheduled on the DL-SCH and indicated on a PDCCH using a random access RNTI (RA-RNTI). The Msg 2 1312 may indicate that the Msg 1 1311 was received by the base station. The Msg 2 1312 may include a time-alignment command that may be used by the UE to adjust the UE's transmission timing, a scheduling grant for transmission of the Msg 3 1313, and/or a Temporary Cell RNTI (TC-RNTI). After transmitting a preamble, the UE may start a time window (e.g., ra-ResponseWindow) to monitor a PDCCH for the Msg 2 1312. The UE may determine when to start the time window based on a PRACH occasion that the UE uses to transmit the preamble. For example, the UE may start the time window one or more symbols after a last symbol of the preamble (e.g., at a first PDCCH occasion from an end of a preamble transmission). The one or more symbols may be determined based on a numerology. The PDCCH may be in a common search space (e.g., a Type1-PDCCH common search space) configured by an RRC message. The UE may identify the RAR based on a Radio Network Temporary Identifier (RNTI). RNTIs may be used depending on one or more events initiating the random access procedure. The UE may use random access RNTI (RA-RNTI). The RA-RNTI may be associated with PRACH occasions in which the UE transmits a preamble. For example, the UE may determine the RA-RNTI based on: an OFDM symbol index; a slot index; a frequency domain index; and/or a UL carrier indicator of the PRACH occasions. An example of RA-RNTI may be as follows:

$$RA\text{-}RNTI = 1 + s\_id + 14 \times t\_id + 14 \times 80 \times f\_id + 14 \times 80 \times 8 \times ul\_carrier\_id$$

where s_id may be an index of a first OFDM symbol of the PRACH occasion (e.g., $0 \le s\_id < 14$), t_id may be an index of a first slot of the PRACH occasion in a system frame (e.g., $0 \le t\_id < 80$), f_id may be an index of the PRACH occasion in the frequency domain (e.g., $0 \le f\_id < 8$), and ul_carrier_id may be a UL carrier used for a preamble transmission (e.g., 0 for an NUL carrier, and 1 for an SUL carrier).

The UE may transmit the Msg 3 1313 in response to a successful reception of the Msg 2 1312 (e.g., using resources identified in the Msg 2 1312). The Msg 3 1313 may be used for contention resolution in, for example, the contention-based random access procedure illustrated in FIG. 13A. In some scenarios, a plurality of UEs may transmit a same preamble to a base station and the base station may provide an RAR that corresponds to a UE. Collisions may occur if the plurality of UEs interpret the RAR as corresponding to themselves. Contention resolution (e.g., using the Msg 3 1313 and the Msg 4 1314) may be used to increase the likelihood that the UE does not incorrectly use an identity of another the UE. To perform contention resolution, the UE may include a device identifier in the Msg 3 1313 (e.g., a C-RNTI if assigned, a TC-RNTI included in the Msg 2 1312, and/or any other suitable identifier).

The Msg 4 1314 may be received after or in response to the transmitting of the Msg 3 1313. If a C-RNTI was included in the Msg 3 1313, the base station will address the UE on the PDCCH using the C-RNTI. If the UE's unique C-RNTI is detected on the PDCCH, the random access procedure is determined to be successfully completed. If a TC-RNTI is included in the Msg 3 1313 (e.g., if the UE is in an RRC_IDLE state or not otherwise connected to the base station), Msg 4 1314 will be received using a DL-SCH associated with the TC-RNTI. If a MAC PDU is successfully decoded and a MAC PDU comprises the UE contention resolution identity MAC CE that matches or otherwise corresponds with the CCCH SDU sent (e.g., transmitted) in Msg 3 1313, the UE may determine that the contention resolution is successful and/or the UE may determine that the random access procedure is successfully completed.

The UE may be configured with a supplementary uplink (SUL) carrier and a normal uplink (NUL) carrier. An initial access (e.g., random access procedure) may be supported in an uplink carrier. For example, a base station may configure the UE with two separate RACH configurations: one for an SUL carrier and the other for an NUL carrier. For random access in a cell configured with an SUL carrier, the network may indicate which carrier to use (NUL or SUL). The UE may determine the SUL carrier, for example, if a measured quality of one or more reference signals is lower than a broadcast threshold. Uplink transmissions of the random access procedure (e.g., the Msg 1 1311 and/or the Msg 3 1313) may remain on the selected carrier. The UE may switch an uplink carrier during the random access procedure (e.g., between the Msg 1 1311 and the Msg 3 1313) in one or more cases. For example, the UE may determine and/or switch an uplink carrier for the Msg 1 1311 and/or the Msg 3 1313 based on a channel clear assessment (e.g., a listen-before-talk).

FIG. 13B illustrates a two-step contention-free random access procedure. Similar to the four-step contention-based random access procedure illustrated in FIG. 13A, a base station may, prior to initiation of the procedure, transmit a configuration message 1320 to the UE. The configuration message 1320 may be analogous in some respects to the configuration message 1310. The procedure illustrated in FIG. 13B comprises transmission of two messages: a Msg 1 1321 and a Msg 2 1322. The Msg 1 1321 and the Msg 2 1322 may be analogous in some respects to the Msg 1 1311 and a Msg 2 1312 illustrated in FIG. 13A, respectively. As will be understood from FIGS. 13A and 13B, the contention-free random access procedure may not include messages analogous to the Msg 3 1313 and/or the Msg 4 1314.

The contention-free random access procedure illustrated in FIG. 13B may be initiated for a beam failure recovery, other SI request, SCell addition, and/or handover. For example, a base station may indicate or assign to the UE the preamble to be used for the Msg 1 1321. The UE may receive, from the base station via PDCCH and/or RRC, an indication of a preamble (e.g., ra-PreambleIndex).

After transmitting a preamble, the UE may start a time window (e.g., ra-ResponseWindow) to monitor a PDCCH for the RAR. In the event of a beam failure recovery request, the base station may configure the UE with a separate time window and/or a separate PDCCH in a search space indicated by an RRC message (e.g., recoverySearchSpaceId). The UE may monitor for a PDCCH transmission addressed to a Cell RNTI (C-RNTI) on the search space. In the contention-free random access procedure illustrated in FIG. 13B, the UE may determine that a random access procedure successfully completes after or in response to transmission of Msg 1 1321 and reception of a corresponding Msg 2 1322. The UE may determine that a random access procedure successfully completes, for example, if a PDCCH transmission is addressed to a C-RNTI. The UE may determine that a random access procedure successfully completes, for example, if the UE receives an RAR comprising a preamble identifier corresponding to a preamble transmitted by the UE and/or the RAR comprises a MAC sub-PDU with the preamble identifier. The UE may determine the response as an indication of an acknowledgement for an SI request.

FIG. 13C illustrates another two-step random access procedure. Similar to the random access procedures illustrated in FIGS. 13A and 13B, a base station may, prior to initiation of the procedure, transmit a configuration message 1330 to the UE. The configuration message 1330 may be analogous in some respects to the configuration message 1310 and/or the configuration message 1320. The procedure illustrated in FIG. 13C comprises transmission of two messages: a Msg A 1331 and a Msg B 1332.

Msg A 1331 may be transmitted in an uplink transmission by the UE. Msg A 1331 may comprise one or more transmissions of a preamble 1341 and/or one or more transmissions of a transport block 1342. The transport block 1342 may comprise contents that are similar and/or equivalent to the contents of the Msg 3 1313 illustrated in FIG. 13A. The transport block 1342 may comprise UCI (e.g., an SR, a HARQ ACK/NACK, and/or the like). The UE may receive the Msg B 1332 after or in response to transmitting the Msg A 1331. The Msg B 1332 may comprise contents that are similar and/or equivalent to the contents of the Msg 2 1312 (e.g., an RAR) illustrated in FIGS. 13A and 13B and/or the Msg 4 1314 illustrated in FIG. 13A.

The UE may initiate the two-step random access procedure in FIG. 13C for licensed spectrum and/or unlicensed spectrum. The UE may determine, based on one or more factors, whether to initiate the two-step random access procedure. The one or more factors may be: a radio access technology in use (e.g., LTE, NR, and/or the like); whether the UE has valid TA or not; a cell size; the UE's RRC state; a type of spectrum (e.g., licensed vs. unlicensed); and/or any other suitable factors.

The UE may determine, based on two-step RACH parameters included in the configuration message 1330, a radio resource and/or an uplink transmit power for the preamble 1341 and/or the transport block 1342 included in the Msg A 1331. The RACH parameters may indicate a modulation and coding schemes (MCS), a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the UE to determine a reception timing and a downlink channel for monitoring for and/or receiving Msg B 1332.

The transport block 1342 may comprise data (e.g., delay-sensitive data), an identifier of the UE, security information, and/or device information (e.g., an International Mobile Subscriber Identity (IMSI)). The base station may transmit the Msg B 1332 as a response to the Msg A 1331. The Msg B 1332 may comprise at least one of following: a preamble identifier; a timing advance command; a power control command; an uplink grant (e.g., a radio resource assignment and/or an MCS); a UE identifier for contention resolution; and/or an RNTI (e.g., a C-RNTI or a TC-RNTI). The UE may determine that the two-step random access procedure is successfully completed if: a preamble identifier in the Msg B 1332 is matched to a preamble transmitted by the UE; and/or the identifier of the UE in Msg B 1332 is matched to the identifier of the UE in the Msg A 1331 (e.g., the transport block 1342).

A UE and a base station may exchange control signaling. The control signaling may be referred to as L1/L2 control signaling and may originate from the PHY layer (e.g., layer 1) and/or the MAC layer (e.g., layer 2). The control signaling may comprise downlink control signaling transmitted from the base station to the UE and/or uplink control signaling transmitted from the UE to the base station.

The downlink control signaling may comprise: a downlink scheduling assignment; an uplink scheduling grant indicating uplink radio resources and/or a transport format; a slot format information; a preemption indication; a power control command; and/or any other suitable signaling. The UE may receive the downlink control signaling in a payload transmitted by the base station on a physical downlink control channel (PDCCH). The payload transmitted on the PDCCH may be referred to as downlink control information (DCI). In some scenarios, the PDCCH may be a group common PDCCH (GC-PDCCH) that is common to a group of UEs.

A base station may attach one or more cyclic redundancy check (CRC) parity bits to a DCI in order to facilitate detection of transmission errors. When the DCI is intended for a UE (or a group of the UEs), the base station may scramble the CRC parity bits with an identifier of the UE (or an identifier of the group of the UEs). Scrambling the CRC parity bits with the identifier may comprise Modulo-2 addition (or an exclusive OR operation) of the identifier value and the CRC parity bits. The identifier may comprise a 16-bit value of a radio network temporary identifier (RNTI).

DCIs may be used for different purposes. A purpose may be indicated by the type of RNTI used to scramble the CRC parity bits. For example, a DCI having CRC parity bits scrambled with a paging RNTI (P-RNTI) may indicate paging information and/or a system information change notification. The P-RNTI may be predefined as "FFFE" in hexadecimal. A DCI having CRC parity bits scrambled with a system information RNTI (SI-RNTI) may indicate a broadcast transmission of the system information. The SI-RNTI may be predefined as "FFFF" in hexadecimal. A DCI having CRC parity bits scrambled with a random access RNTI (RA-RNTI) may indicate a random access response (RAR). A DCI having CRC parity bits scrambled with a cell RNTI (C-RNTI) may indicate a dynamically scheduled unicast transmission and/or a triggering of PDCCH-ordered random access. A DCI having CRC parity bits scrambled with a temporary cell RNTI (TC-RNTI) may indicate a contention resolution (e.g., a Msg 3 analogous to the Msg 3 1313 illustrated in FIG. 13A). Other RNTIs configured to the UE by a base station may comprise a Configured Scheduling RNTI (CS-RNTI), a Transmit Power Control-PUCCH RNTI (TPC-PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C-RNTI), and/or the like.

Depending on the purpose and/or content of a DCI, the base station may transmit the DCIs with one or more DCI formats. For example, DCI format 0_0 may be used for scheduling of PUSCH in a cell. DCI format 0_0 may be a fallback DCI format (e.g., with compact DCI payloads). DCI format 0_1 may be used for scheduling of PUSCH in a cell (e.g., with more DCI payloads than DCI format 0_0). DCI format 1_0 may be used for scheduling of PDSCH in a cell. DCI format 1_0 may be a fallback DCI format (e.g., with compact DCI payloads). DCI format 1_1 may be used for scheduling of PDSCH in a cell (e.g., with more DCI payloads than DCI format 1_0). DCI format 2_0 may be used for providing a slot format indication to a group of UEs. DCI format 2_1 may be used for notifying a group of UEs of a physical resource block and/or OFDM symbol where the UE may assume no transmission is intended to the UE. DCI format 2_2 may be used for transmission of a transmit power control (TPC) command for PUCCH or PUSCH. DCI format 2_3 may be used for transmission of a group of TPC commands for SRS transmissions by one or more UEs. DCI format(s) for new functions may be defined in future releases. DCI formats may have different DCI sizes, or may share the same DCI size.

After scrambling a DCI with a RNTI, the base station may process the DCI with channel coding (e.g., polar coding), rate matching, scrambling and/or QPSK modulation. A base station may map the coded and modulated DCI on resource elements used and/or configured for a PDCCH. Based on a payload size of the DCI and/or a coverage of the base station, the base station may transmit the DCI via a PDCCH occupying a number of contiguous control channel elements (CCEs). The number of the contiguous CCEs (referred to as aggregation level) may be 1, 2, 4, 8, 16, and/or any other suitable number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

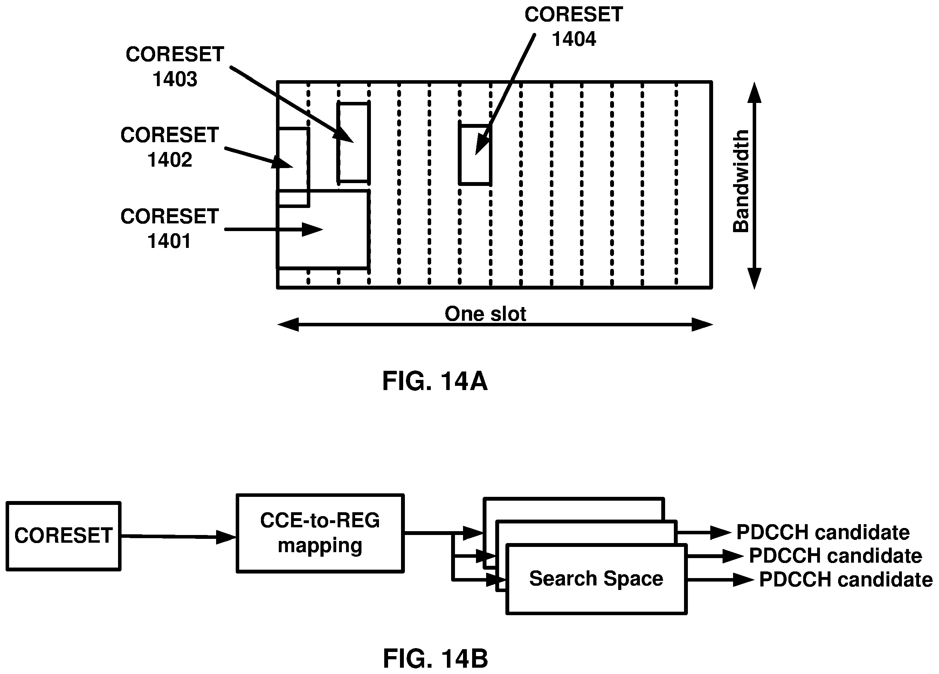

FIG. 14A illustrates an example of CORESET configurations for a bandwidth part. The base station may transmit a DCI via a PDCCH on one or more control resource sets (CORESETs). A CORESET may comprise a time-frequency resource in which the UE tries to decode a DCI using one or more search spaces. The base station may configure a CORESET in the time-frequency domain. In the example of FIG. 14A, a first CORESET 1401 and a second CORESET 1402 occur at the first symbol in a slot. The first CORESET 1401 overlaps with the second CORESET 1402 in the frequency domain. A third CORESET 1403 occurs at a third symbol in the slot. A fourth CORESET 1404 occurs at the seventh symbol in the slot. CORESETs may have a different number of resource blocks in frequency domain.

FIG. 14B illustrates an example of a CCE-to-REG mapping for DCI transmission on a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping by RRC configuration. A CORESET may be configured with an antenna port quasi co-location (QCL) parameter. The antenna port QCL parameter may indicate QCL information of a demodulation reference signal (DMRS) for PDCCH reception in the CORESET.

The base station may transmit, to the UE, RRC messages comprising configuration parameters of one or more CORESETs and one or more search space sets. The configuration parameters may indicate an association between a search space set and a CORESET. A search space set may comprise a set of PDCCH candidates formed by CCEs at a given aggregation level. The configuration parameters may indicate: a number of PDCCH candidates to be monitored per aggregation level; a PDCCH monitoring periodicity and a PDCCH monitoring pattern; one or more DCI formats to be monitored by the UE; and/or whether a search space set is a common search space set or a UE-specific search space set. A set of CCEs in the common search space set may be predefined and known to the UE. A set of CCEs in the UE-specific search space set may be configured based on the UE's identity (e.g., C-RNTI).

As shown in FIG. 14B, the UE may determine a time-frequency resource for a CORESET based on RRC messages. The UE may determine a CCE-to-REG mapping (e.g., interleaved or non-interleaved, and/or mapping parameters) for the CORESET based on configuration parameters of the CORESET. The UE may determine a number (e.g., at most 10) of search space sets configured on the CORESET based on the RRC messages. The UE may monitor a set of PDCCH candidates according to configuration parameters of a search space set. The UE may monitor a set of PDCCH candidates in one or more CORESETs for detecting one or more DCIs. Monitoring may comprise decoding one or more PDCCH candidates of the set of the PDCCH candidates according to the monitored DCI formats. Monitoring may comprise decoding a DCI content of one or more PDCCH candidates with possible (or configured) PDCCH locations, possible (or configured) PDCCH formats (e.g., number of CCEs, number of PDCCH candidates in common search spaces, and/or number of PDCCH candidates in the UE-specific search spaces) and possible (or configured) DCI formats. The decoding may be referred to as blind decoding. The UE may determine a DCI as valid for the UE, in response to CRC checking (e.g., scrambled bits for CRC parity bits of the DCI matching a RNTI value). The UE may process information contained in the DCI (e.g., a scheduling assignment, an uplink grant, power control, a slot format indication, a downlink preemption, and/or the like).

The UE may transmit uplink control signaling (e.g., uplink control information (UCI)) to a base station. The uplink control signaling may comprise hybrid automatic repeat request (HARQ) acknowledgements for received DL-SCH transport blocks. The UE may transmit the HARQ acknowledgements after receiving a DL-SCH transport block. Uplink control signaling may comprise channel state information (CSI) indicating channel quality of a physical downlink channel. The UE may transmit the CSI to the base station. The base station, based on the received CSI, may determine transmission format parameters (e.g., comprising multi-antenna and beamforming schemes) for a downlink transmission. Uplink control signaling may comprise scheduling requests (SR). The UE may transmit an SR indicating that uplink data is available for transmission to the base station. The UE may transmit a UCI (e.g., HARQ acknowledgements (HARQ-ACK), CSI report, SR, and the like) via a physical uplink control channel (PUCCH) or a physical uplink shared channel (PUSCH). The UE may transmit the uplink control signaling via a PUCCH using one of several PUCCH formats.

There may be five PUCCH formats and the UE may determine a PUCCH format based on a size of the UCI (e.g., a number of uplink symbols of UCI transmission and a number of UCI bits). PUCCH format 0 may have a length of one or two OFDM symbols and may include two or fewer bits. The UE may transmit UCI in a PUCCH resource using PUCCH format 0 if the transmission is over one or two symbols and the number of HARQ-ACK information bits with positive or negative SR (HARQ-ACK/SR bits) is one or two. PUCCH format 1 may occupy a number between four and fourteen OFDM symbols and may include two or fewer bits. The UE may use PUCCH format 1 if the transmission is four or more symbols and the number of HARQ-ACK/SR bits is one or two. PUCCH format 2 may occupy one or two OFDM symbols and may include more than two bits. The UE may use PUCCH format 2 if the transmission is over one or two symbols and the number of UCI bits is two or more. PUCCH format 3 may occupy a number between four and fourteen OFDM symbols and may include more than two bits. The UE may use PUCCH format 3 if the transmission is four or more symbols, the number of UCI bits is two or more and PUCCH resource does not include an orthogonal cover code. PUCCH format 4 may occupy a number between four and fourteen OFDM symbols and may include more than two bits. The UE may use PUCCH format 4 if the transmission is four or more symbols, the number of UCI bits is two or more and the PUCCH resource includes an orthogonal cover code.

The base station may transmit configuration parameters to the UE for a plurality of PUCCH resource sets using, for example, an RRC message. The plurality of PUCCH resource sets (e.g., up to four sets) may be configured on an uplink BWP of a cell. A PUCCH resource set may be configured with a PUCCH resource set index, a plurality of PUCCH resources with a PUCCH resource being identified by a PUCCH resource identifier (e.g., pucch-Resourceid), and/or a number (e.g. a maximum number) of UCI information bits the UE may transmit using one of the plurality of PUCCH resources in the PUCCH resource set. When configured with a plurality of PUCCH resource sets, the UE may select one of the plurality of PUCCH resource sets based on a total bit length of the UCI information bits (e.g., HARQ-ACK, SR, and/or CSI). If the total bit length of UCI information bits is two or fewer, the UE may select a first PUCCH resource set having a PUCCH resource set index equal to "0". If the total bit length of UCI information bits is greater than two and less than or equal to a first configured value, the UE may select a second PUCCH resource set having a PUCCH resource set index equal to "1". If the total bit length of UCI information bits is greater than the first configured value and less than or equal to a second configured value, the UE may select a third PUCCH resource set having a PUCCH resource set index equal to "2". If the total bit length of UCI information bits is greater than the second configured value and less than or equal to a third value (e.g., 1406), the UE may select a fourth PUCCH resource set having a PUCCH resource set index equal to "3".

After determining a PUCCH resource set from a plurality of PUCCH resource sets, the UE may determine a PUCCH resource from the PUCCH resource set for UCI (HARQ-ACK, CSI, and/or SR) transmission. The UE may determine the PUCCH resource based on a PUCCH resource indicator in a DCI (e.g., with a DCI format 1_0 or DCI for 1_1) received on a PDCCH. A three-bit PUCCH resource indicator in the DCI may indicate one of eight PUCCH resources in the PUCCH resource set. Based on the PUCCH resource indicator, the UE may transmit the UCI (HARQ-ACK, CSI and/or SR) using a PUCCH resource indicated by the PUCCH resource indicator in the DCI.

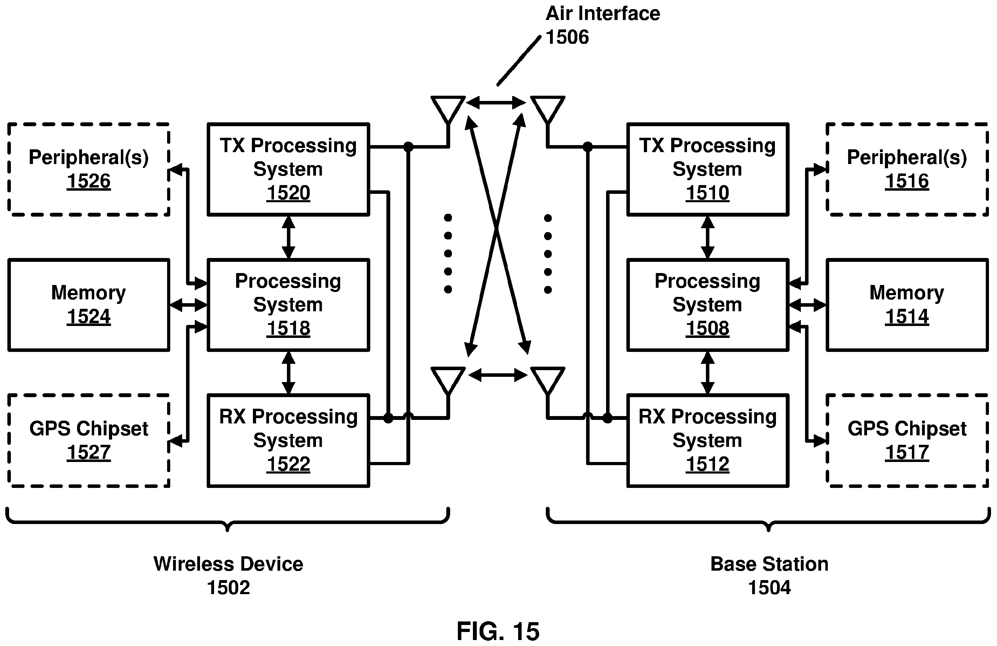

FIG. 15 illustrates an example of a wireless device 1502 in communication with a base station 1504 in accordance with embodiments of the present disclosure. The wireless device 1502 and base station 1504 may be part of a mobile communication network, such as the mobile communication network 100 illustrated in FIG. 1A, the mobile communication network 150 illustrated in FIG. 1B, or any other communication network. Only one wireless device 1502 and one base station 1504 are illustrated in FIG. 15, but it will be understood that a mobile communication network may include more than one UE and/or more than one base station, with the same or similar configuration as those shown in FIG. 15.

The base station 1504 may connect the wireless device 1502 to a core network (not shown) through radio communications over the air interface (or radio interface) 1506. The communication direction from the base station 1504 to the wireless device 1502 over the air interface 1506 is known as the downlink, and the communication direction from the wireless device 1502 to the base station 1504 over the air interface is known as the uplink. Downlink transmissions may be separated from uplink transmissions using FDD, TDD, and/or some combination of the two duplexing techniques.

In the downlink, data to be sent to the wireless device 1502 from the base station 1504 may be provided to the processing system 1508 of the base station 1504. The data may be provided to the processing system 1508 by, for example, a core network. In the uplink, data to be sent to the base station 1504 from the wireless device 1502 may be provided to the processing system 1518 of the wireless device 1502. The processing system 1508 and the processing system 1518 may implement layer 3 and layer 2 OSI functionality to process the data for transmission. Layer 2 may include an SDAP layer, a PDCP layer, an RLC layer, and a MAC layer, for example, with respect to FIG. 2A, FIG. 2B, FIG. 3, and FIG. 4A. Layer 3 may include an RRC layer as with respect to FIG. 2B.

After being processed by processing system 1508, the data to be sent to the wireless device 1502 may be provided to a transmission processing system 1510 of base station 1504. Similarly, after being processed by the processing system 1518, the data to be sent to base station 1504 may be provided to a transmission processing system 1520 of the wireless device 1502. The transmission processing system 1510 and the transmission processing system 1520 may implement layer 1 OSI functionality. Layer 1 may include a PHY layer with respect to FIG. 2A, FIG. 2B, FIG. 3, and FIG. 4A. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

At the base station 1504, a reception processing system 1512 may receive the uplink transmission from the wireless device 1502. At the wireless device 1502, a reception processing system 1522 may receive the downlink transmission from base station 1504. The reception processing system 1512 and the reception processing system 1522 may implement layer 1 OSI functionality. Layer 1 may include a PHY layer with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

As shown in FIG. 15, a wireless device 1502 and the base station 1504 may include multiple antennas. The multiple antennas may be used to perform one or more MIMO or multi-antenna techniques, such as spatial multiplexing (e.g., single-user MIMO or multi-user MIMO), transmit/receive diversity, and/or beamforming. In other examples, the wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518 to carry out one or more of the functionalities discussed in the present application. Although not shown in FIG. 15, the transmission processing system 1510, the transmission processing system 1520, the reception processing system 1512, and/or the reception processing system 1522 may be coupled to a memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and the base station 1504 to operate in a wireless environment.

The processing system 1508 and/or the processing system 1518 may be connected to one or more peripherals 1516 and one or more peripherals 1526, respectively. The one or more peripherals 1516 and the one or more peripherals 1526 may include software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive user input data from and/or provide user output data to the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 and/or the processing system 1518 may be connected to a GPS chipset 1517 and a GPS chipset 1527, respectively. The GPS chipset 1517 and the GPS chipset 1527 may be configured to provide geographic location information of the wireless device 1502 and the base station 1504, respectively.

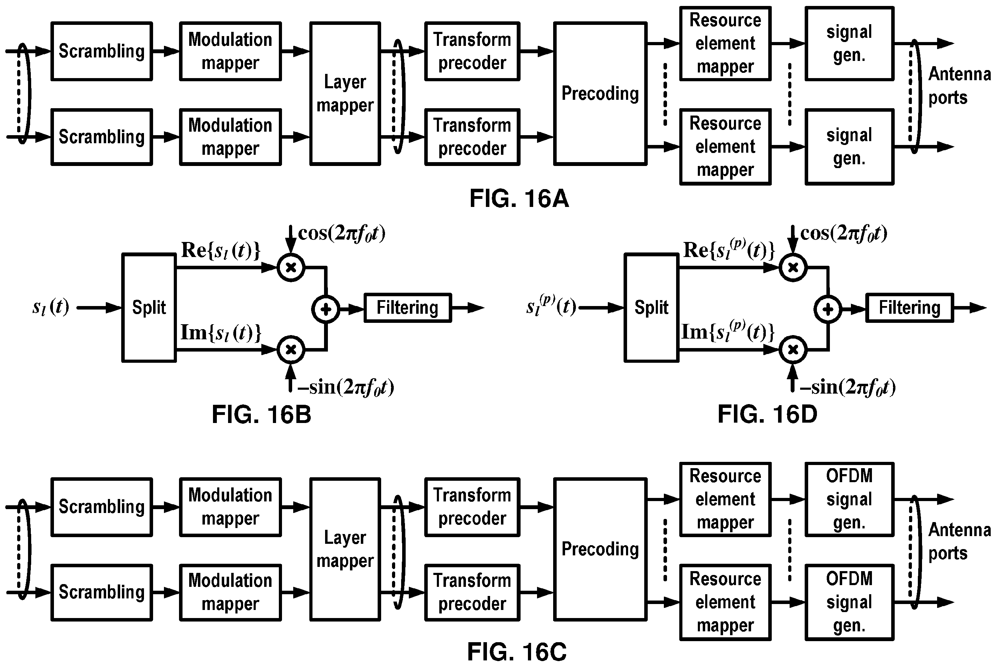

FIG. 16A illustrates an example structure for uplink transmission. A baseband signal representing a physical uplink shared channel may perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA) or CP-OFDM signal for an antenna port; and/or the like. In an example, when transform precoding is enabled, a SC-FDMA signal for uplink transmission may be generated. In an example, when transform precoding is not enabled, an CP-OFDM signal for uplink transmission may be generated by FIG. 16A. These functions are illustrated as examples and it is anticipated that other mechanisms may be implemented in various embodiments.

FIG. 16B illustrates an example structure for modulation and up-conversion of a baseband signal to a carrier frequency. The baseband signal may be a complex-valued SC-FDMA or CP-OFDM baseband signal for an antenna port and/or a complex-valued Physical Random Access Channel (PRACH) baseband signal. Filtering may be employed prior to transmission.

FIG. 16C illustrates an example structure for downlink transmissions. A baseband signal representing a physical downlink channel may perform one or more functions. The one or more functions may comprise: scrambling of coded bits in a codeword to be transmitted on a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are illustrated as examples and it is anticipated that other mechanisms may be implemented in various embodiments.

FIG. 16D illustrates another example structure for modulation and up-conversion of a baseband signal to a carrier frequency. The baseband signal may be a complex-valued OFDM baseband signal for an antenna port. Filtering may be employed prior to transmission.

A wireless device may receive from a base station one or more messages (e.g. RRC messages) comprising configuration parameters of a plurality of cells (e.g. primary cell, secondary cell). The wireless device may communicate with at least one base station (e.g. two or more base stations in dual-connectivity) via the plurality of cells. The one or more messages (e.g. as a part of the configuration parameters) may comprise parameters of physical, MAC, RLC, PCDP, SDAP, RRC layers for configuring the wireless device. For example, the configuration parameters may comprise parameters for configuring physical and MAC layer channels, bearers, etc. For example, the configuration parameters may comprise parameters indicating values of timers for physical, MAC, RLC, PCDP, SDAP, RRC layers, and/or communication channels.

A timer may begin running once it is started and continue running until it is stopped or until it expires. A timer may be started if it is not running or restarted if it is running. A timer may be associated with a value (e.g. the timer may be started or restarted from a value or may be started from zero and expire once it reaches the value). The duration of a timer may not be updated until the timer is stopped or expires (e.g., due to BWP switching). A timer may be used to measure a time period/window for a process. When the specification refers to an implementation and procedure related to one or more timers, it will be understood that there are multiple ways to implement the one or more timers. For example, it will be understood that one or more of the multiple ways to implement a timer may be used to measure a time period/window for the procedure. For example, a random access response window timer may be used for measuring a window of time for receiving a random access response. In an example, instead of starting and expiry of a random access response window timer, the time difference between two time stamps may be used. When a timer is restarted, a process for measurement of time window may be restarted. Other example implementations may be provided to restart a measurement of a time window.

Network Slicing may allow differentiated treatment depending on each customer requirements. A network slice may be referred/called as a network slicing, a slice, a slicing, an S-NSSAI, an NSSAI, and/or the like. With slicing, Mobile Network Operators (MNO) may be able to consider customers as belonging to different tenant types with each having different service requirements that may govern in terms of what slice types each tenant may be eligible to use based on Service Level Agreement (SLA) and subscriptions. NSSAI (Network Slice Selection Assistance Information) may include one or more S-NSSAIs (Single NSSAI). Each network slice may be uniquely identified by a S-NSSAI. A UE may store a Configured and/or Accepted NSSAI per PLMN. The NSSAI can have standard values or PLMN specific values. In an example, for signaling between RAN and CN, a Slice ID is represented by an NSSAI and/or S-NSSAI.

The following key principles may apply for support of Network Slicing in RAN. RAN awareness of slices may mean that RAN may support a differentiated handling of traffic for different network slices which have been pre-configured. How RAN supports the slice enabling in terms of RAN functions (i.e. the set of network functions that comprise each slice) may be implementation dependent. Selection of RAN part of the network slice may mean that RAN may support the selection of the RAN part of the network slice, by one or more slice ID(s) provided by the UE or the CN which may unambiguously identify one or more of the pre-configured network slices in the PLMN. The Accepted NSSAI may be sent by CN to UE and RAN after network slice selection. Resource management between slices may mean that RAN may support policy enforcement between slices as per service level agreements. It may be possible for a single RAN node to support multiple slices. The RAN may be free to apply the best RRM policy for the SLA in place to each supported slice. Support of QoS may mean that RAN may support QoS differentiation within a slice.

RAN selection of CN entity may be supported. For initial attach, the UE may provide one or more slice ID(s). If available, RAN may use the slice ID(s) for routing the initial NAS to an NGC CP function. If the UE does not provide any slice ID(s), the RAN may send the NAS signalling to a default NGC CP function. For subsequent accesses, the UE may provide a Temp ID, which may be assigned to the UE by the NGC, to enable the RAN to route the NAS message to the appropriate NGC CP function as long as the Temp ID is valid (RAN may be aware of and may be able to reach the NGC CP function which may be associated with the Temp ID). Otherwise, the methods for initial attach may apply. Resource isolation between slices may be supported by RAN. RAN resource isolation may be achieved by means of RRM policies and protection mechanisms that may avoid that shortage of shared resources in one slice may break the service level agreement for another slice. It may be possible to fully dedicate RAN resources to a certain slice.

Slice Availability may be dependent on RAN. Some slices may be available only in part of the network. Awareness in a gNB of the slices supported in the cells of its neighbouring gNBs may be beneficial for inter-frequency mobility in connected mode. It may be assumed that the slice configuration may not change within the UE's registration area. The RAN and the CN may be responsible to handle a service request for a slice that may or may not be available in a given area. Admission or rejection of access to a slice may depend by factors such as support for the slice, availability of resources, support of the requested service by other slices. Slice availability in RAN may be handled during mobility. Neighbour gNBs may exchange slice availability on the interface connecting two nodes, e.g. Xn interface between gNBs. The core network may provide the RAN a mobility restriction list. This list may include those TAs (Tracking Areas) which support or do not support the slices for the UE. The slices supported at the source node may be mapped, if possible, to other slices at target node. Examples of possible mapping mechanisms may be one of: mapping by the CN, when there may be naturally a signalling interaction between RAN and CN and performance may be thus not impacted; mapping by the RAN as action following prior negotiation with the CN during UE connection setup; and/or mapping by the RAN autonomously if prior configuration of mapping policies took place at RAN. UE associating with multiple network slices simultaneously may be supported. In case a UE is associated with multiple slices simultaneously, only one signalling connection may be maintained.

In an example, to make mobility slice-aware in case of Network Slicing, Slice ID may be introduced as part of the PDU session information that may be transferred during mobility signalling. This may enable slice-aware admission and congestion control. When a target cell is selected, handover signalling may be initiated. Such procedure may attempt to move PDU Session resources for active slices of the UE from one source node to a target node. The source gNB may need to pass on slices that a UE in question may be using to a target gNB as part of the HO procedure. If a handover procedure involves a NGC (core network node), during such procedure the target AMF (Access and Mobility Management Function, e.g. core network node) may be responsible for aligning the set of slices supported in the new Registration Area between UE and network at NAS level. PDU Sessions that may be associated with the removed slices may be not admitted at target node.

In an example, a core network node may be responsible on validating that the UE has the rights to access a network slice. Prior to receiving the Initial Context Setup Request message, the RAN may be allowed to apply some provisional/local policies, based on awareness of which slice the UE may be requesting access to. The CN may be aware of network slices the UE may belong to. During the initial context setup, the RAN may be informed for network slices for which resources may be requested.

In an example, to respect the key principles for the support of Network Slicing in RAN, slice awareness in RAN may be introduced at PDU session level, by indicating the Slice ID corresponding to the PDU Session. This may imply that: QoS flows within a PDU session may belong to the same network slice; within a slice, QoS differentiation may be supported; connection of a UE to multiple network slices may be supported, as multiple PDU sessions per UE may be able to be established; as a consequence of slice awareness at PDU Session level, user data pertinent to different network slices may not share the same NG-U tunnel; by adding the Slice ID information to the PDU session information, mobility signalling may become also slice-aware and may enable per-slice admission and congestion control.

In an example, following the initial access, the establishment of the RRC connection and the selection of the correct CN instance, the CN may establish the complete UE context by sending the Initial Context Setup Request message to the gNB over NG-C interface. The message may contain the Slice ID as part of the PDU session(s) resource description. Upon successful establishment of the UE context and allocation of PDU resources to the relevant NW slice(s), the RAN may response with the Initial Context Setup Response message.

In an example, when new PDU sessions need to be established or existing ones modified or released, the CN may request the RAN to allocate/release resources relative to the relevant PDU sessions by means of the PDU Session Setup/Modify/Release procedures over NG-C interface. In case of network slicing, Slice ID information may be added per PDU session, so RAN may be enabled to apply policies at PDU session level according to the SLA represented by the network slice, e.g. while still being able to apply differentiated QoS within the slice. RAN may confirm the establishment/modification/release of a PDU session associated to a certain network slice by responding with the PDU Session Setup/Modify/Release Response message over the NG-C interface.

In an example, a network slice may be called as a slice. In an example, a network slice group may be called as a slice group. A network slice group may comprise one or more network slices. Mapping information between a network slice group and one or more network slices may indicate that a network slice group comprises one or more network slices. Mapping information between a network slice group and one or more network slices may comprise an identifier of a network slice group and one or more identifiers of one or more network slices that belongs to the network slice.

In existing technologies, a network slice group may be configured to comprise one or more network slices. A core network device (e.g., AMF, SMF, MME, etc.) may send, to a wireless device (e.g., user equipment, UE), mapping information indicating that a network slice group may be configured to comprise one or more network slices.

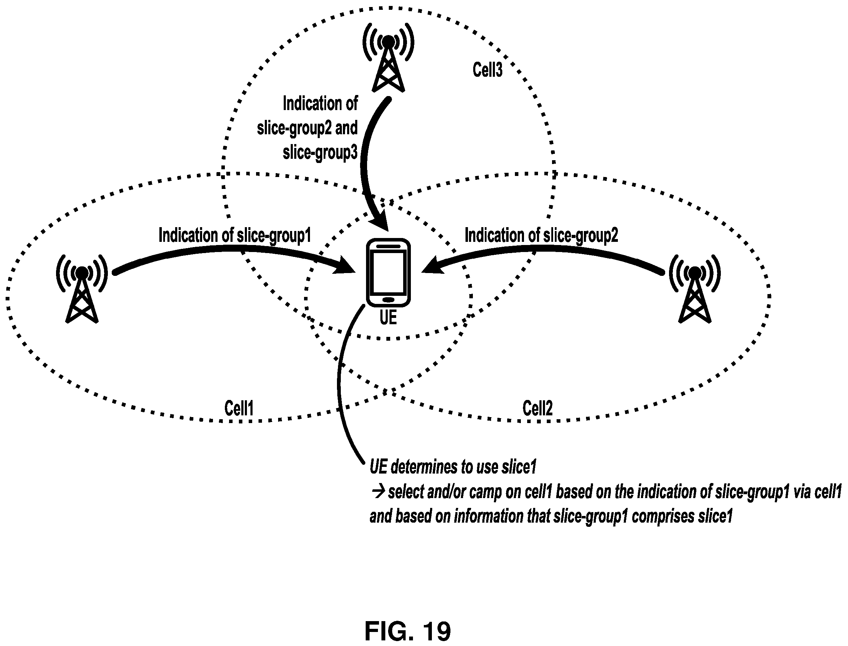

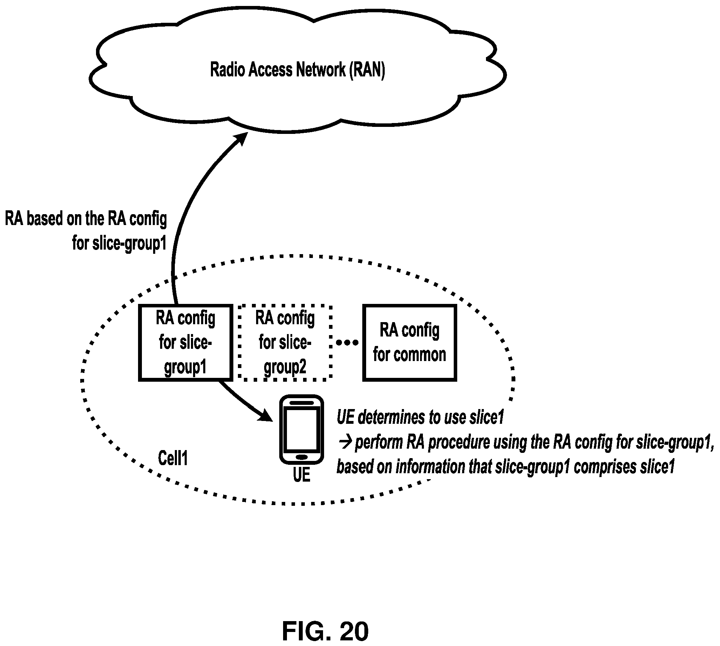

If receiving mapping information indicating that a network slice group comprises a network slice, a wireless device (UE) using the network slice may select a cell based on information that the cell supports the network slice group, as shown in FIG. 19. If receiving mapping information indicating that a network slice group comprises a network slice, a wireless device (UE) using the network slice may perform a random access (RA) procedure based on RA configurations configured for the network slice group, as shown in FIG. 20.

In an example, a wireless device may or may not support/use a function (e.g., function of slice-based cell reselection) of selecting/reselecting a cell based on whether the cell supports a network slice (e.g., and/or network slice group). In an example, a wireless device may or may not support/use a function (e.g., function of slice-based RA) of performing an RA procedure based on RA configurations that are configured for a network slice (e.g., and/or network slice group). A wireless device that does not support/use the function of slice-based cell reselection and/or the function of slice-based RA may not need mapping information between one or more network slices and a network slice group.

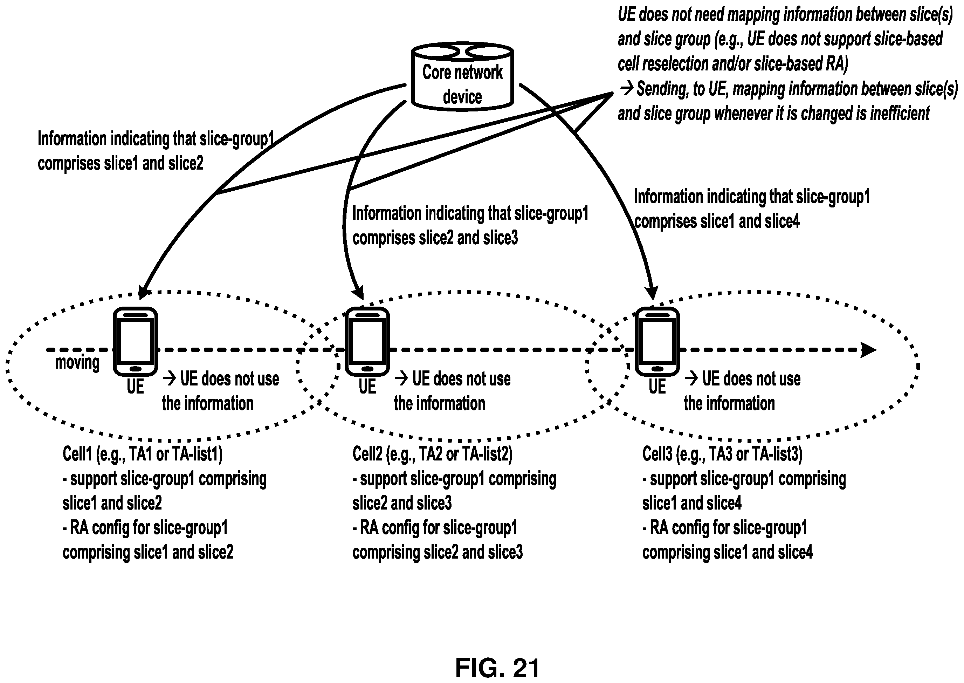

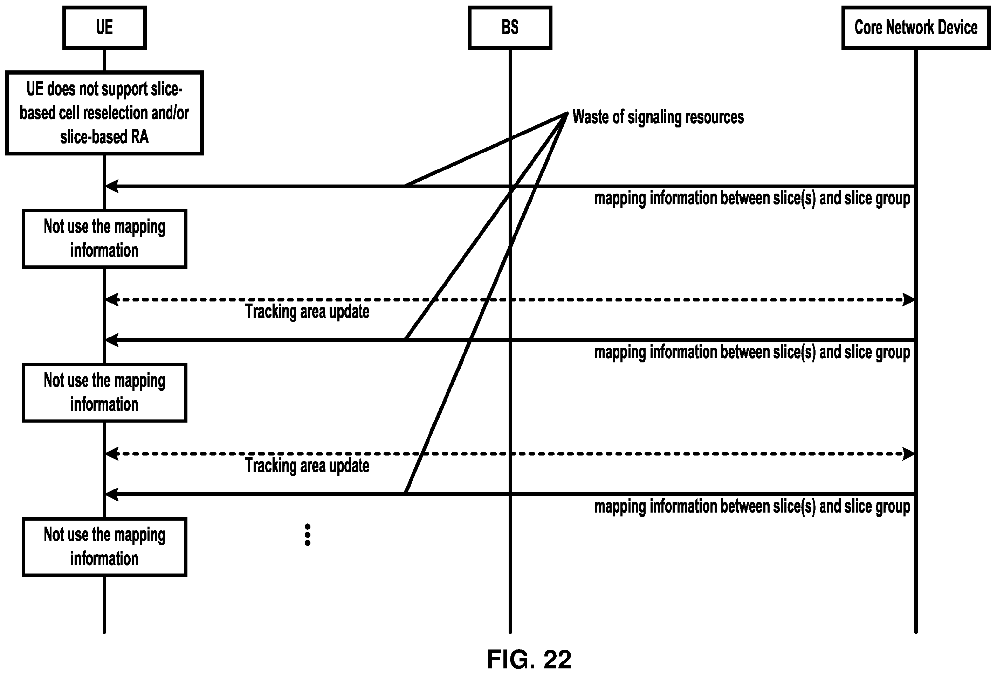

A core network device (e.g., AMF, SMF, MME, etc.) may send mapping information between a network slice group and at least one network slice to a wireless device that does not support/use the function of slice-based cell reselection and/or the function of slice-based RA. Mapping information between a network slice group and at least one network slice may vary in different tracking areas or in different tracking area lists. As shown in FIG. 21 and/or FIG. 22, a core network device (e.g., AMF, SMF, MME, etc.) may send mapping information between a network slice group and at least one network slice to a wireless device (UE) that does not support/use the function of slice-based cell reselection and/or the function of slice-based RA whenever a tracking area and/or a tracking area list of the wireless device is changed. Sending mapping information between a network slice group and at least one network slice to a wireless device that does not need the mapping information increases unnecessary signaling. Existing technologies may increase signaling overhead and may increase inefficient use of network resources.

Example embodiment may support that a wireless device sends to a core network device (e.g., AMF, SMF, MME, etc.) RAN-slicing information indicating whether the wireless device requests/needs/requires mapping information between a network slice group and at least one network slice. The RAN-slicing information may indicate whether the wireless device supports at least one of slice-based cell reselection and/or slice-based random access. Based on the RAN-slicing information, the core network device may determine whether to send, to the wireless device, mapping information between at least one network slice and a network slice group. If a wireless device sends, to a core network device, RAN-slicing information indicating that the wireless device requests/needs/requires mapping information between a network slice group and at least one network slice, the wireless device may receive, from the core network device, the mapping information and/or may use the mapping information to perform slice-based cell reselection and/or slice-based RA procedure. If a wireless device sends, to a core network device, RAN-slicing information indicating that the wireless device does not request/need/require mapping information between a network slice group and at least one network slice, the wireless device may not receive, from the core network device, the mapping information. Example embodiments may reduce signaling overhead and may increase efficient use of network resources.

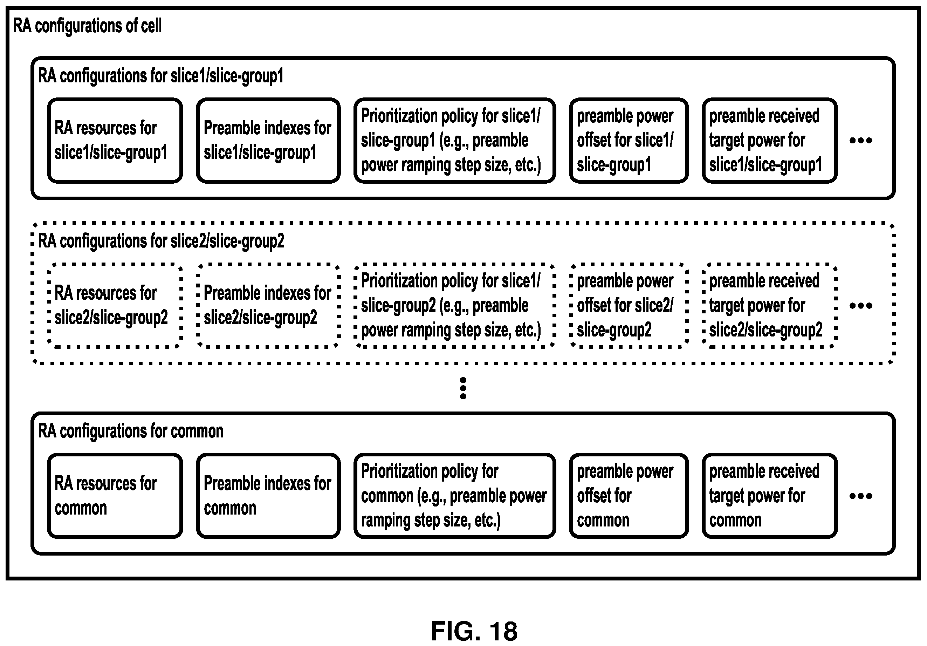

In an example, as shown in FIG. 18, FIG. 19, FIG. 23, and/or FIG. 24, a wireless device (UE) may communicate with a core network device (e.g., AMF, SMF, MME, etc.) via one or more base stations. The core network device may comprise at least one of AMF, SMF, MME, and/or the like.

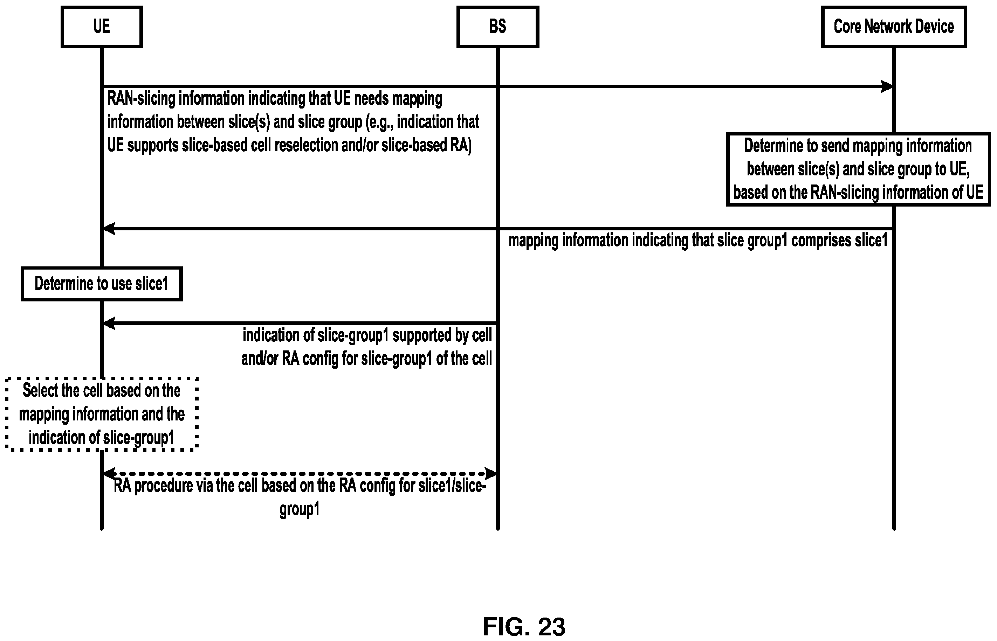

In an example, as shown in FIG. 23, FIG. 25, and/or FIG. 26, the wireless device may send, to the core network device, a first message comprising a first field indicating that the wireless device needs/requires/requests mapping information between a network slice group and at least one network slice. The first message may comprise a second field indicating that the wireless device supports a RAN slicing function comprising at least one of: a slice-based cell reselection, a slice-based random access, and/or the like. The core network device may determine, based on the first message, the first field, and/or the second field, to send mapping information indicating that a first network slice group comprises at least one first network slice. The core network device may send to the wireless device, a second message comprising the mapping information. The wireless device may receive, from the core network device, the second message comprising the mapping information indicating that the first network slice group comprises the at least one first network slice.

In an example, the wireless device may determine to use the at least one first network slice. The wireless device may perform, based on the mapping information, at least one of: prioritizing and selecting a cell based on the cell broadcasting an identifier of the first network slice group (e.g., slice-based cell reselection); sending one or more preambles (e.g., for 4-step RA, 2-step RA, scheduling request, beam failure recovery procedure, etc.) and/or an RRC request message (e.g., for 2-step RA for RRC connection; e.g., RRC setup request, RRC resume request, RRC reestablishment request, etc.) based on first random access (RA) parameters configured for the first network slice group (e.g., slice-based RA); and/or the like.

In an example, the wireless device may send, to the core network device, a first message comprising a first field indicating that the wireless device needs/requires/requests mapping information between a network slice group and at least one network slice. The first message may comprise a second field indicating that the wireless device supports a RAN slicing function comprising at least one of: a slice-based cell reselection, a slice-based random access, and/or the like.

In an example, the first message may comprise a field indicating that the wireless device supports a radio access network (RAN) slicing function. The RAN slicing function may comprise at least one of: a slice-based cell reselection (e.g., when selecting/reselecting a cell to use a network slice, the wireless device prioritizes a cell that broadcasts/sends indication that the cell supports the network slice and/or a network slice group comprising the network slice, as shown in FIG. 19); a slice-based random access (RA) (e.g., to use a network slice, the wireless device performs a random access (RA) procedure based on RA configuration parameters that are configured for the network slice and/or a network slice group comprising the network slice and that may be different than RA configuration parameters for common/general purposes, as shown in FIG. 20); and/or the like.

In an example, the first message may comprise at least one of: at least one identifier (e.g., S-NSSAI, NSSAI, SST, SD, etc.) of the at least one first network slice that the wireless device requests/plans/wants to use and/or that the wireless device is using; at least one identifier (e.g., S-NSSAI, NSSAI, SST, SD, etc.) of at least one second network slice that the wireless device does not request/plan/want to use and/or that the wireless device is not using; and/or the like.

In an example, the first message may comprise at least one of: a field indicating that the wireless device supports/uses one or more first network slices (e.g., the field may be one or more identifiers of the one or more first network slice); a field indicating that the wireless device does not support/use one or more second network slices (e.g., the field may be one or more identifiers of the one or more second network slice); and/or the like.

In an example, the first message may comprise a field indicating that the wireless device supports/uses one or more first network slices in a coverage area of at least one of: a cell, a list of cells, a tracking area, a list of tracking areas, a registration area, a list of registration areas, and/or the like. In an example, the first message may comprise a field indicating that the wireless device does not support/use one or more second network slices in a coverage area of at least one of: a cell, a list of cells, a tracking area, a list of tracking areas, a registration area, a list of registration areas, and/or the like.

In an example, the first message may comprise a field indicating that an area where the wireless device locates supports one or more first network slices. The area where the wireless device locates may be a coverage area of at least one of: a cell, a list of cells, a tracking area, a list of tracking areas, a registration area, a list of registration areas, and/or the like. In an example, the first message may comprise a field indicating that an area where the wireless device locates does not support one or more second network slices. The area where the wireless device locates may be a coverage area of at least one of: a cell, a list of cells, a tracking area, a list of tracking areas, a registration area, a list of registration areas, and/or the like.

The method of claim 1, wherein the first message may comprise a field (e.g., information element of Additional information requested) indicting that the wireless device needs/requires/requests mapping information between a network slice group and at least one network slice.

Example format of Additional information requested information element:

| 8 | 7 | 6 | 5 | 4 | 3 | 2 | 1 | |
|---|---|---|---|---|---|---|---|---|
| Additional information requested IEI | | | | | | | | octet 1 |
| Length of additional information requested contents | | | | | | | | octet 2 |
| 0 | 0 | 0 | 0 | 0 | 0 | Slice mapping info | Cipher Key | octet 3 |
| Spare | | | | | | | | |

| Ciphering keys for ciphered broadcast assistance data (CipherKey) (octet 3, bit 1) | | | |
|---|---|---|---|
| Bit | | | |
| 1 | | | |
| 0 | | | ciphering keys for ciphered broadcast assistance data not requested |
| 1 | | | ciphering keys for ciphered broadcast assistance data requested |
| | | | |
| Ciphering keys for ciphered broadcast assistance data (CipherKey) (octet 3, bit 2) | | | |
| Bit | | | |
| 2 | | | |
| 0 | | | mapping information between a network slice group and at least one network slice not requested |
| 1 | | | mapping information between a network slice group and at least one network slice requested |
| | | | |
| Bits 8 to 3 of octet 3 are spare and shall be coded as zero. | | | |

In an example, the first message may comprise at least one of: an identifier (e.g., TMSI, IMSI, IMEI, etc.) of the wireless device; an identifier indicating a cell where the wireless device locates; an identifier indicating a tracking area (TA) where the wireless device locates; an identifier indicating a list of TAs where the wireless device locates; an identifier indicating a registration area where the wireless device locates; and/or the like.

In an example, the first message may comprise at least one of: a registration request message, a service request message, and/or the like. In an example, the first message may be at least one of: a non-access stratum (NAS) layer message; a mobility management NAS (MM-NAS); a session management NAS (SM-NAS); and/or the like.

In an example, the sending the first message may comprise sending the first message via one or more base stations. In an example, the wireless device may send, to one or more base stations, an uplink RRC message comprising the first message. The uplink RRC message may comprise at least one of: a RRC setup request/complete message, a RRC resume request/complete message, a RRC reestablishment request/complete message, a RRC reconfiguration request/complete message, a RRC uplink information transfer message, and/or the like. The one or more base stations may send, to the core network device, an uplink transfer message comprising the first message. The uplink transfer message may comprise at least one of: an N2/NG interface message; an S1 interface message; an initial user equipment (UE) message; an uplink non-access stratum (NAS) transport message; and/or the like.

In an example, the wireless device may send, to one or more base stations, an RRC user equipment (UE) capability information message comprising at least one of: an access stratum (AS) capability field indicating that the wireless device supports a slice-based cell reselection; an AS capability field indicating that the wireless device supports a slice-based random access (RA); and/or the like. AS capability fields may indicate capability information associated with communication between a base station (e.g., RAN) and a wireless device. NAS capability fields may indicate capability information associated with communication between a core network device (e.g., MM-NAS for AMF, SM-NAS for SMF, etc.) and a wireless device. Information elements (e.g., fields, parameters, configurations, etc.) included in a NAS layer message may be associated with communication between a core network device (e.g., MM-NAS for AMF, SM-NAS for SMF, etc.) and a wireless device.

In an example, the core network device may determine, based on the first message, the first field, and/or the second field, to send mapping information indicating that a first network slice group comprises at least one first network slice.

In an example, the core network device may send to the wireless device, a second message comprising the mapping information. The wireless device may receive, from the core network device, the second message comprising the mapping information indicating that the first network slice group comprises the at least one first network slice.

In an example, the second message may comprise at least one of: a registration accept message; a service accept message, a configuration update command message, and/or the like.

In an example, the second message may be at least one of: a non-access stratum (NAS) layer message; a mobility management NAS (MM-NAS); a session management NAS (SM-NAS).

In an example, the receiving the second message comprises receiving the second message via one or more base stations. In an example, one or more base stations may receive, from the core network device, a downlink transfer message comprising the second message. The downlink transfer message may comprise at least one of: an N2/NG interface message; an S1 interface message; a protocol data unit (PDU) session resource setup request message; a PDU session resource release command message; a PDU session resource modify request message; an initial context setup request message; a handover command message; a handover request message; a downlink non-access stratum (NAS) transport message; and/or the like. The wireless device may receive, from the one or more base stations, a downlink RRC message comprising the second message. The downlink RRC message may comprise at least one of: a RRC reconfiguration message, an RRC release message, an RRC setup message, an RRC resume message, an RRC reestablishment message, an RRC downlink information transfer message, and/or the like.

In an example, the second message may comprise at least one identifier of at least one tracking area (e.g., a TA, a list of TAs, a registration area, etc.) where the mapping information is valid/applicable.

In an example, the mapping information may comprise at least one of: an identifier/index indicating the first network slice group comprising the at least one first network slice; at least one identifier/index indicating the at least one first network slice; and/or the like.

In an example, the wireless device may determine to use the at least one first network slice. The wireless device may perform, based on the mapping information, prioritizing and selecting a cell based on the cell broadcasting an identifier of the first network slice group (e.g., slice-based cell reselection).

In an example, as shown in FIG. 19, the wireless device may determine to use the at least one first network slice. The wireless device may select and/or camp on a cell that broadcasts/sends an identifier of the first network slice group, based on at least one of: the mapping information indicating that the first network slice group comprises the at least one first network slice; prioritizing the cell based on receiving via the cell (e.g., and/or via at least one system information block of the cell) the identifier of the first network slice group; and/or the like. The wireless device may transmit/receive one or more packets associated with the at least one first network slice via the cell.

In an example, the wireless device may determine to use the at least one first network slice. The wireless device may perform, based on the mapping information, sending one or more preambles (e.g., for 4-step RA, 2-step RA, scheduling request, beam failure recovery procedure, etc.) and/or an RRC request message (e.g., for 2-step RA for RRC connection; e.g., RRC setup request, RRC resume request, RRC reestablishment request, etc.) based on first random access (RA) parameters configured for the first network slice group (e.g., slice-based RA); and/or the like.

In an example, as shown in FIG. 20, the wireless device may determine to use the at least one first network slice. The wireless device may receive first random access (RA) configurations (e.g., first RA parameters) configured for the first network slice group. The wireless device may send, based on the mapping information, one or more preambles (e.g., for a 4-step RA, a 2-step RA, a scheduling request, a beam failure recovery procedure, etc.) and/or an RRC request message (e.g., RRC setup/resume/reestablishment request for 2-step RA) for an RA procedure based on the first RA configurations (e.g., the first RA parameters) configured for the first network slice group. The RA procedure may be for at least one of: accessing (e.g., initial access, handover to the cell, reestablishment to the cell, access secondary cell, access secondary cell group, etc.) the cell to use the at least one first network slice; a scheduling request for at least one radio resource (to transmit at least one packet and/or at least one transport block associated with the at least one first network slice); a beam failure recovery procedure for the cell to use the at least one first network slice; and/or the like. The wireless device may transmit/receive, based on the RA procedure, one or more packets associated with the at least one first network slice via the cell.

In an example, the wireless device may determine that the wireless device is at least one second tracking area (e.g., a list of TAs, a TA, a registration area, etc.) different than at least one first tracking area (e.g., a list of TAs, a TA, a registration area, etc.) where the wireless device receives the mapping information from the core network device. Based on the determining that the wireless device is at least one second tracking area, the wireless device may send, to a second core network device, a second message indicating that the wireless device needs/requires/requests mapping information between a network slice group and at least one network slice. The second core network device may be the core network device that sent the mapping information to the wireless device.

In an example, a wireless device may receive, from a core network device, slice information indicating that a network slice group comprises one or more network slices. The wireless device may select a cell broadcasting an identifier of the network slice group, based on the network slice group comprising a network slice that the wireless device needs. In an implementation of existing technologies, a core network device and a base station may have different mapping information between a network slice group and a network slice. A wireless device (UE) may receive, from a core network device (AMF), slice information indicating that a network slice group (slice-group1) comprises one or more network slices (slice1, slice2, slice3). The wireless device may select a cell (cell1) broadcasting an identifier of the network slice group to use one (slice1) of the one or more network slices. A base station (BS1) broadcasting the identifier of the network slice group via the cell (cell1) may determine the network slice group to comprise a different set of network slices (slice2, slice3, slice4). When the wireless device accesses the cell (cell1) to use the one (slice1) of the one or more network slices, the cell may not support the network slice that the wireless device needs to use. Accessing a cell that does not support a desired network slice based on misalignment on mapping information between a network slice group and a network slice may increase service interruption and delay of wireless devices. An implementation of existing technologies may decrease service reliability and increase inefficient signaling.

Example embodiments may support that a core network device sends to a base station slice information (e.g., mapping information) indicating that a network slice group comprises one or more network slices. Example embodiments may support that a base station sends to a core network device slice information (e.g., mapping information) indicating that a network slice group comprises one or more network slices. Based on communicating by a base station with a core network device information of mapping between a network slice group and a network slice, the base station may determine a network slice group to comprise a same set of network slices as the core network device determines. Based on example embodiments, a base station and a core network device may have same information on mapping between a network slice group and a network slice. In an implementation of example embodiments, a wireless device may access a cell that supports a desired network slice, based on a network slice group indicated via the cell from a base station comprising a same set of network slices as indicated in mapping information between the network slice group and network slices received from a core network device. Example embodiments may increase service reliability and decrease inefficient signaling.

In an example, a wireless device may receive, from a base station, information of a cell indicating an identifier of a network slice group and/or random access configurations configured to access the cell for a network slice. Based on a network slice group comprising the network slice, the wireless device may determine to use the random access configurations, which is configured for the network slice, to access a different network slice of the network slice group. In an implementation of existing technologies, a distributed unit of a base station may determine separate random access configurations for different network slices belonging to a same network slice group. A wireless device (UE) may receive, from a central unit of a base station (BS-CU), information of a cell (cell1) comprising an identifier of a network slice group (slice-group1) and/or first random access configurations configured to access the cell for a first network slice (slice1). To access the cell (cell1) for a second network slice (slice2), the wireless device (UE) may determine to use the first random access configurations, which are configured for the first network slice, based on the network slice group (slice-group1) comprising the first network slice (slice1) and the second network slice (slice2). When the wireless device attempts to access the cell (cell1) based on the first random access configurations to use the second network slice (slice2), a distributed unit of the base station (BS-DU) may misunderstand as the wireless device needs to use the first network slice (slice1) if the distributed unit of the base station configured different random access configurations (second random access configurations) for the second network slice, and/or the random access attempt of the wireless device may not be successful. Existing technologies may increase misalignment of random access configurations for network slices between a distributed unit of a base station and a wireless device. An implementation of existing technologies may decrease service reliability and increase inefficient signaling.

Example embodiments may support that a central unit of a base station sends to a distributed unit of the base station slice information (e.g., mapping information) indicating that a network slice group comprises one or more network slices. Example embodiments may support that a distributed unit of a base station sends to a central unit of the base station slice information (e.g., mapping information) indicating that a network slice group comprises one or more network slices. Based on communicating by a distributed unit of a base station with a central unit of the base station the information of mapping between a network slice group and a network slice, the distributed unit of the base station may determine random access configurations that are used to access a cell for the network slice group. Based on example embodiments, a wireless device may use random access configurations configured for a network slice group to access a cell, and/or a distributed unit of a base station may understand that the wireless device needs to use at least one network slice of the network slice group based on the random access configurations that the wireless device uses to access the cell. Example embodiments may increase service reliability and decrease inefficient signaling.

In an example, a wireless device (UE) may communicate with a base station (BS1; e.g., gNB, eNB, BS, nodeB, etc.). The base station may comprise a central unit (CU) of the base station (BS-CU; e.g., gNB-CU, base station central unit, eNB-CU, etc.) and/or one or more distributed units (DUs) comprising a distributed unit of the base station (BS-DU; e.g., gNB-DU, base station distributed unit, eNB-DU, etc.). In an example, the CU of the base station may comprise a CU control plane (CU-CP) and a CU user plane (CU-UP). The wireless device may directly communicate with the DU of the base station via wireless channels of one or more cells comprising a cell (Cell1). The wireless device may communicate with the CU (e.g., the CU-CP and/or the CU-UP) of the base station via the one or more DUs comprising the DU of the base setation.

In an example, the DU of the base station and the CU of the base station may be connected to each other via at least one F1 interface comprising an F1 control plane interface (F1-C) and/or an F1 user plane interface (F1-U). The DU of the base station may communicate with the CU-CP of the base station via the F1 control plane interface (F1-C). The DU of the base station may communicate with the CU-UP of the base station via the F1 user plane interface (F1-U). The CU-CP of the base station may communicate with the CU-UP of the base station via an E1 interface.

In an example, the base station (e.g., the CU of the base station, the CU-CP of the base station, and/or the CU-UP of the base station) may be connected to a core network device (e.g., core network node; core network control plane: access and mobility management function (AMF), session management function (SMF), mobility management entity (MME); and/or core network user plane: user plane function (UPF), serving gateway (S-GW)). In an example, the base station (e.g., the CU of the base station, the CU-CP of the base station, and/or the CU-UP of the base station) may be connected to a plurality of neighboring base stations via an Xn interface or an X2 interface. The wireless device may communicate with the core network device via one or more non-access stratum (NAS) messages. The one or more NAS message may be transmitted via one or more base stations comprising the base station.

In an example, the base station may receive, from the core network device, slice information comprising: one or more network slice identifiers indicating one or more network slices; a network slice group identifier of a network slice group; an indication that the network slice group comprises the one or more network slices; and/or the like. The base station may send/broadcast, to the wireless device and based on the slice information, an RRC information message comprising the network slice group identifier. In an example, the central unit of the base station may receive, from the distributed unit of the base station, the slice information. The base station and/or the central unit of the base station may send/broadcast, to the wireless device, the RRC information message comprising the network slice group identifier. In an example, the RRC information message may be transmitted/broadcasted via a cell of the base station supporting the network slice group. The wireless device may select and/or access the cell to use the one or more network slices of the network slice group, based on the RRC information message comprising the network slice group identifier of the network slice group.

In an example, the base station may determine random access parameters for a random access of the wireless device associated with the network slice group (e.g., based on the slice information). In an example, the determining by the base station the random access parameters associated with the network slice group may comprises communication between the distribution unit of the base station from the central unit of the base station. The distributed unit of the base station may receive, from the central unit of the base station, the slice information. The distributed unit of the base station may determine the random access parameters for the random access of the wireless device associated with the network slice group. The distributed unit of the base station may send, to the central unit of the base station, the random access parameters. The base station and/or the central uni of the base station may send, to the wireless device, an RRC configuration message comprising the random access parameters associated with the network slice group. The base station and/or the distributed unit of the base station may receive from the wireless device, one or more random access preambles (e.g., a preamble indicated by a preamble index in the random access parameters) for the random access based on the random access parameters (e.g., receiving the one or more random access preambles via random access resources indicated in the random access parameters).

In an example, the base station may receive, from the core network device, the slice information comprising: the one or more network slice identifiers indicating the one or more network slices; the network slice group identifier of the network slice group; the indication that the network slice group comprises the one or more network slices; and/or the like. In an example, the core network device may comprise at least one of: an access and mobility management function (AMF); a mobility management entity (MME); a session management function (SMF); a serving gateway (SGW); a packet data network gateway (PGW); a network slice selection function (NSSF); an operations, administration, and maintenance (OAM); and/or the like. In an example, the receiving the slice information by the base station from the core network device may comprise receiving the slice information via at least one of: an interface setup response message; a core network device configuration update message; an access network configuration update message; an access network configuration transfer message; a session resource setup/modify request message; and/or the like.

In an example, the central unit of the base station may receive, from the distributed unit of the base station, the slice information. The central unit of the base station may receive the slice information from the distributed unit of the base station via one or more F1 interface messages (e.g., the F1 interface) comprising at least one of: an interface setup request message; a base station distributed unit configuration update message; and/or the like.

In an example, the one or more network slices of the network slice group may comprise at least one of: an enhanced mobile broadband (eMBB); ultra-reliable low latency communications (URLLC); massive internet of things (MIoT); vehicle-to-everything (V2X) services; high-performance machine-type communications (HMTC); and/or the like.

In an example, the one or more network slices of the network slice group may comprise a first network slice and/or a second network slice. In an example, a network slice identifier indicating a network slice of the one or more network slices may comprise at least one of: a network slice selection assistance information (NSSAI); a single-NSSAI (S-NSSAI) comprising at least one of a slice service type (SST) and/or a slice differentiator (SD); a service identifier; and/or the like.

In an example, the slice information may comprise at least one of: an indication that the network slice group is associated with at least one public land mobile network (PLMN); at least one PLMN identifier of the at least one PLMN; and/or the like. In an example, the slice information may comprise priority information of the network slice group. The priority information may indicate at least one of: a priority level of the network slice group; the network slice group has higher priority than a second network slice group; the network slice group has lower priority than a second network slice group; and/or the like.

In an example, based on the slice information received from the core network device and/or the distributed unit of the base station, the base station and/or the central unit of the base station may send/broadcast, to the wireless device, the RRC information message comprising the network slice group identifier of the network slice group. In an example, the RRC information message from the base station to the wireless device may comprise at least one of: a system information block; an RRC reestablishment complete message; an RRC resume message; an RRC setup message; an RRC reconfiguration message; and/or the like. In an example, the sending the RRC information message may comprise sending the RRC information message via the cell that supports the network slice group and the one or more network slices.

In an example, the RRC information message may comprise at least one of: an indication that a cell of the base station supports the network slice group; an indication that a second cell of the base station does not supports the network slice group; an indication that a normal uplink of the cell of the base station supports the network slice group and/or the one or more network slices (e.g., indication that a supplementary uplink of the cell does not support the network slice group and/or the one or more network slices); an indication that a supplementary uplink of the cell of the base station supports the network slice group and/or the one or more network slices (e.g., indication that a normal uplink of the cell does not support the network slice group and/or the one or more network slices); and/or the like.

In an example, the RRC information message may comprise a second network slice group identifier of a second network slice group comprising one or more second network slices.

In an example, the wireless device may select the cell based on the RRC information message comprising the network slice group identifier of the network slice group. In an example, the wireless device may select the cell based on the network slice group comprising a first network slice that the wireless device needs. The base station may receive, from the wireless device via the cell, at least one of: an RRC setup/reestablishment/resume request; a random access preamble for a random access to the cell; and/or the like. The base station may communicate, with the wireless device via the cell, packets and/or transport blocks associated with the one or more network slices (e.g., the first network slice that the wireless device needs) of the network slice group. The base station may transmit/receive, to/from the wireless device via the cell, packets and/or transport blocks associated with the one or more network slices and/or the network slice group.

In an example, the base station may determine random access parameters for a random access of the wireless device associated with the network slice group (e.g., based on the slice information). In an example, the determining by the base station the random access parameters associated with the network slice group may comprises communication between the distribution unit of the base station from the central unit of the base station. The distributed unit of the base station may receive, from the central unit of the base station, the slice information. The distributed unit of the base station may determine the random access parameters for the random access of the wireless device associated with the network slice group. The distributed unit of the base station may send, to the central unit of the base station, the random access parameters. Wireless devices accessing the cell to use at least one of the one or more network slices of the network slice group may use the random access parameters.

In an example, the random access parameters may comprise at least one of: information (e.g., index) of one or more random access preambles; one or more resources (e.g., PRACH resources) for transmission of the one or more random access preambles; and/or the like. The random access parameters may comprise at least one of: first random access configurations for a normal uplink; second random access configurations for a supplementary uplink; and/or the like. The random access parameters comprise at least one of: third random access configurations to access for a small data transmission (SDT) procedure; fourth random access configurations to setup/reestablish/resume an RRC connection; and/or the like.

In an example, the base station may send, to the wireless device, an RRC configuration message comprising the random access parameters associated with the network slice group.

The RRC configuration message may comprise at least one of: a system information block; an RRC reestablishment complete message; an RRC resume message; an RRC setup message; an RRC reconfiguration message; and/or the like.

In an example, the RRC configuration message may comprise second random access parameters associated with the second network slice group comprising the one or more second network slices.

In an example, the base station and/or the distributed unit of the base station may receive from the wireless device, one or more random access preambles for the random access based on the random access parameters. The base station and/or the distributed unit of the base station may receive from the wireless device, one or more random access preambles (e.g., a preamble indicated by a preamble index in the random access parameters) for the random access based on the random access parameters (e.g., receiving the one or more random access preambles via random access resources indicated in the random access parameters). The wireless device that needs to use the one or more network slices of the network slice group may select the cell and/or may transmit, via the cell, the one or more random access preambles (e.g., indicated by a preamble index in the random access parameters) for the random access based on the random access parameters (e.g., transmit the one or more random access preambles via the random access resources indicated in the random access parameters).

In an example, the base station may send to the core network device, an information element indicating that the base station and/or a cell of the base station supports the network slice group. The information element from the base station to the core network device may comprise the network slice group identifier of the network slice group. The base station may receive, from the core network device, a message for a second wireless device that uses/requests/needs the one or more network slices of the network slice. The message for the second wireless device may be based on the information element from the base station to the core network device. The message for the second wireless device may comprise at least one of: a paging message for data associated with the one or more network slices of the one network slice group; a session resource setup/modify request message for a session (e.g., PDU session, QoS flow, bearer, packet flow, etc.) associated with the one or more network slices of the one network slice group.

In an example, the base station may send, to a second base station, cell information indicating that a cell of the base station supports the network slice group. The cell information from the base station to the second base station may comprise the network slice group identifier of the network slice group. The base station may receive, from the second base station, a message for a second wireless device that uses/requests/needs the one or more network slices of the network slice. The message from the second base station to the base station may be based on the cell information from the base station to the second base station. The message from the second base station to the base station may comprise at least one of: a paging message (e.g., RAN paging message) for data associated with the one or more network slices of the one network slice group; a handover request message; a secondary node addition/modification request message indicating a session associated with the one or more network slices of the one network slice group; and/or the like. In an example, the cell information from the base station to the second base station may comprise at least one of: an indication that a cell of the base station supports the network slice group; an indication that a second cell of the base station does not supports the network slice group; an indication that a normal uplink of the cell of the base station supports the network slice group and/or the one or more network slices (e.g., indication that a supplementary uplink of the cell does not support the network slice group and/or the one or more network slices); an indication that a supplementary uplink of the cell of the base station supports the network slice group and/or the one or more network slices (e.g., indication that a normal uplink of the cell does not support the network slice group and/or the one or more network slices); and/or the like.

In an example, the core network device may receive, from the base station, the slice information comprising: the one or more network slice identifiers indicating the one or more network slices; the network slice group identifier of the network slice group; and an indication that the network slice group comprises the one or more network slices. The core network device may send, to the wireless device and based on the slice information, a non-access stratum (NAS) message comprising the slice information.

In an example, the distribution unit of the base station may receive, from the central unit of the base station, the slice information comprising: the one or more network slice identifiers indicating the one or more network slices; the network slice group identifier of the network slice group; and an indication that the network slice group comprises the one or more network slices. The distributed unit of the base station may determine the random access parameters for the random access of the wireless device associated with the network slice group. The distributed unit of the base station may send, to the central unit of the base station, the random access parameters. In an example, the central unit of the base station may send the random access parameters to the wireless device. In an example, the base station and/or the distributed unit of the base station may receive, from the wireless device, the one or more random access preambles for the random access based on the random access parameters.

In an example, the central unit of the base station may receive, from the distributed unit of the base station, the slice information comprising: the one or more network slice identifiers indicating the one or more network slices; the network slice group identifier of the network slice group; and an indication that the network slice group comprises the one or more network slices. The central unit of the base station may send/broadcast, to the wireless device, the RRC information message comprising the network slice group identifier. In an example, the sending the RRC information message by the central unit of the base station may comprise sending the RRC information message via the cell that supports the network slice group and the one or more network slices.

In an example, a cell may be configured with separate random access (RA) parameters for at least one network slice (e.g., to provide prioritized access to the cell for wireless devices using the at least one network slice). A wireless device that uses the at least one network slice may perform RA procedure via the cell based on the RA parameters configured for the at least one network slices, the RA parameters different than parameters for RA procedures of wireless devices that use common/general services. In existing technologies, a wireless device may perform RA procedures via a cell and report the information of the RA procedures, which may be failed or successful, to a radio access network (RAN). A base station of the RAN that serves/operates the cell may adjust RA parameters based on the reported information of the RA procedures, for example, to improve RA performances of wireless devices on the cell. In an implementation of existing technologies, an RA report for RA procedures of a wireless device (UE) comprises cell-based information comprising an identifier of a cell (cell1) where an RA procedure was performed, beam information (e.g., SSB, CSI-RS, etc.) of the cell, information of preamble transmissions via the cell, and/or the like. A base station (RAN) receiving an RA report comprising cell-based information of RA procedures may consider that RA parameters configured for common/general services are not proper when a wireless device performed the RA procedures based on RA parameters configured for at least one network slice (slice1/slice-group1) to use the at least one network slice after accessing the cell, and/or may adjust RA parameters based on the consideration. Considering that RA parameters for common/general services are not proper when an RA procedure performed based on RA parameters configured for at least one network slice was unsuccessful may increase inappropriate RA configurations. Existing technologies may increase improper RA configuration and/or may decrease random access reliability of wireless devices.

Example embodiments may support that a wireless device sends to a base station an RA report comprising information of at least one network slice (e.g., network slice, network slice group, etc.) associated with a RA procedure and/or information of RA parameters configured for at least one network slice. In an implementation of example embodiments, a base station (RAN) receiving an RA report comprising information of at least one network slice (slice1/slice-group1; e.g., network slice, network slice group, etc.) associated with a RA procedure and/or information of RA parameters configured for the at least one network slice may determine that RA parameters of a corresponding cell (cell1) for the at least one network slice are proper or improper depending on whether the reported RA procedure was successful or unsuccessful and/or may update/adjust RA parameters of the corresponding cell if needed. Example embodiments may increase proper RA configuration and/or may increase random access reliability of wireless devices.

In an example, the wireless device may receive, from the first base station, configuration parameters of the cell. The configuration parameters may comprise: first RA parameters for at least one first network slice, and second RA parameters for one or more purposes (e.g., one or more services) other than the at least one first network slice. Based on the first RA parameters, the wireless device may transmit one or more RA preambles for an RA procedure via the cell to use the at least one first network slice. The wireless device may transmit, to the second base station (e.g., and/or to the first base station), an RA report of the RA procedure. The RA report may indicate the at least one first network slice. In an example, the first base station may be the second base station. If the first base station is different than the second base station, the second base station may send the RA report to the first base station. The first base station may determine RA parameters of the cell based on the RA report. The first base station may transmit/broadcast/multicast, to one or more second wireless devices, the RA parameters of the cell.

In an example, the wireless device may receive, from the first base station, the configuration parameters of the cell. The configuration parameters may comprise the first RA parameters for the at least one first network slice and the second RA parameters for the one or more purposes (e.g., the one or more services) other than the at least one first network slice. In an example, the one or more purposes other than the at least one first network slice (e.g., and/or other than at least one another network slice configured with separate RA parameters) may be called as at least one of: common, common purpose, general, general purpose, and/or the like.

In an example, the receiving the configuration parameters of the cell may comprise receiving, via the cell, at least one system information block (SIB) comprising the configuration parameters of the cell. In an example, the receiving the configuration parameters of the cell may comprise receiving a RRC message comprising the configuration parameters of the cell. The RRC message may comprise at least one of: an RRC release message indicating that the wireless device transitions to an RRC inactive state or an RRC idle state; an RRC reconfiguration/setup message; and/or the like.

In an example, the first RA parameters for the at least one first network slice may comprise at least one of: at least one network slice identifier (e.g., S-NSSAI, NSSAI, etc.) of the at least one first network slice; at least one network slice group identifier of a first network slice group comprising the at least one first network slice; and/or the like.

In an example, the first RA parameters for the at least one first network slice may comprise at least one of: a field indicating first RA resources configured for the at least one first network slices; first preamble indexes configured for the at least one first network slices; first prioritization parameters (e.g., power ramping step for high priority, scaling factor backoff indicator, etc.) configured for the at least one first network slices; a field indicating a first preamble transmission power ramping step size configured for the at least one first network slices; a field indicating a first preamble transmission power offset configured for the at least one first network slices; a field indicating a first preamble received target power configured for the at least one first network slices; a field indicating a first maximum number of preamble transmissions configured for the at least one first network slices; a field indicating a RA response window size configured for the at least one first network slices; a first PRACH configuration index configured for the at least one network slices; an first RA contention resolution timer value configured for the at least one first network slices; a first PRACH root sequence index configured for the at least one first network slices; a field indicating an first SSB RSRP threshold configured for the at least one first network slices; a field indicating an first SUL SSB RSRP threshold configured for the at least one first network slices; a field indicating a first message1 subcarrier spacing configured for the at least one first network slices; a field indicating a first bandwidth part configured for the at least one first network slices; and/or the like.

| Examples of the first RA parameters |
|---|
| **first messagePowerOffsetGroupB**<br>Threshold for preamble selection. Value is in dB. Value *minusinfinity* corresponds to -infinity. Value *dB0* corresponds to 0 dB, dB5 corresponds to 5 dB and so on. |
| **first msg1-SubcarrierSpacing**<br>Subcarrier spacing of PRACH. Only the values 15 or 30 kHz (FR1), and 60 or 120 kHz (FR2) are applicable. If absent, the UE applies the SCS as derived from the *prach-Configurationindex* in *RACH-ConfigGeneric.* The value also applies to contention free random access (*RACH-ConfigDedicated*)*,* to SI-request and to contention-based beam failure recovery (CB-BFR). But it does not apply for contention free beam failure recovery (CF-BFR) (see *BeamFailureRecoveryConfig*). |
| **first msg3-transformPrecoder**<br>Enables the transform precoder for Msg3 transmission. If the field is absent, the UE disables the transformer precoder. |
| **first numberOfRA-PreamblesGroupA**<br>The number of CB preambles per SSB in group A. This determines implicitly the number of CB preambles per SSB available in group B. The setting should be consistent with the setting of *ssb-perRACH-OccasionAndCB-PreamblesPerSSB.* |
| **first prach-RootSequenceIndex**<br>PRACH root sequence index. The value range depends on whether L=839 or L=139 or L=571 or L=1151. The length of the root sequence corresponding with the index indicated in this IE should be consistent with the one indicated in *prach-Configurationindex* in the *RACH-ConfigDedicated* (if configured). If *prach-RootSequenceIndex-r16* is signalled, UE shall ignore the *prach-RootSequenceIndex* (without suffix). |
| **first ra-ContentionResolutionTimer**<br>The initial value for the contention resolution timer. Value *sf8* corresponds to 8 subframes, value *sf16* corresponds to 16 subframes, and so on. |
| **first ra-Msg3SizeGroupA**<br>Transport Blocks size threshold in bits below which the UE shall use a contention-based RA preamble of group A. |
| **first ra-Prioritization**<br>Parameters which apply for prioritized random access procedure on any UL BWP of SpCell for specific Access Identities. |
| **first ra-PrioritizationForAI** |

(continued)

| Examples of the first RA parameters |
|---|
| Indicates whether the field *ra-Prioritization-r16* applies for Access Identities. The first/leftmost bit corresponds to Access Identity 1, the next bit corresponds to Access Identity 2. Value 1 indicates that the field *ra-Prioritization-r16* applies otherwise the field does not apply. |
| **first rach-ConfigGeneric** <br> RACH parameters for both regular random access and beam failure recovery. |
| **first restrictedSetConfig** <br> Configuration of an unrestricted set or one of two types of restricted sets. |
| **first rsrp-ThresholdSSB** <br> UE may select the SS block and corresponding PRACH resource for path-loss estimation and (re)transmission based on SS blocks that satisfy the threshold. |
| **first rsrp-ThresholdSSB-SUL** <br> The UE selects SUL carrier to perform random access based on this threshold. The value applies to all the BWPs. |
| **first ssb-perRACH-OccasionAndCB-PreamblesPerSSB** <br> The meaning of this field is twofold: the CHOICE conveys the information about the number of SSBs per RACH occasion. Value *oneEighth* corresponds to one SSB associated with 8 RACH occasions, value *oneFourth* corresponds to one SSB associated with 4 RACH occasions, and so on. The ENUMERATED part indicates the number of Contention Based preambles per SSB. Value *n4* corresponds to 4 Contention Based preambles per SSB, value *n8* corresponds to 8 Contention Based preambles per SSB, and so on. The total number of CB preambles in a RACH occasion is given by *CB-preambles-per-SSB* * max(1, *SSB-per-rach-occasion*). |
| **first totalNumberOfRA-Preambles** <br> Total number of preambles used for contention based and contention free 4-step or 2-step random access in the RACH resources defined in *RACH-ConfigCommon,* excluding preambles used for other purposes (e.g. for SI request). If the field is absent, all 64 preambles are available for RA. The setting should be consistent with the setting of *ssb-perRACH-OccasionAndCB-PreamblesPerSSB,* i.e. it should be a multiple of the number of SSBs per RACH occasion. |
| **first msg1-FDM** <br> The number of PRACH transmission occasions FDMed in one time instance. |
| **first msg1-FrequencyStart** <br> Offset of lowest PRACH transmission occasion in frequency domain with respective to PRB 0. The value is configured so that the corresponding RACH resource is entirely within the bandwidth of the UL BWP. |
| **first powerRampingStep** <br> Power ramping steps for PRACH. |
| **first prach-ConfigurationFrameOffset-IAB** <br> Frame offset for ROs defined in the baseline configuration indicated by *prach-ConfigurationIndex* and is used only by the IAB-MT. |
| **first prach-Configurationindex** <br> PRACH configuration index. For *prach-Configurationindex* configured under *beamFailureRecovery-Config,* the *prach-ConfigurationIndex* can only correspond to the short preamble format. If the field *prach-ConfigurationIndex-v1610* is present, the UE shall ignore the value provided in *prach-ConfigurationIndex* (without suffix). |
| **first prach-ConfigurationPeriodScaling-IAB** <br> Scaling factor to extend the periodicity of the baseline configuration indicated by *prach-ConfigurationIndex* and is used only by the IAB-MT. Value scf1 corresponds to scaling factor of 1 and so on. |
| **first prach-ConfigurationSOffset-IAB** <br> Subframe/Slot offset for ROs defined in the baseline configuration indicated by *prach-ConfigurationIndex* and is used only by the IAB-MT. |
| **first preambleReceivedTargetPower** <br> The target power level at the network receiver side. multiples of 2 dBm may be chosen (e.g. -202, -200, -198, ...). |
| **first preambleTransMax** |

(continued)

| Examples of the first RA parameters |
|---|
| Max number of RA preamble transmission performed before declaring a failure. |
| **first ra-ResponseWindow**<br>Msg2 (RAR) window length in number of slots. The network configures a value lower than or equal to 10 ms when Msg2 is transmitted in licensed spectrum and a value lower than or equal to 40 ms when Msg2 is transmitted with shared spectrum channel access. UE ignores the field if included in *SCellConfig.* If *ra-ResponseWindow-v1610* is signalled, UE shall ignore the *ra-ResponseWindow* (without suffix). |
| **first zeroCorrelationZoneConfig**<br>N-CS configuration |

In an example, the second RA parameters for the one or more purposes (e.g., one or more services) other than the at least one first network slice may comprise at least one of: a field indicating second RA resources configured for the one or more purposes other than the at least one first network slice; second preamble indexes configured for the one or more purposes other than the at least one first network slice; second prioritization parameters (e.g., power ramping step for high priority, scaling factor backoff indicator, etc.) configured for the one or more purposes other than the at least one first network slice; a field indicating a second preamble transmission power ramping step size configured for the one or more purposes other than the at least one first network slice; a field indicating a second preamble transmission power offset configured for the one or more purposes other than the at least one first network slice; a field indicating a second preamble received target power configured for the one or more purposes other than the at least one first network slice; a field indicating a second maximum number of preamble transmissions configured for the one or more purposes other than the at least one first network slice; a field indicating a RA response window size configured for the one or more purposes other than the at least one first network slice; a second PRACH configuration index configured for the one or more purposes other than the at least one first network slice; an second RA contention resolution timer value configured for the one or more purposes other than the at least one first network slice; a second PRACH root sequence index configured for the one or more purposes other than the at least one first network slice; a field indicating an second SSB RSRP threshold configured for the one or more purposes other than the at least one first network slice; a field indicating an second SUL SSB RSRP threshold configured for the one or more purposes other than the at least one first network slice; a field indicating a second message1 subcarrier spacing configured for the one or more purposes other than the at least one first network slice; a field indicating a second bandwidth part configured for the one or more purposes other than the at least one first network slice; and/or the like.

| Examples of the second RA parameters |
|---|
| **second messagePowerOffsetGroupB**<br>Threshold for preamble selection. Value is in dB. Value *minusinfinity* corresponds to -infinity. Value dB0 corresponds to 0 dB, dB5 corresponds to 5 dB and so on. |
| **second msg1-SubcarrierSpacing**<br>Subcarrier spacing of PRACH. Only the values 15 or 30 kHz (FR1), and 60 or 120 kHz (FR2) are applicable. If absent, the UE applies the SCS as derived from the *prach-ConfigurationIndex* in *RACH-ConfigGeneric.* The value also applies to contention free random access (*RACH-ConfigDedicated*), to SI-request and to contention-based beam failure recovery (CB-BFR). But it does not apply for contention free beam failure recovery (CF-BFR) (see *BeamFailureRecoveryConfig*). |
| **second msg3-transformPrecoder**<br>Enables the transform precoder for Msg3 transmission. If the field is absent, the UE disables the transformer precoder. |
| **second numberOfRA-PreamblesGroupA**<br>The number of CB preambles per SSB in group A. This determines implicitly the number of CB preambles per SSB available in group B. The setting should be consistent with the setting of *ssb-perRACH-OccasionAndCB-PreamblesPerSSB.* |
| **second prach-RootSequenceIndex** |

(continued)

| Examples of the second RA parameters |
|---|
| PRACH root sequence index. The value range depends on whether L=839 or L=139 or L=571 or L=1151. The length of the root sequence corresponding with the index indicated in this IE should be consistent with the one indicated in *prach-ConfigurationIndex* in the *RACH-ConfigDedicated* (if configured). If *prach-RootSequenceIndex-r16* is signalled, UE shall ignore the *prach-RootSequenceIndex* (without suffix). |
| **second ra-ContentionResolutionTimer**<br>The initial value for the contention resolution timer. Value sf8 corresponds to 8 subframes, value sf16 corresponds to 16 subframes, and so on. |
| **second ra-Msg3SizeGroupA**<br>Transport Blocks size threshold in bits below which the UE shall use a contention-based RA preamble of group A. |
| **second ra-Prioritization**<br>Parameters which apply for prioritized random access procedure on any UL BWP of SpCell for specific Access Identities. |
| **second ra-PrioritizationForAI**<br>Indicates whether the field *ra-Prioritization-r16* applies for Access Identities. The first/leftmost bit corresponds to Access Identity 1, the next bit corresponds to Access Identity 2. Value 1 indicates that the field *ra-Prioritization-r16* applies otherwise the field does not apply. |
| **second rach-ConfigGeneric**<br>RACH parameters for both regular random access and beam failure recovery. |
| **second restrictedSetConfig**<br>Configuration of an unrestricted set or one of two types of restricted sets. |
| **second rsrp-ThresholdSSB**<br>UE may select the SS block and corresponding PRACH resource for path-loss estimation and (re)transmission based on SS blocks that satisfy the threshold. |
| **second rsrp-ThresholdSSB-SUL**<br>The UE selects SUL carrier to perform random access based on this threshold. The value applies to all the BWPs. |
| **second ssb-perRACH-OccasionAndCB-PreamblesPerSSB**<br>The meaning of this field is twofold: the CHOICE conveys the information about the number of SSBs per RACH occasion. Value *oneEighth* corresponds to one SSB associated with 8 RACH occasions, value *oneFourth* corresponds to one SSB associated with 4 RACH occasions, and so on. The ENUMERATED part indicates the number of Contention Based preambles per SSB. Value *n4* corresponds to 4 Contention Based preambles per SSB, value *n8* corresponds to 8 Contention Based preambles per SSB, and so on. The total number of CB preambles in a RACH occasion is given by *CB-preambles-per-SSB* * max(1, *SSB-per-rach-occasion*). |
| **second totalNumberOfRA-Preambles**<br>Total number of preambles used for contention based and contention free 4-step or 2-step random access in the RACH resources defined in *RACH-ConfigCommon,* excluding preambles used for other purposes (e.g. for SI request). If the field is absent, all 64 preambles are available for RA. The setting should be consistent with the setting of *ssb-perRACH-OccasionAndCB-PreamblesPerSSB,* i.e. it should be a multiple of the number of SSBs per RACH occasion. |
| **second msg1-FDM**<br>The number of PRACH transmission occasions FDMed in one time instance. |
| **second msg1-FrequencyStart**<br>Offset of lowest PRACH transmission occasion in frequency domain with respective to PRB 0. The value is configured so that the corresponding RACH resource is entirely within the bandwidth of the UL BWP. |
| **second powerRampingStep**<br>Power ramping steps for PRACH. |
| **second prach-ConfigurationFrameOffset-IAB**<br>Frame offset for ROs defined in the baseline configuration indicated by *prach-ConfigurationIndex* and is used only by the IAB-MT. |

(continued)

| Examples of the second RA parameters |
|---|
| *second prach-ConfigurationIndex*<br>PRACH configuration index. For *prach-ConfigurationIndex* configured under *beamFailureRecovery-Config,* the *prach-ConfigurationIndex* can only correspond to the short preamble format. If the field *prach-ConfigurationIndex-v1610* is present, the UE shall ignore the value provided in *prach-ConfigurationIndex* (without suffix). |
| *second prach-ConfigurationPeriodScaling-IAB*<br>Scaling factor to extend the periodicity of the baseline configuration indicated by *prach-ConfigurationIndex* and is used only by the IAB-MT. Value scf1 corresponds to scaling factor of 1 and so on. |
| *second prach-ConfigurationSOffset-IAB*<br>Subframe/Slot offset for ROs defined in the baseline configuration indicated by *prach-ConfigurationIndex* and is used only by the IAB-MT. |
| *second preambleReceivedTargetPower*<br>The target power level at the network receiver side. multiples of 2 dBm may be chosen (e.g. -202, -200, -198, ...). |
| *second preambleTransMax*<br>Max number of RA preamble transmission performed before declaring a failure. |
| *second ra-ResponseWindow*<br>Msg2 (RAR) window length in number of slots. The network configures a value lower than or equal to 10 ms when Msg2 is transmitted in licensed spectrum and a value lower than or equal to 40 ms when Msg2 is transmitted with shared spectrum channel access. UE ignores the field if included in *SCellConfig.* If *ra-ResponseWindow-v1610* is signalled, UE shall ignore the *ra-ResponseWindow* (without suffix). |
| *second zeroCorrelationZoneConfig*<br>N-CS configuration |

In an example, the second RA parameters for the one or more purposes (e.g., one or more services) other than the at least one first network slice may be for the one or more purposes that are not associated with the at least one first network slice (e.g., without intention to use the at least one first network slice). In an example, the first RA parameters for the at least one first network slice may be for the one or more purposes that are associated with the at least one first network slice (e.g., with intention to use the at least one first network slice; e.g., communicating packets associated with the at least one first network slice after a random access for a beam failure recovery, a recovery from a scheduling request failure, a synchronization, obtaining system information, etc.). The first RA parameters for the at least one first network slice may be for a random access to achieve the one or more purposes and to communicate packets associated with the at least one first network slice after the random access for the one or more purposes that may comprise at least one of a beam failure recovery, a recovery from a scheduling request failure, a synchronization, obtaining system information, and/or the like.

In an example, the one or more purposes (e.g., one or more services) may comprise at least one of: at least one second network slice, a common/general purpose (e.g., communication via the cell), an access-related purpose (e.g., accessRelated), a beam failure recovery (e.g., beamFailureRecovery), a reconfiguration with synchronization (e.g., reconfigurationWithSync), an access when an uplink is not synchronized with the cell (e.g., ulUnSynchronized), an access after a scheduling request failure (e.g., schedulingRequestFailure), an access when a PUCCH resource is not available (e.g., noPUCCHResourceAvailable), a request for system information (e.g., requestForOtherSI), and/or the like. The RA report may comprise a field indicating the one or more purposes. In an example, the 'accessRelated' may indicate the RA procedure via the cell may be associated with at least one of: an initial access from an RRC_IDLE state, an RRC re-establishment procedure, a transition from an RRC-INACTIVE state, a MSG3 based system information (SI) request, and/or the like. The beamFailureRecovery may be used in case of a (successful) beam failure recovery related the RA procedure (e.g., in an SpCell). The reconfigurationWithSync may be used if the wireless device executes a reconfiguration with synchronization. The ulUnSynchronized may be used if the RA procedure is initiated in a SpCell by DL or UL data arrival during an RRC_CONNECTED state (e.g., when a time alignment timer (TAT) is not running in a PTAG) and/or if the RA procedure is initiated in a serving cell by a PDCCH order (e.g., DCI). The schedulingRequestFailure may be used in case of scheduling request (SR) failures. The noPUCCHResourceAvailable may be used when the wireless device has no valid SR PUCCH resources configured. The indicator requestForOtherSI may be used for MSG1 based on demand SI request.

In an example, based on the first RA parameters, the wireless device may transmit the one or more RA preambles for the RA procedure via the cell to use the at least one first network slice.

In an example, the transmitting the one or more RA preambles for the RA procedure based on the first RA parameters is based on determining to use the at least one first network slice. The determining to use the at least one first network slice may be based on at least one of: generating packets associated with the at least one first network slice (e.g., by an application layer of the wireless device); buffering packets of a bearer associated with the at least one first network slice (e.g., by a medium access control (MAC) layer of the wireless device); and/or the like.

In an example, the RA procedure of the wireless device may be associated with at least one of: accessing (e.g., initial access, handover to the cell, reestablishment to the cell, access secondary cell, access secondary cell group, etc.) the cell to use the at least one first network slice; a scheduling request for at least one radio resource (to transmit at least one packet and/or at least one transport block associated with the at least one first network slice); a beam failure recovery procedure for the cell to use the at least one first network slice; and/or the like.

In an example, the wireless device may determine not receiving at least one response to the transmitting the one or more RA preambles based on the first RA parameters for the RA procedure. The wireless device may determine not receiving at least one response to the one or more RA preambles transmitted based on the first RA parameters for the RA procedure. The wireless device may transmit, based on the determining not receiving the at least one response, one or more second preambles based on at least one of: the second RA parameters associated with the one or more purposes; RA parameters configured for a small data transmission (SDT) procedure; RA parameters configured for a non-SDT procedure; RA parameters configured for a 2-step RA procedure; RA parameters configured for a 4-step RA procedure; RA parameters configured for a reduced capability (RedCap) wireless devices; RA parameters configured for normal (e.g., non-RedCap) wireless devices; and/or the like.

In an example, the wireless device may determine at least one of: a failure of the RA procedure via the cell, a success of the RA procedure via the cell, or the like. The wireless device may communicate (transmit/receive), based on the success of the RA procedure, one or more packets (e.g., one or more transport blocks) associated with the at least one first network slice (e.g., via the cell).

In an example, the wireless device may transmit, to the second base station (e.g., and/or to the first base station), the RA report of the RA procedure. The RA report may indicate the at least one first network slice. In an example, the wireless device may receive an information request message (e.g., UE information request via RRC layer) indicating the RA report. The wireless device may send, to the second base station, an information response message (e.g., UE information response via RRC layer) comprising the RA report, in response to receiving the information request message.

In an example, the RA report may comprise at least one of: a field indicating the failure of the RA procedure via the cell; a field indicating the success of the RA procedure via the cell; and/or the like.

In an example, the RA report may comprise at least one of: at least one network slice identifier of the at least one first network slice; at least one network slice group identifier of a first network slice group comprising the at least one first network slice; and/or the like.

In an example, the RA report may comprise the first RA parameters for the at least one first network slice. In an example, the RA report may comprise at least one of: a field indicating RA resources configured for the at least one first network slices; a field indicating RA resources used in the RA procedure for the at least one first network slices; and/or the like. In an example, the RA report may comprise at least one of: preamble indexes configured for the at least one first network slices; preamble indexes of the one or more RA preambles used in the RA procedure for the at least one first network slices; and/or the like.

In an example, the RA report may comprise at least one of: prioritization parameters (e.g., power ramping step for high priority, scaling factor backoff indicator, etc.) configured/used for the at least one first network slices; a field indicating a preamble transmission power ramping step size configured/used for the at least one first network slices; a field indicating a preamble transmission power offset configured/used for the at least one first network slices; a field indicating a preamble received target power configured/used for the at least one first network slices; a field indicating a maximum number of preamble transmissions configured for the at least one first network slices; a field indicating a RA response window size configured/used for the at least one first network slices; a PRACH configuration index configured/used for the at least one network slices; an RA contention resolution timer value configured/used for the at least one first network slices; a PRACH root sequence index configured/used for the at least one first network slices; a field indicating an SSB RSRP threshold configured/used for the at least one first network slices; a field indicating an SUL SSB RSRP threshold configured/used for the at least one first network slices; a field indicating a message1 subcarrier spacing configured/used for the at least one first network slices; a field indicating a bandwidth part configured/used for the at least one first network slices; and/or the like.

In an example, the RA report may comprise information of the RA procedure for the at least one first network slice. The information of the RA procedure may comprise at least one of: an identifier (e.g., physical cell identifier, PCI, cell global identifier, CGI, carrier frequency, etc.) of the cell; a field indicating an RA purpose (e.g., accessRelated, beamFailureRecovery, reconfigurationWithSync, ulUnSynchronized, schedulingRequestFailure, noPUCCHResourceAvailable, requestForOtherSI, the at least one first network slice, etc.); a field indicating an RA resource (e.g., absoluteFrequencyPoint, ARFCN-ValueNR, locationAndBandwidth, msg1-FrequencyStart, msg1-FrequencyStartCFRA, etc.); a field indicating an FDM type (e.g., msg1-FDM, msg1-FDMCFRA, etc.); a field indicating a subcarrier spacing (e.g., msg1-SubcarrierSpacing, msg1-SubcarrierSpacingCFRA, etc.); a PerRASSBInfo (e.g., SSB index, number of preambles sent on SSB, contention detection indication of attempt on SSB, downlink RSRP above threshold of attempt on SSB, etc.); a PerRACSI-RSInfo (e.g., CSI-RS index, number of preambles sent on CSI-RS, contention detection indication of attempt on CSI-RS, downlink RSRP above threshold of attempt on CSI-RS, etc.); a field indicating a number of attempts (e.g., number of preamble transmissions); and/or the like.

| Example contents of the RA report |
|---|
| **absoluteFrequencyPointA**<br>This field indicates the absolute frequency position of the reference resource block (Common RB 0). |
| **cellID**<br>This field indicates the CGI of the cell in which the associated random access procedure was performed. |
| **contentionDetected**<br>This field is used to indicate that contention was detected for the transmitted preamble in the given random access attempt or not. This field is not included when the UE performs random access attempt is using contention free random-access resources or when the *raPurpose* is set to *requestForOtherSI*. |
| **csi-RS-Index, csi-RS-Index-v1660**<br>This field is used to indicate the CSI-RS index corresponding to the random access attempt.<br>If the random access procedure is for beam failure recovery, the field indicates the NZP-CSI-RS-ResourceId. For CSI-RS index larger than maxNrofCSI-RS-ResourcesRRM-1, the index value is the sum of csi-RS-Index (without suffix) and csi-RS-Index-v1660. |
| **dlRSRPAboveThreshold**<br>This field is used to indicate whether the DL beam (SSB) quality associated to the random access attempt was above or below the threshold *rsrp-ThresholdSSB* in *beamFailureRecoveryConfig* in UL BWP configuration of UL BWP selected for random access procedure initiated for beam failure recovery; Otherwise, *rsrp-ThresholdSSB* in *rach-ConfigCommon* in UL BWP configuration of UL BWP selected for random access procedure. |
| **locationAndBandwidth**<br>Frequency domain location and bandwidth of the bandwidth part associated to the random-access resources used by the UE. |
| **numberOfPreamblesSentOnOSI-RS**<br>This field is used to indicate the total number of successive RA preambles that were transmitted on the corresponding CSI-RS. |
| **numberOfPreamblesSentOnSSB**<br>This field is used to indicate the total number of successive RA preambles that were transmitted on the corresponding SS/PBCH block. |
| **perRAAttemptinfoList**<br>This field provides detailed information about a random access attempt. |
| **perRAInfoList, perRAInfoListExt-v1660**<br>This field provides detailed information about each of the random access attempts in the chronological order of the random access attempts. If *perRAInfoListExt-v1660* is present, it shall contain the same number of entries, listed in the same order as in *perRAInfoList* (without suffix). |
| **perRACSI-RSInfoList**<br>This field provides detailed information about the successive random access attempts associated to the same CSI-RS. |
| **perRASSBInfoList**<br>This field provides detailed information about the successive random access attempts associated to the same SS/PBCH block. |
| **raPurpose** |

(continued)

| Example contents of the RA report |
|---|
| This field is used to indicate the RA scenario for which the RA report entry is triggered. The RA accesses associated to Initial access from RRC_IDLE, RRC re-establishment procedure, transition from RRC-INACTIVE and the MSG3 based SI request are indicated using the indicator 'access Related'. The indicator *beamFailureRecovery* is used in case of successful beam failure recovery related RA procedure in the SpCell. The indicator *reconfigurationWithSync* is used if the UE executes a reconfiguration with sync. The indicator *ulUnSynchronized* is used if the random access procedure is initiated in a SpCell by DL or UL data arrival during RRC_CONNECTED when the timeAlignmentTimer is not running in the PTAG or if the RA procedure is initiated in a serving cell by a PDCCH order. The indicator *schedulingRequestFailure* is used in case of SR failures. The indicator *noPUCCHResourceAvailable* is used when the UE has no valid SR PUCCH resources configured [3]. The indicator *requestForOtherSI* is used for MSG1 based on demand SI request. |
| **ra-InformationCommon** <br> This field is used to indicate the common random-access related information between *RA-report* and *RLF-report.* For RA report, this field is mandatory presented. For *RLF-report,* this field is optionally included when *connection Failure Type* is set to 'hof' or when *connection Failure Type* is set to 'rlf' and the *rlf-Cause* equals to 'randomAccessProblem' or 'beamRecoveryFailure'; otherwise this field is absent. |
| **ssb-Index** <br> This field is used to indicate the SS/PBCH index of the SS/PBCH block corresponding to the random access attempt. |
| **subcarrierSpacing** <br> Subcarrier spacing used in the BWP associated to the random-access resources used by the UE. |

In an example, the RA report may comprise a field indicating that the RA procedure comprises at least one of: transmitting the one or more preambles based on the first RA parameters associated with the at least one first network slice; transmitting one or more second preambles based on the second RA parameters associated with the one or more purposes (e.g., the one or more services); and/or the like. In an example, the RA report may comprise at least one of: a field indicating a first number of preambles sent (e.g., number of attempts) based on the first RA parameters associated with the at least one first network slice; a field indicating a second number of preambles sent (e.g., number of attempts) based on the second RA parameters associated with the one or more purposes; a field indicating that the transmitting the one or more preambles based on the first RA parameters associated with the at least one first network slice occurred before the transmitting the one or more second preambles based on the second RA parameters associated with the one or more purposes; and/or the like.

In an example, the RA report may comprise a field indicating that the RA procedure via the cell was for a small data transmission (SDT) procedure. In an example, the RA report may comprise a field indicating that the RA procedure comprises at least one of: transmitting one or more preambles based on RA parameters configured for the SDT procedure; transmitting one or more preambles based on RA parameters configured for a non-SDT procedure; and/or the like. In an example, the RA report may comprise at least one of: a field indicating a number of preambles sent (e.g., number of attempts) based on the RA parameters configured for the SDT procedure; a field indicating a number of preambles sent (e.g., number of attempts) based on the RA parameters configured for the non-SDT procedure; a field indicating that the transmitting the one or more preambles based on the RA parameters configured for the SDT procedure occurred before the transmitting the one or more preambles based on the RA parameters configured for the non-SDT procedure; and/or the like.

In an example, the RA report may comprise a field indicating that the RA procedure via the cell was based on a 2-step RA procedure. In an example, the RA report may comprise a field indicating that the RA procedure comprises at least one of: transmitting one or more preambles (e.g., and/or payload comprising RRC request message, messageA) based on RA parameters configured for the 2-step RA procedure; transmitting one or more preambles based on RA parameters configured for a 4-step RA procedure; and/or the like. In an example, the RA report may comprise at least one of: a field indicating a number of preambles sent (e.g., number of attempts) based on the RA parameters configured for the 2-step RA procedure; a field indicating a number of preambles sent (e.g., number of attempts) based on the RA parameters configured for the 4-step RA procedure; a field indicating that the transmitting the one or more preambles based on the RA parameters configured for the 2-step RA procedure occurred before the transmitting the one or more preambles based on the RA parameters configured for the 4-step RA procedure; and/or the like.

In an example, the RA report may comprise a field indicating that the RA procedure via the cell was for reduced capability (RedCap) wireless devices. In an example, the RA report may comprise a field indicating that the RA procedure comprises at least one of: transmitting one or more preambles based on RA parameters configured for the RedCap wireless devices; transmitting one or more preambles based on RA parameters configured for normal (e.g., non-RedCap) wireless devices; and/or the like. In an example, the RA report may comprise at least one of: a field indicating a number of preambles sent (e.g., number of attempts) based on the RA parameters configured for the RedCap wireless devices; a field indicating a number of preambles sent (e.g., number of attempts) based on the RA parameters configured for the normal wireless devices; a field indicating that the transmitting the one or more preambles based on the RA parameters configured for the RedCap wireless devices occurred before the transmitting the one or more preambles based on the RA parameters configured for the normal wireless devices; and/or the like.

In an example, the transmitting the RA report may comprise transmitting the RA report via one or more cells comprising at least one of: the cell (e.g., of the first base station and/or the second base station) via which the wireless device transmitted the one or more preambles for the RA procedure; at least one second cell of the second base station (e.g., and/or of the first base station); and/or the like.

In an example, the first base station may be the second base station. If the first base station is different than the second base station, the second base station may send the RA report to the first base station. In an example, the second base station may send, to the first base station (e.g., via the direct interface), the RA report indicating the at least one first network slice.

In an example, the first base station may determine RA parameters of the cell based on the RA report. In an example, if the RA report indicates that the RA procedure based on the first RA parameters for the at least one first network slice, the first base station may reconfigure/update/determine RA parameters for the at least one first network slice and/or may not reconfigure the second RA parameters for the one or more purposes other than the at least one first network slice. In an example, if the RA report indicates that the RA procedure based on the first RA parameters for the at least one first network slice, the first base station may increase priority of a random access (RA) for the first network slice, for example, by increasing a power ramping step size of RA preambles for the first network slice. In an example, if the RA report indicates that the RA procedure based on the first RA parameters for the at least one first network slice, the first base station may assign/allocate more preambles (e.g., more number of preamble indexes) for a random access (RA) for the at least one first network slice and/or may assign/allocate more RA resources for the at least one first network slice.

In an example, the first base station may transmit, to one or more second wireless devices, the RA parameters of the cell (e.g., the RA parameters determined/updated/reconfigured based on the RA report).

In an example, a wireless device (UE) may send/transmit one or more preambles for a random access (RA) procedure via a cell. The wireless device may send/transmit, to a base station (BS), an RA report of the RA procedure. The RA report may indicate at least one first network slice associated with the RA procedure.

In an example, a first base station (BS) may send, to a wireless device (UE), configuration parameters of a cell. The configuration parameters may comprise first random access (RA) parameters for at least one first network slice and second RA parameters for one or more purposes (e.g., one or more services) other than the at least one first network slice. The first base station may receive an RA report associated with an RA procedure of the wireless device on the cell. The RA report may indicate the at least one first network slice. The first base station may determine RA parameters of the cell based on the RA report. The first base station may transmit/broadcast/multicast, to one or more second wireless devices, the RA parameters of the cell.

In an example, a wireless device may perform an access procedure (e.g., random access procedure, RA procedure) to access a cell. The access procedure may comprise at least one of transmitting at least one preamble, receiving a random access (RA) response, transmitting an RRC request message (e.g., initial RRC message, message3, msg3, part of msgA) for an RRC connection (e.g., for RRC setup, RRC resume, RRC reestablishment, etc.), receiving an RRC response message (e.g., message4, msg4, part of msgB), and/or transmitting an RRC complete message (e.g., message5, msg5). In existing technologies, a wireless device may send information of a network slice to a base station via an RRC complete message (e.g., msg5), which is after sending an RRC request message (e.g., initial RRC message, msg3, part of msgA) for an RRC connection. In an example, a base station may be split into a base station central unit (BS-CU) and one or more base station distributed units (BS-DUs). During an access procedure of a wireless device (UE), a BS-CU may configure/resume one or more bearers for the wireless device after receiving an RRC request message (e.g., initial RRC message, msg3, msgA) for an RRC connection and may send/transmit corresponding bearer configurations to the wireless device via an RRC response message (e.g., msg4, msgB). In an example, before receiving information of a network slice that a wireless device needs via an RRC complete message (e.g., msg5), a BS-CU may not configure/resume a bearer associated with the network slice that the wireless device needs if resources are not enough and/or may send an RRC response message (e.g., msg4, msgB) excluding configurations of the bearer associated with the network slice that the wireless device needs. After getting information of the network slice that the wireless device needs via an RRC complete message (e.g., msg5), a BS-CU may need to send an additional RRC reconfiguration message to send configurations of the bearer associated with the network slice. Sending additional configurations for a bearer of a network slice that a wireless device needs after completion of an access procedure (e.g., after sending an RRC complete message, msg5) may increase configuration delay and signaling complexity. Existing technologies may increase service delay and signaling overhead of wireless devices.

Example embodiments may support that a BS-DU sends, to a BS-CU, information of a network slice and/or a network slice group that a wireless device may need after receiving an RRC request message (e.g., initial RRC message, msg3, and/or msgA of an access procedure) for an RRC connection. The BS-CU may send configurations of a bearer associated with the network slice and/or the network slice group to the wireless device via an RRC response message (e.g., msg4, msgB) before receiving an RRC complete message (e.g., msg5 of an access procedure). In an example, a BS-DU may receive at least one RA preamble for an access procedure from a wireless device based on RA configurations associated with a network slice and/or a network slice group (e.g., comprising one or more network slices). The BS-DU may determine the network slice and/or the network slice group based on the RA configurations used by the wireless device for transmission of the at least one RA preamble. The BS-DU may send information of the network slice and/or the network slice group to a BS-CU (e.g., via initial UL RRC message transfer message) when sending an RRC request message (e.g., initial RRC message, msg3, and/or msgA of the access procedure) of the wireless device to the BS-CU. The BS-CU may configure/resume configurations of a bearer associated with the network slice and/or the network slice group based on the information of the network slice and/or the network slice group received from the BS-DU with the RRC request message (e.g., initial RRC message, msg3, and/or msgA of the access procedure). The BS-CU may send, to the wireless device, configurations of the bearer associated with the network slice and/or the network slice group via an RRC response message (e.g., msg4 and/or msgB of the access procedure) in response to receiving the RRC request message (e.g., initial RRC message, msg3, and/or msgA of the access procedure). Example embodiments may support that a BS-CU configures a bearer associated with a network slice and/or a network slice group and/or corresponding configuration parameters before receiving an RRC complete message (e.g., msg5 of an access procedure) from a wireless device. Example embodiments may reduce service delay and decrease signaling overhead of wireless devices.

In an example, a first base station may comprise a base station central unit (BS-CU) and one or more base station distributed unit (BS-DUs) comprising a BS-DU and/or a second BS-DU. The BS-DU and/or the BS-CU may serve/operate a cell (cell1) that supports at least one first network slice. The BS-CU may comprise a base station central unit control plane (BS-CU-CP) and a base station central unit user plane (BS-CU-UP). A wireless device (UE) being in an RRC inactive state and/or an RRC idle state may camp on the cell of the BS-DU and/or the BS-CU. A wireless device may perform an RA procedure via the cell of the BS-DU and/or the BS-CU while the wireless device is in an RRC idle state and/or an RRC inactive state.

In an example, the BS-DU and BS-CU may communicate with each other via a direct interface (e.g., F1 interface, etc.) and/or an indirect interface (e.g., one or more network nodes, one or more interfaces, fronthaul interface, etc.). The BS-CU-CP and the BS-CU-UP may communicate with each other via a direct interface (e.g., E1 interface, etc.) and/or an indirect interface (e.g., one or more network nodes, one or more interfaces, etc.). The first base station, the BS-CU of the first base station, and/or the BS-CU-CP of the first base setation may communicate with a second base station via a direct interface (e.g., Xn/X2 interface, etc.) and/or an indirect interface (e.g., one or more network nodes, one or more interfaces, etc.). The first base station, the BS-CU of the first base station, and/or the BS-CU-CP of the first base setation may communicate with a third base station via a direct interface (e.g., Xn/X2 interface, etc.) and/or an indirect interface (e.g., one or more network nodes, one or more interfaces, etc.).

In an example, the BS-DU of the first base station and/or the BS-CU of the first base station may send/transmit, to one or more wireless devices comprising the wireless device, RA configurations associated with the at least one first network slice. The RA configurations may be configured for the at least one first network slice. The BS-DU may receive, from the wireless device (e.g., being in an RRC idle state and/or an RRC inactive state) via the cell, one or more preambles for an RA procedure based on the RA configurations associated with the at least one first network slice. The BS-DU may receive, from the wireless device, an RRC request message for an RRC connection and/or an area update procedure (e.g., registration area update procedure, tracking area update procedure, RAN area update procedure, etc.) of the wireless device. The BS-DU may send, to the BS-CU, a first message comprising the RRC request message and an indication (e.g., field, parameters, IE, etc.) indicating the at least one first network slice. The BS-CU may determine, based on the indication (e.g., field, parameters, IE, etc.) indicating the at least one first network slice, to configure/retrieve one or more radio bearers comprising a first radio bearer (e.g., data radio bearer, DRB) associated with the at least one first network slice for the wireless device. The BS-DU may receive, from the BS-CU, a second message comprising configuration parameters of one or more radio bearers based on the first message.

In an example, the BS-DU of the first base station and/or the BS-CU of the first base station may send/transmit, to the one or more wireless devices comprising the wireless device, the RA configurations associated with the at least one first network slice. The RA configurations may be configured for the at least one first network slice.

In an example, the BS-DU and/or the BS-CU may send/transmit, to one or more wireless devices comprising the wireless device, the RA configurations associated with the at least one first network slice. In an example, the BS-DU may send, to the BS-CU, the RA configurations associated with the at least one first network slice.

In an example, the BS-DU may receive, from the BS-CU, the RA configurations associated with the at least one first network slice. The BS-DU may send/transmit, to one or more wireless devices comprising the wireless device, the RA configurations associated with the at least one first network slice.

In an example, the RA configurations (e.g., the first RA parameters) for (e.g., associated with) the at least one first network slice may comprises at least one of: a field indicating RA resources configured for the at least one first network slices; preamble indexes configured for the at least one first network slices; prioritization parameters (e.g., power ramping step for high priority, scaling factor backoff indicator, etc.) configured for the at least one first network slices; a field indicating a preamble transmission power ramping step size configured for the at least one first network slices; a field indicating a preamble transmission power offset configured for the at least one first network slices; a field indicating a preamble received target power configured for the at least one first network slices; a field indicating a maximum number of preamble transmissions configured for the at least one first network slices; a field indicating a RA response window size configured for the at least one first network slices; a PRACH configuration index configured for the at least one network slices; an RA contention resolution timer value configured for the at least one first network slices; a PRACH root sequence index configured for the at least one first network slices; a field indicating an SSB RSRP threshold configured for the at least one first network slices; a field indicating an SUL SSB RSRP threshold configured for the at least one first network slices; a field indicating a message1 subcarrier spacing configured for the at least one first network slices; a field indicating a bandwidth part configured for the at least one first network slices; and/or the like.

In an example, the BS-DU and/or the BS-CU may send, to one or more wireless devices comprising the wireless device, second RA configurations (e.g., the second RA parameters) associated with one or more purposes (e.g., one or more services, at least one second network slice) other than the at least one first network slice. In an example, the second RA configurations (e.g., second RA parameters) for (e.g., associated with) the one or more purposes (e.g., one or more services, at least one second network slice) other than the at least one first network slice may comprise at least one of: a field indicating second RA resources configured for the one or more purposes other than the at least one first network slice; second preamble indexes configured for the one or more purposes other than the at least one first network slice; second prioritization parameters (e.g., power ramping step for high priority, scaling factor backoff indicator, etc.) configured for the one or more purposes other than the at least one first network slice; a field indicating a second preamble transmission power ramping step size configured for the one or more purposes other than the at least one first network slice; a field indicating a second preamble transmission power offset configured for the one or more purposes other than the at least one first network slice; a field indicating a second preamble received target power configured for the one or more purposes other than the at least one first network slice; a field indicating a second maximum number of preamble transmissions configured for the one or more purposes other than the at least one first network slice; a field indicating a RA response window size configured for the one or more purposes other than the at least one first network slice; a second PRACH configuration index configured for the one or more purposes other than the at least one first network slice; an second RA contention resolution timer value configured for the one or more purposes other than the at least one first network slice; a second PRACH root sequence index configured for the one or more purposes other than the at least one first network slice; a field indicating an second SSB RSRP threshold configured for the one or more purposes other than the at least one first network slice; a field indicating an second SUL SSB RSRP threshold configured for the one or more purposes other than the at least one first network slice; a field indicating a second message1 subcarrier spacing configured for the one or more purposes other than the at least one first network slice; a field indicating a second bandwidth part configured for the one or more purposes other than the at least one first network slice; and/or the like.

In an example, the BS-DU may receive, from the wireless device (e.g., being in an RRC idle state and/or an RRC inactive state) via the cell, the one or more preambles for the RA procedure based on the RA configurations associated with the at least one first network slice. In an example, after/as/with receiving the one or more preambles for the RA procedure, the BS-DU may receive, from the wireless device, the RRC request message (e.g., that may be associated with the RA procedure) for the RRC connection and/or the area update procedure (e.g., registration area update procedure, tracking area update procedure, RAN area update procedure, etc.) of the wireless device.

In an example, the BS-DU may determine the at least one first network slice based on the RA configurations associated with the reception of the one or more preambles from the wireless device. The sending the indication (e.g., via the first message indicating the at least one first network slice may be based on the determining the at least one first network slice.

In an example, the BS-DU may determine the at least one first network slice based on a preamble index (e.g., configured via the RA configurations associated with the at least one network slice) of the one or more preambles from the wireless device. In an example, the BS-DU may determine the at least one first network slice based on an RA resource (e.g., configured via the RA configurations associated with the at least one network slice) via which the BS-DU receives the one or more preambles from the wireless device. The RA resource used for reception of the one or more preambles may be determined based on a frequency domain location and/or a time domain location. Based on the RA resource used for reception of the one or more preambles, the BS-DU may determine one or more reference signals (e.g., associated with the RA resource) that may be configured for the at least one first network slice. Based on the one or more reference signal (e.g., associated with the RA resource), the BS-DU may determine the at least one first network slice.

In an example, the BS-DU may determine the at least one first network slice based on a subcarrier spacing (e.g.,

configured via the RA configurations associated with the at least one network slice) that the BS-DU receives the one or more preambles from the wireless device based on. In an example, the BS-DU may determine the at least one first network slice based on a bandwidth part (e.g., configured via the RA configurations associated with the at least one network slice) via which the BS-DU receives the one or more preambles from the wireless device.

In an example, the BS-DU may send, to the wireless device, a RA response in response to receiving the one or more preambles. The receiving the RRC request message may comprise receiving the RRC request message based on sending the RA response.

In an example, the BS-DU may receive, from the wireless device and based on the RA configurations of the cell, a message (e.g., message A, msgA, of the RA procedure) for the RA procedure. The message may comprise the one or more preambles and the RRC request message. The BS-DU may determine the at least one first network slice based on the RA configurations associated with (e.g., used for) the reception of at least one of: the message, the one or more preambles, the RRC request message (e.g., based on resources via which the BS-DU receives the RRC request message), and/or the like. The sending the indication indicating the at least one first network slice may be based on the determining the at least one first network slice.

In an example, the BS-DU may determine the at least one first network slice based on the RA configurations associated with the reception of the message and/or the RRC request message from the wireless device. In an example, the BS-DU may determine the at least one first network slice based on an RA resource (e.g., configured via the RA configurations associated with the at least one network slice) via which the BS-DU receives the message and/or the RRC request message from the wireless device. The RA resource used for reception of the message and/or the RRC request message may be determined based on a frequency domain location and/or a time domain location. Based on the RA resource used for reception of the message and/or the RRC request message, the BS-DU may determine one or more reference signals (e.g., associated with the RA resource) that may be configured for the at least one first network slice. Based on the one or more reference signal (e.g., associated with the RA resource), the BS-DU may determine the at least one first network slice.

In an example, the BS-DU may determine the at least one first network slice based on a subcarrier spacing (e.g., configured via the RA configurations associated with the at least one network slice) that the BS-DU receives the message and/or the RRC request message from the wireless device based on. In an example, the BS-DU may determine the at least one first network slice based on a bandwidth part (e.g., configured via the RA configurations associated with the at least one network slice) via which the BS-DU receives the message and/or the RRC request message from the wireless device.

In an example, the RRC request message (e.g., message3 (msg3) and/or a portion of message A (msgA) of the RA procedure of the wireless device) may comprise at least one of: an RRC resume request message to resume the RRC connection of the wireless device and/or to perform the area update procedure associated with an RAN notification area; an RRC setup request message to establish/setup the RRC connection of the wireless device and/or to perform the area update procedure associated with a registration area and/or a tracking area; an RRC reestablishment request message to reestablish the RRC connection of the wireless device; and/or the like.

In an example, the BS-DU may send, to the BS-CU (e.g., via the F1 interface), the first message comprising the RRC request message and the indication (e.g., field, parameters, IE, etc.) indicating the at least one first network slice. In an example, the first message may comprise at least one of an initial uplink RRC message transfer message, a UE context modification required message, and/or the like.

In an example, the indication indicating the at least one first network slice may comprise at least one of: at least one network slice identifier (e.g., network slice selection assistance information (NSSAI), single-NSSAI (S-NSSAI), slice/service type (SST), slice differentiator (SD), etc.) of the at least one first network slice; at least one network slice group identifier/index of a first network slice group comprising the at least one first network slice (e.g., and comprising at least one second network slice; a field indicating at least one element of the RA configurations associated with the at least one first network slice; at least one element of the RA configurations associated with the at least one first network slice; and/or the like.

In an example, the BS-CU may determine, based on the indication (e.g., field, parameters, IE, etc.) indicating the at least one first network slice, to configure/retrieve the first radio bearer (e.g., data radio bearer, DRB) associated with the at least one first network slice for the wireless device. The one or more radio bearers may comprise the first radio bearer associated with the at least one first network slice, based on determining to configure the first radio bearer for the wireless device. In an example, the BS-CU may determine, based on the indication (e.g., field, parameters, IE, etc.) indicating the at least one first network slice, to not configure/retrieve a second radio bearer not associated with the at least one first network slice for the wireless device. The one or more radio bearers may not comprise the second radio bearer, based on at least one of: determining to not configure the second radio bearer for the wireless device; traffic congestion of the BS-CU and/or the BS-DU being higher than a threshold load value; available resources (e.g., radio resources, hardware resources, interface resources) of the of the BS-CU and/or the BS-DU being lower than a threshold resource size value; a number of packet flows (e.g., radio bearer, logical channel, QoS flow, PDU session, etc.) configured/activated at the BS-CU and/or the BS-DU being larger than a threshold number value; and/or the like.

In an example, the BS-CU may send, to the BS-DU, a UE context configuration (e.g., setup, modification, etc.) request comprising parameters of the one or more radio bearers based on the first message. The BS-CU may receive, from the BS-DU, a UE context configuration response indicating confirmation of the parameters of the one or more radio bearers. The second message may be based on the UE context configuration response.

In an example, the BS-CU may send, to the second BS-DU, a UE context configuration (e.g., setup, modification, etc.) request comprising parameters of the one or more radio bearers based on the first message. The BS-CU may receive, from the second BS-DU, a UE context configuration response indicating confirmation of the parameters of the one or more radio bearers. The second message may be based on the UE context configuration response.

In an example, the BS-CU-CP of the BS-CU may send, to the BS-CU-UP of the BS-CU, a bearer context configuration (e.g., setup, modification, etc.) request comprising parameters of the one or more radio bearers based on the first message. The BS-CU-CP may, from the BS-CU-UP, a bearer context configuration response indicating confirmation of the parameters of the one or more radio bearers. The second message may be based on the bearer context configuration response.

In an example, the BS-CU may send, to the second base station, a secondary node configuration (e.g., addition, modification, etc.) request comprising parameters of the one or more radio bearers based on the first message. The BS-CU may receive, from the second base station, a secondary node configuration response indicating confirmation of the parameters of the one or more radio bearers. The second message may be based on the secondary node configuration response.

In an example, the third base station may receive, from the BS-CU, a retrieve UE context request comprising the indication (e.g., field, parameters, IE, etc.) indicating the at least one first network slice (e.g., if the RRC request message is the RRC resume request message). The third base station may retrieve, based on the indication (e.g., field, parameters, IE, etc.) indicating the at least one first network slice, parameters of the first radio bearer associated with the at least one first network slice for the wireless device. The third base station may send, to the BS-CU, a retrieve user equipment context response comprising the parameters of the first radio bearers associated with the at least one first network slice for the wireless device. The second message may be based on the retrieve user equipment context response.

In an example, the BS-DU may receive, from the BS-CU, the second message comprising configuration parameters of the one or more radio bearers based on the first message.

In an example, the second message may be the UE context configuration (e.g., setup, modification, etc.) request comprising parameters of the one or more radio bearers based on the first message. The BS-DU may send, to the BS-CU, the UE context configuration response indicating confirmation of the parameters of the one or more radio bearers.

In an example, the second message may comprise the UE context configuration (e.g., setup, modification, etc.) request message. The BS-DU may determine, based on the UE context configuration (e.g., setup, modification, etc.) request message, second configuration parameters for one or more radio bearers. The BS-DU may send, to the BS-CU, the UE context configuration (e.g., setup, modification, etc.) response message comprising the second configuration parameters for one or more radio bearers.

In an example, the BS-DU may receive, from the BS-CU and in response to sending the RRC request message (e.g., via the first message), an RRC response message (e.g., RRC setup message, RRC resume message, RRC reestablishment message, etc.) comprising parameters of the one or more radio bearers (e.g., that may comprise the first radio bearer associated with the at least one first network slice). The RRC response message may be based on the UE context configuration response. The BS-DU may send/transmit, to the wireless device, the RRC response message.

In an example, the second message may comprise an RRC response message in response to the RRC request message. The BS-CU may send/forward the RRC response message to the wireless device.

In an example, the BS-DU may receive, from the wireless device, an RRC complete message (e.g., RRC setup complete message, RRC resume complete message, RRC reestablishment complete message, etc.) confirming the parameters of the one or more radio bearers. The BS-DU may send/forward the RRC complete message to the BS-CU.

In an example, the wireless device may send/receive, to/from the BS-CU and/or the BS-CU-UP (e.g., via the BS-DU), one or more packets via the first radio bearer associated with the at least one first network slice (e.g., based on the RRC response message comprising parameters of the one or more radio bearers that comprise the first radio bearer associated with the at least one first network slice).

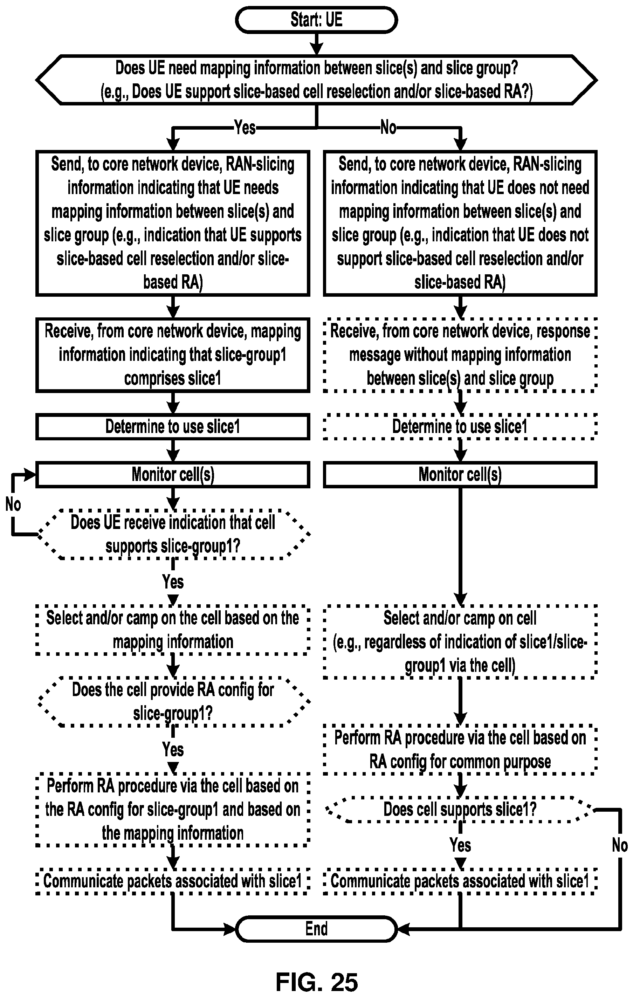

In an example, as shown in FIG. 23 and/or FIG. 25, a wireless device may send, to a core network device, a first message indicating that the wireless device needs/requires/requests mapping information between a network slice group and at least one network slice. The wireless device may receive, from the core network device, a second message comprising the mapping information indicating that a first network slice group comprises at least one first network slice.

In an example, the first message may comprise a field indicating that the wireless device supports a radio access network (RAN) slicing function. The RAN slicing function may comprise at least one of: a slice-based cell reselection (e.g., when selecting/reselecting a cell to use a network slice, the wireless device prioritizes a cell that broadcasts/sends indication that the cell supports the network slice and/or a network slice group comprising the network slice, as shown in FIG. 19); a slice-based random access (RA) (e.g., to use a network slice, the wireless device performs a random access (RA) procedure based on RA configuration parameters that are configured for the network slice and/or a network slice group comprising the network slice and that may be different than RA configuration parameters for common/general purposes, as shown in FIG. 20); and/or the like.

In an example, the first message may comprise at least one of: at least one identifier (e.g., S-NSSAI, NSSAI, SST, SD, etc.) of the at least one first network slice that the wireless device requests/plans/wants to use and/or that the wireless device is using; at least one identifier (e.g., S-NSSAI, NSSAI, SST, SD, etc.) of at least one second network slice that the wireless device does not request/plan/want to use and/or that the wireless device is not using; and/or the like.

In an example, the first message may comprise at least one of: a field indicating that the wireless device supports/uses one or more first network slices (e.g., the field may be one or more identifiers of the one or more first network slice); a field indicating that the wireless device does not support/use one or more second network slices (e.g., the field may be one or more identifiers of the one or more second network slice); and/or the like.

In an example, the first message may comprise a field indicating that the wireless device supports/uses one or more first network slices in a coverage area of at least one of: a cell, a list of cells, a tracking area, a list of tracking areas, a registration area, a list of registration areas, and/or the like. In an example, the first message may comprise a field indicating that the wireless device does not support/use one or more second network slices in a coverage area of at least one of: a cell, a list of cells, a tracking area, a list of tracking areas, a registration area, a list of registration areas, and/or the like.

In an example, the first message may comprise a field indicating that an area where the wireless device locates supports one or more first network slices. The area where the wireless device locates may be a coverage area of at least one of: a cell, a list of cells, a tracking area, a list of tracking areas, a registration area, a list of registration areas, and/or the like. In an example, the first message may comprise a field indicating that an area where the wireless device locates does not support one or more second network slices. The area where the wireless device locates may be a coverage area of at least one of: a cell, a list of cells, a tracking area, a list of tracking areas, a registration area, a list of registration areas, and/or the like.

The method of claim 1, wherein the first message may comprise a field (e.g., information element of Additional information requested) indicting that the wireless device needs/requires/requests mapping information between a network slice group and at least one network slice.

In an example, the first message may comprise at least one of: an identifier (e.g., TMSI, IMSI, IMEI, etc.) of the wireless device; an identifier indicating a cell where the wireless device locates; an identifier indicating a tracking area (TA) where the wireless device locates; an identifier indicating a list of TAs where the wireless device locates; an identifier indicating a registration area where the wireless device locates; and/or the like.

In an example, the first message may comprise at least one of: a registration request message, a service request message, and/or the like. In an example, the first message may be at least one of: a non-access stratum (NAS) layer message; a mobility management NAS (MM-NAS); a session management NAS (SM-NAS); and/or the like.

In an example, the sending the first message may comprise sending the first message via one or more base stations. In an example, the wireless device may send, to one or more base stations, an uplink RRC message comprising the first message. The uplink RRC message may comprise at least one of: a RRC setup request/complete message, a RRC resume request/complete message, a RRC reestablishment request/complete message, a RRC reconfiguration request/complete message, a RRC uplink information transfer message, and/or the like. The one or more base stations may send, to the core network device, an uplink transfer message comprising the first message. The uplink transfer message may comprise at least one of: an N2/NG interface message; an S1 interface message; an initial user equipment (UE) message; an uplink non-access stratum (NAS) transport message; and/or the like.

In an example, the wireless device may send, to one or more base stations, an RRC user equipment (UE) capability information message comprising at least one of: an access stratum (AS) capability field indicating that the wireless device supports a slice-based cell reselection; an AS capability field indicating that the wireless device supports a slice-based random access (RA); and/or the like. AS capability fields may indicate capability information associated with communication between a base station (e.g., RAN) and a wireless device. NAS capability fields may indicate capability information associated with communication between a core network device (e.g., MM-NAS for AMF, SM-NAS for SMF, etc.) and a wireless device. Information elements (e.g., fields, parameters, configurations, etc.) included in a NAS layer message may be associated with communication between a core network device (e.g., MM-NAS for AMF, SM-NAS for SMF, etc.) and a wireless device.

In an example, the second message may comprise at least one of: a registration accept message; a service accept message, a configuration update command message, and/or the like.

In an example, the second message may be at least one of: a non-access stratum (NAS) layer message; a mobility management NAS (MM-NAS); a session management NAS (SM-NAS).

In an example, the receiving the second message comprises receiving the second message via one or more base stations. In an example, one or more base stations may receive, from the core network device, a downlink transfer message comprising the second message. The downlink transfer message may comprise at least one of: an N2/NG interface message; an S1 interface message; a protocol data unit (PDU) session resource setup request message; a PDU session resource release command message; a PDU session resource modify request message; an initial context setup request message; a handover command message; a handover request message; a downlink non-access stratum (NAS) transport message; and/or the like. The wireless device may receive, from the one or more base stations, a downlink RRC message comprising the second message. The downlink RRC message may comprise at least one of: a RRC reconfiguration message, an RRC release message, an RRC setup message, an RRC resume message, an RRC reestablishment message, an RRC downlink information transfer message, and/or the like.

In an example, the second message may comprise at least one identifier of at least one tracking area (e.g., a TA, a list of TAs, a registration area, etc.) where the mapping information is valid/applicable.

In an example, the mapping information may comprise at least one of: an identifier/index indicating the first network slice group comprising the at least one first network slice; at least one identifier/index indicating the at least one first network slice; and/or the like.

In an example, as shown in FIG. 19, the wireless device may determine to use the at least one first network slice. The wireless device may select and/or camp on a cell that broadcasts/sends an identifier of the first network slice group, based on at least one of: the mapping information indicating that the first network slice group comprises the at least one first network slice; prioritizing the cell based on receiving via the cell (e.g., and/or via at least one system information block of the cell) the identifier of the first network slice group; and/or the like. The wireless device may transmit/receive one or more packets associated with the at least one first network slice via the cell.

In an example, as shown in FIG. 20, the wireless device may determine to use the at least one first network slice. The wireless device may receive first random access (RA) configurations (e.g., first RA parameters) configured for the first network slice group. The wireless device may send, based on the mapping information, one or more preambles (e.g., for a 4-step RA, a 2-step RA, a scheduling request, a beam failure recovery procedure, etc.) and/or an RRC request message (e.g., RRC setup/resume/reestablishment request for 2-step RA) for an RA procedure based on the first RA configurations (e.g., the first RA parameters) configured for the first network slice group. The RA procedure may be for at least one of: accessing (e.g., initial access, handover to the cell, reestablishment to the cell, access secondary cell, access secondary cell group, etc.) the cell to use the at least one first network slice; a scheduling request for at least one radio resource (to transmit at least one packet and/or at least one transport block associated with the at least one first network slice); a beam failure recovery procedure for the cell to use the at least one first network slice; and/or the like. The wireless device may transmit/receive, based on the RA procedure, one or more packets associated with the at least one first network slice via the cell.

In an example, the wireless device may determine that the wireless device is at least one second tracking area (e.g., a list of TAs, a TA, a registration area, etc.) different than at least one first tracking area (e.g., a list of TAs, a TA, a registration area, etc.) where the wireless device receives the mapping information from the core network device. Based on the determining that the wireless device is at least one second tracking area, the wireless device may send, to a second core network device, a second message indicating that the wireless device needs/requires/requests mapping information between a network slice group and at least one network slice. The second core network device may be the core network device that sent the mapping information to the wireless device.

In an example, as shown in FIG. 25, a wireless device may send, to a core network device, a first message comprising a first field indicating that the wireless device needs/requires/requests mapping information between a network slice group and at least one network slice. The first message may comprise a second field indicating that the wireless device supports a RAN slicing function comprising at least one of: a slice-based cell reselection, a slice-based random access, and/or the like. The wireless device may receive, from the core network device, a second message comprising mapping information indicating that a first network slice group comprises at least one first network slice. The wireless device may determine to use the at least one first network slice. The wireless device may perform, based on the mapping information, at least one of: prioritizing and selecting a cell based on the cell broadcasting an identifier of the first network slice group (e.g., slice-based cell reselection); sending one or more preambles and/or an RRC request message (e.g., for RRC connection; e.g., RRC setup request, RRC resume request, RRC reestablishment request, etc.) based on first random access (RA) parameters configured for the first network slice group (e.g., slice-based RA); and/or the like.

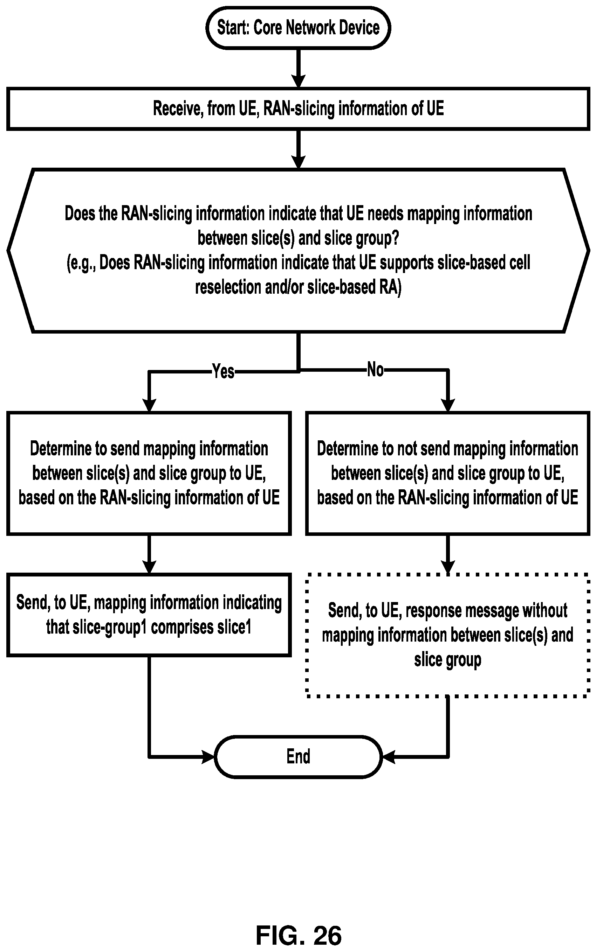

In an example, as shown in FIG. 23 and/or FIG. 26, a core network device (e.g., AMF, SMF, MME, etc.) may receive, from a wireless device, a first message comprising a first field indicating that the wireless device needs/requires/requests mapping information between a network slice group and at least one network slice. The first message may comprise a second field indicating that the wireless device supports a RAN slicing function comprising at least one of: a slice-based cell reselection; a slice-based random access; and/or the like. The core network device may determine, based on the first message, the first field, and/or the second field, to send mapping information indicating that a first network slice group comprises at least one first network slice. The core network device may send to the wireless device, a second message comprising the mapping information.

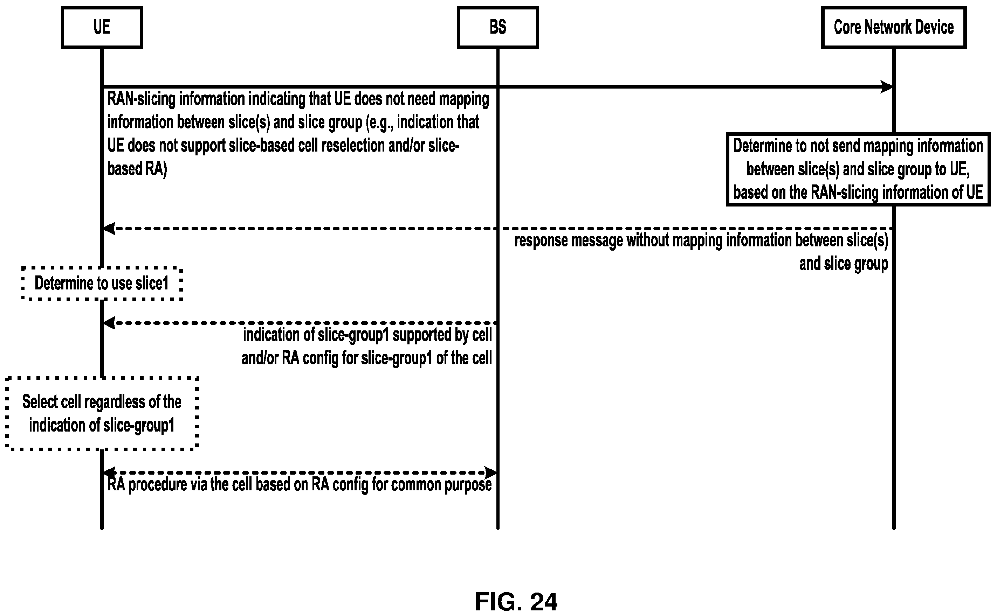

In an example, as shown in FIG. 24 and/or FIG. 26, a core network device may receive, from a wireless device, a first message comprising a first field indicating that the wireless device does not needs/requires/requests mapping information between a network slice group and at least one network slice. The first message may comprise a second field indicating that the wireless device does not supports a RAN slicing function comprising at least one of: a slice-based cell reselection; a slice-based random access; and/or the like. The core network device may determine, based on the first message, the first field, and/or the second field, to not send the mapping information between a network slice group and at least one network slice. The core network device may send, to the wireless device, a second message without the mapping information.

In an example, as shown in FIG. 26, a core network device may receive, from a wireless device, a first message comprising a first field indicating that the wireless device needs/requires/requests mapping information between a network slice group and at least one network slice. The first message may comprise a second field indicating that the wireless device supports a radio access network (RAN) slicing function comprising at least one of: a slice-based cell reselection; a slice-based random access; and/or the like. The core network device may determine, based on the first message, the first field, and/or the second field, to send mapping information to the wireless device for one or more slice groups.

In an example, as shown in FIG. 26, a core network device may receive, from a wireless device, a first message comprising a first field indicating that the wireless device needs/requires/requests mapping information between a network slice group and at least one network slice. The first message may comprise a second field indicating that the wireless device supports a radio access network (RAN) slicing function comprising at least one of: a slice-based cell reselection; a slice-based random access; and/or the like. The core network device may send, to the wireless device and based on the first message, the first field, and/or the second field, mapping information for one or more slice groups.

**Claims**

1. A method comprising:

   receiving, by a core network device from a wireless device, a first message indicating a request for network slice group information, wherein the first message comprises:

   an indication that the at least one first network slice is supported, requested, and/or used by the wireless device;
   an identifier of the at least one first network slice;
   an indication that at least one second network slice is not supported, requested, and/or used by the wireless device; and/or
   an identifier of the at least one second network slice; and

   wherein the first message further comprises an indication of a coverage area associated with the supporting, not supporting, requesting, not requesting, using, and/or not using of the at least one network slice; and
   sending, by the core network device to the wireless device, a second message comprising the network slice group information, wherein the network slice group information indicates that a first network slice group comprises at least one first network slice.

2. The method of claim 1, wherein the first message comprises a request for a mapping between one or more network slices and one or more network slice groups.

3. The method of any one of claims 1 or 2, wherein the first message comprises:

   an identifier of the wireless device; and
   an identifier of at least one first network slice that is at least one of:

   supported;
   requested; or
   used, by the wireless device.

4. The method of any one of claims 1 to 3, wherein the network slice group information comprises an identifier of at least one of:

   the first network slice group; or
   the at least one first network slice.

5. The method of any one of claims 1 to 4, further comprising receiving, by the core network device from the wireless device, an uplink Radio Resource Control, RRC, message comprising the first message and the first message comprises at least one of:

an RRC setup complete message;
an RRC resume complete message;
an RRC reestablishment complete message;
an RRC reconfiguration complete message; or
an uplink information transfer message.

6. The method of any one of claims 1 to 5, further comprising receiving, by the core network device from the wireless device, an uplink transfer message comprising the first message and the uplink transfer message comprises at least one of:

an N2/NG interface message;
an S1 interface message;
an initial user equipment, UE, message; or
an uplink non-access stratum, NAS, transport message.

7. The method of any one of claims 1 to 6, wherein the core network device is an access and mobility management function, AMF.

8. A method comprising:

sending, by a wireless device to a core network device, a first message indicating a request for network slice group information, wherein the first message comprises:

an indication that the at least one first network slice is supported, requested, and/or used by the wireless device;
an identifier of the at least one first network slice;
an indication that at least one second network slice is not supported, requested, and/or used by the wireless device; and/or
an identifier of the at least one second network slice; and

wherein the first message further comprises an indication of a coverage area associated with the supporting, not supporting, requesting, not requesting, using, and/or not using of the at least one network slice; and
receiving, by the wireless device from a core network device, a second message comprising the network slice group information, wherein the network slice group information indicates that a first network slice group comprises at least one first network slice.

9. The method of claim 8, wherein the first message comprises a request for a mapping between one or more network slices and one or more network slice groups.

10. The method of any one of claims 8 or 9, wherein the first message comprises:

an identifier of the wireless device; and
an identifier of at least one first network slice that is at least one of:

supported;
requested; or
used, by the wireless device.

11. The method of any one of claims 8 to 10, wherein the network slice group information comprises an identifier of at least one of:

the first network slice group; or
the at least one first network slice.

12. The method of any one of claims 8 to 11, further comprising sending, by the wireless device to core network device, an uplink Radio Resource Control, RRC, message comprising the first message and the first message comprises at least one of:

>    an RRC setup complete message;
>    an RRC resume complete message;
>    an RRC reestablishment complete message;
>    an RRC reconfiguration complete message; or
>    an uplink information transfer message.

13. The method of any one of claims 8 to 12, further comprising sending, by the wireless device to the core network device, an uplink transfer message comprising the first message and the uplink transfer message comprises at least one of:

>    an N2/NG interface message;
>    an S1 interface message;
>    an initial user equipment, UE, message; or
>    an uplink non-access stratum, NAS, transport message.

14. A core network device comprising one or more processors, and memory storing instructions that, when executed by the one or more processors, cause the core network device to perform the method of any one of claims 1-7; or
a wireless device comprising one or more processors, and memory storing instructions that, when executed by the one or more processors, cause the wireless device to perform the method of any one of claims 8-13.

15. A non-transitory computer readable medium comprising instructions that,

>    when executed by one or more processors of a core network device, cause the core network device to perform the method of any one of claims 1-7; or
>    when executed by one or more processors of a wireless device, cause the wireless device to perform the method of any one of claims 8-13.


**Patentansprüche**

1. Verfahren, umfassend:
Empfangen einer ersten Nachricht, die eine Anforderung von Netzwerk-Slice-Gruppeninformationen anzeigt, von einer drahtlosen Vorrichtung durch eine Kernnetzwerkvorrichtung, wobei die erste Nachricht Folgendes umfasst:

>    eine Anzeige, dass der mindestens eine erste Netzwerk-Slice von der drahtlosen Vorrichtung unterstützt, angefordert und/oder verwendet wird;
>    einen Identifikator des mindestens einen ersten Netzwerk-Slices; eine Anzeige, dass mindestens ein zweiter Netzwerk-Slice von der drahtlosen Vorrichtung nicht unterstützt, angefordert und/oder verwendet wird; und/oder einen Identifikator des mindestens einen zweiten Netzwerk-Slices; und
>    wobei die erste Nachricht ferner eine Anzeige eines Versorgungsbereichs umfasst, der mit dem Unterstützen, Nicht-Unterstützen, Anfordern, Nicht-Anfordern, Verwenden und/oder Nicht-Verwenden des mindestens einen Netzwerk-Slices assoziiert ist; und
>    Senden einer zweiten Nachricht, umfassend die Netzwerk-Slice-Gruppeninformationen, an die drahtlose Vorrichtung durch die Kernnetzwerkvorrichtung, wobei die Netzwerk-Slice-Gruppeninformationen anzeigen, dass eine erste Netzwerk-Slice-Gruppe mindestens einen ersten Netzwerk-Slice umfasst.

2. Verfahren nach Anspruch 1, wobei die erste Nachricht eine Anforderung für ein Zuordnen zwischen einem oder mehreren Netzwerk-Slices und einer oder mehreren Netzwerk-Slice-Gruppen umfasst.

3. Verfahren nach einem der Ansprüche 1 oder 2, wobei die erste Nachricht Folgendes umfasst:

>    einen Identifikator der drahtlosen Vorrichtung; und
>    einen Identifikator mindestens eines ersten Netzwerk-Slices, der mindestens eines von Folgendem ist:

>>        von der drahtlosen Vorrichtung unterstützt;

angefordert; oder
verwendet.

**4.** Verfahren nach einem der Ansprüche 1 bis 3, wobei die Netzwerk-Slice-Gruppeninformationen einen Identifikator von mindestens einem von Folgendem umfassen:

der ersten Netzwerk-Slice-Gruppe; oder
dem mindestens einen ersten Netzwerk-Slice.

**5.** Verfahren nach einem der Ansprüche 1 bis 4, ferner umfassend Empfangen einer Uplink-Funkressourcensteuer(RRC)nachricht, umfassend die erste Nachricht, von der drahtlosen Vorrichtung durch die Kernnetzwerkvorrichtung, wobei die erste Nachricht mindestens eines von Folgendem umfasst:

eine RRC-Einrichtungsabschlussnachricht;
eine RRC-Fortsetzungsabschlussnachricht;
eine RRC-Wiederherstellungsabschlussnachricht;
eine RRC-Neukonfigurationsabschlussnachricht; oder
eine Uplink-Informationsübertragungsnachricht.

**6.** Verfahren nach einem der Ansprüche 1 bis 5, ferner umfassend Empfangen einer Uplink-Übertragungsnachricht, umfassend die erste Nachricht, von der drahtlosen Vorrichtung durch die Kernnetzwerkvorrichtung, wobei die Uplink-Übertragungsnachricht mindestens eines von Folgendem umfasst:

eine N2/NG-Schnittstellennachricht;
eine S1-Schnittstellennachricht;
eine initiale Benutzerausstattungs(UE)nachricht; oder
eine Uplink-Kein-Zugang-Schicht-(NAS-)Transportnachricht.

**7.** Verfahren nach einem der Ansprüche 1 bis 6, wobei die Kernnetzwerkvorrichtung eine Zugangs- und Mobilitätsmanagementfunktion (AMF) ist.

**8.** Verfahren, umfassend:
Senden einer ersten Nachricht, die eine Anforderung von Netzwerk-Slice-Gruppeninformationen anzeigt, an eine Kernnetzwerkvorrichtung durch eine drahtlose Vorrichtung, wobei die erste Nachricht Folgendes umfasst:

eine Anzeige, dass der mindestens eine erste Netzwerk-Slice von der drahtlosen Vorrichtung unterstützt, angefordert und/oder verwendet wird;
einen Identifikator des mindestens einen ersten Netzwerk-Slices; eine Anzeige, dass mindestens ein zweiter Netzwerk-Slice von der drahtlosen Vorrichtung nicht unterstützt, angefordert und/oder verwendet wird; und/oder
einen Identifikator des mindestens einen zweiten Netzwerk-Slices; und
wobei die erste Nachricht ferner eine Anzeige eines Versorgungsbereichs umfasst, der mit dem Unterstützen, Nicht-Unterstützen, Anfordern, Nicht-Anfordern, Verwenden und/oder Nicht-Verwenden des mindestens einen Netzwerk-Slices assoziiert ist; und
Empfangen einer zweiten Nachricht, umfassend die Netzwerk-Slice-Gruppeninformationen, von einer Kernnetzwerkvorrichtung durch die drahtlose Vorrichtung, wobei die Netzwerk-Slice-Gruppeninformationen anzeigen, dass eine erste Netzwerk-Slice-Gruppe mindestens einen ersten Netzwerk-Slice umfasst.

**9.** Verfahren nach Anspruch 8, wobei die erste Nachricht eine Anforderung für ein Zuordnen zwischen einem oder mehreren Netzwerk-Slices und einer oder mehreren Netzwerk-Slice-Gruppen umfasst.

**10.** Verfahren nach einem der Ansprüche 8 bis 9, wobei die erste Nachricht Folgendes umfasst:

einen Identifikator der drahtlosen Vorrichtung; und
einen Identifikator mindestens eines ersten Netzwerk-Slices, der mindestens eines von Folgendem ist:

von der drahtlosen Vorrichtung unterstützt;
angefordert; oder
verwendet.

11. Verfahren nach einem der Ansprüche 8 oder 10, wobei die Netzwerk-Slice-Gruppeninformationen einen Identifikator von mindestens einem von Folgendem umfassen:

> der ersten Netzwerk-Slice-Gruppe; oder
> dem mindestens einen ersten Netzwerk-Slice.

12. Verfahren nach einem der Ansprüche 8 bis 11, ferner umfassend Senden einer Uplink-Funkressourcensteuer(RRC)nachricht, umfassend die erste Nachricht, an die Kernnetzwerkvorrichtung durch die drahtlose Vorrichtung, wobei die erste Nachricht mindestens eines von Folgendem umfasst:

> eine RRC-Einrichtungsabschlussnachricht;
> eine RRC-Fortsetzungsabschlussnachricht;
> eine RRC-Wiederherstellungsabschlussnachricht;
> eine RRC-Neukonfigurationsabschlussnachricht; oder
> eine Uplink-Informationsübertragungsnachricht.

13. Verfahren nach einem der Ansprüche 8 bis 12, ferner umfassend Senden einer Uplink-Übertragungsnachricht, umfassend die erste Nachricht, an die Kernnetzwerkvorrichtung durch die drahtlose Vorrichtung, wobei die Uplink-Übertragungsnachricht mindestens eines von Folgendem umfasst:

> eine N2/NG-Schnittstellennachricht;
> eine S1-Schnittstellennachricht;
> eine initiale Benutzerausstattungs(UE)nachricht; oder
> eine Uplink-Kein-Zugang-Schicht-(NAS-)Transportnachricht.

14. Kernnetzwerkvorrichtung, umfassend einen oder mehrere Prozessoren, und Speicher, der Anweisungen speichert, die, wenn sie von dem einen oder den mehreren Prozessoren ausgeführt werden, die Kernnetzwerkvorrichtung dazu veranlassen, das Verfahren nach einem der Ansprüche 1 bis 7 durchzuführen; oder eine drahtlose Vorrichtung, umfassend einen oder mehrere Prozessoren, und einen Speicher, der Anweisungen speichert, die, wenn sie von dem einen oder den mehreren Prozessoren ausgeführt werden, die drahtlose Vorrichtung dazu veranlassen, das Verfahren nach einem der Ansprüche 8 bis 13 durchzuführen.

15. Nicht-übertragbares computerlesbares Medium, umfassend Anweisungen, die,

> wenn sie von dem einen oder den mehreren Prozessoren einer Kernnetzwerkvorrichtung ausgeführt werden, die Kernnetzwerkvorrichtung dazu veranlassen, das Verfahren nach einem der Ansprüche 1 bis 7 durchzuführen; oder
> wenn sie von dem einen oder den mehreren Prozessoren einer drahtlosen Vorrichtung ausgeführt werden, die drahtlose Vorrichtung dazu veranlassen, das Verfahren nach einem der Ansprüche 8 bis 13 durchzuführen.

## Revendications

1. Procédé comprenant :
la réception, par un dispositif de réseau central provenant d'un dispositif sans fil, d'un premier message indiquant une requête d'informations sur un groupe de tranches de réseau, dans lequel le premier message comprend :

> une indication du fait que l'au moins une première tranche de réseau est prise en charge, demandée et/ou utilisée par le dispositif sans fil ;
> un identifiant de l'au moins une première tranche de réseau ;
> une indication du fait qu'au moins une seconde tranche de réseau n'est pas prise en charge, demandée et/ou utilisée par le dispositif sans fil ; et/ou
> un identifiant de l'au moins une seconde tranche de réseau ; et
> dans lequel le premier message comprend également une indication d'une zone de couverture associée à la prise en charge, à la non-prise en charge, à la requête, à la non-requête, à l'utilisation et/ou à la non-utilisation de l'au moins une tranche de réseau ; et
> l'envoi, par le dispositif de réseau central au dispositif sans fil, d'un second message comprenant les informations de groupe de tranches de réseau, dans lequel les informations de groupe de tranches de réseau indiquent qu'un premier groupe de tranches de réseau comprend au moins une première tranche de réseau.

2.  Procédé selon la revendication 1, dans lequel le premier message comprend une requête de mappage entre une ou plusieurs tranches de réseau et un ou plusieurs groupes de tranches de réseau.

3.  Procédé selon l'une quelconque des revendications 1 à 2, dans lequel le premier message comprend :

    un identifiant du dispositif sans fil ; et
    un identifiant d'au moins une première tranche de réseau qui est au moins l'une des suivantes :

    prise en charge ;
    demandée ; ou
    utilisée par le dispositif sans fil.

4.  Procédé selon l'une quelconque des revendications 1 à 3, dans lequel les informations de groupe de tranches de réseau comprennent un identifiant d'au moins l'un :

    du premier groupe de tranches de réseau ; ou
    de l'au moins une première tranche de réseau.

5.  Procédé selon l'une quelconque des revendications 1 à 4, comprenant également la réception, par le dispositif de réseau central provenant du dispositif sans fil, d'un message de contrôle des ressources radio, RRC, de liaison montante comprenant le premier message, et le premier message comprend au moins l'un :

    d'un message RRC de configuration terminée ;
    d'un message RRC de reprise complète ;
    d'un message RRC de rétablissement complet ;
    d'un message RRC de reconfiguration terminée ; ou
    d'un message de transfert d'informations de liaison montante ;

6.  Procédé selon l'une quelconque des revendications 1 à 5, comprenant également la réception, par le dispositif de réseau central provenant du dispositif sans fil, d'un message de transfert de liaison montante comprenant le premier message, et le message de transfert de liaison montante comprend au moins l'un :

    d'un message d'interface N2/NG ;
    d'un message d'interface S1 ;
    d'un message d'équipement utilisateur, UE, initial ; ou
    d'un message de transport de strate non-accès, NAS, en liaison montante.

7.  Procédé selon l'une quelconque des revendications 1 à 6, dans lequel le dispositif de réseau central est une fonction de gestion d'accès et de mobilité, AMF.

8.  Procédé comprenant :
    l'envoi, par un dispositif sans fil à un dispositif de réseau central, d'un premier message indiquant une requête d'informations sur un groupe de tranches de réseau, dans lequel le premier message comprend :

    une indication du fait que l'au moins une première tranche de réseau est prise en charge, demandée et/ou utilisée par le dispositif sans fil ;
    un identifiant de l'au moins une première tranche de réseau ;
    une indication du fait qu'au moins une seconde tranche de réseau n'est pas prise en charge, demandée et/ou utilisée par le dispositif sans fil ; et/ou
    un identifiant de l'au moins une seconde tranche de réseau ; et
    dans lequel le premier message comprend également une indication d'une zone de couverture associée à la prise en charge, à la non-prise en charge, à la requête, à la non-requête, à l'utilisation et/ou à la non-utilisation de l'au moins une tranche de réseau ; et
    la réception, par le dispositif sans fil provenant du dispositif de réseau central, d'un second message comprenant les informations de groupe de tranches de réseau, dans lequel les informations de groupe de tranches de réseau indiquent qu'un premier groupe de tranches de réseau comprend au moins une première tranche de réseau.

9. Procédé selon la revendication 8, dans lequel le premier message comprend une requête de mappage entre une ou plusieurs tranches de réseau et un ou plusieurs groupes de tranches de réseau.

10. Procédé selon l'une quelconque des revendications 8 et 9, dans lequel le message comprend :

un identifiant du dispositif sans fil ; et
un identifiant d'au moins une première tranche de réseau qui est au moins l'une des suivantes :

prise en charge ;
demandée ; ou
utilisée par le dispositif sans fil.

11. Procédé selon l'une quelconque des revendications 8 à 10, dans lequel les informations de groupe de tranches de réseau comprennent un identifiant d'au moins l'un :

du premier groupe de tranches de réseau ; ou
de l'au moins une première tranche de réseau.

12. Procédé selon l'une quelconque des revendications 8 à 11, comprenant également l'envoi, par le dispositif sans fil au dispositif de réseau central, d'un message de contrôle des ressources radio, RRC, de liaison montante comprenant le premier message, et le premier message comprend au moins l'un :

d'un message RRC de configuration terminée ;
d'un message RRC de reprise complète ;
d'un message RRC de rétablissement complet ;
d'un message RRC de reconfiguration terminée ; ou
d'un message de transfert d'informations de liaison montante .

13. Procédé selon l'une quelconque des revendications 8 à 12, comprenant également l'envoi, par le dispositif sans fil au dispositif de réseau central, d'un message de transfert de liaison montante comprenant le premier message, et le message de transfert de liaison montante comprend au moins l'un:

d'un message d'interface N2/NG ;
d'un message d'interface S1 ;
d'un message d'équipement utilisateur, UE, initial ; ou
d'un message de transport de strate non-accès, NAS, en liaison montante.

14. Dispositif de réseau central comprenant un ou plusieurs processeurs et des instructions de stockage de mémoire qui, lorsqu'elles sont exécutées par les un ou plusieurs processeurs, amènent le dispositif de réseau central à réaliser le procédé selon l'une quelconque des revendications 1 à 7 ; ou
un dispositif sans fil comprenant un ou plusieurs processeurs et des instructions de stockage de mémoire qui, lorsqu'elles sont exécutées par les un ou plusieurs processeurs, amènent le dispositif sans fil à réaliser le procédé selon l'une quelconque des revendications 8 à 13.

15. Support lisible par ordinateur non transitoire comprenant des instructions qui,

lorsqu'elles sont exécutées, par un ou plusieurs processeurs d'un dispositif de réseau central, amènent le dispositif de réseau central à réaliser le procédé selon l'une quelconque des revendications 1 à 7 ; ou
lorsqu'elles sont exécutées, par un ou plusieurs processeurs d'un dispositif sans fil, amènent le dispositif sans fil à réaliser le procédé selon l'une quelconque des revendications 8 à 13.

**FIG. 1A**

**FIG. 1B**

EP 4 454 345 B1

UE
210

| | |
|---|---|
| SDAP 215 | SDAP 225 |
| PDCP 214 | PDCP 224 |
| RLC 213 | RLC 223 |
| MAC 212 | MAC 222 |
| PHY 211 | PHY 221 |

gNB
220

**FIG. 2A**

UE
210

gNB
220

AMF
230

| | | |
|---|---|---|
| NAS 217 | | NAS 237 |
| RRC 216 | RRC 226 | |
| PDCP 214 | PDCP 224 | |
| RLC 213 | RLC 223 | |
| MAC 212 | MAC 222 | |
| PHY 211 | PHY 221 | |

**FIG. 2B**

**IP Packets**

**FIG. 3**

## SDAP 225

| | IP Packet _n_ | | IP Packet _n+1_ | | IP Packet _m_ |
|---|---|---|---|---|---|
| radio bearer **402** | H | SDAP SDU | H | SDAP SDU | radio bearer **404** · H · SDAP SDU |

**SDAP PDU** (with double arrow)

## PDCP 224

| | H | PDCP SDU | | H | PDCP SDU | | H | PDCP SDU |

## RLC 223

| | H | RLC SDU | | H | RLC SDU | | H | SDU Seg. | | H | SDU Seg. |

## MAC 222

| H | MAC SDU | H | MAC SDU | H | MAC SDU | | H | MAC SDU |

## PHY 221

| PHY SDU (Transport Block) | | PHY SDU |

**FIG. 4A**

| R | F | LCID | SDU Length |

| H | MAC CE | H | MAC CE | H | MAC SDU | H | MAC SDU |

**MAC PDU**

**FIG. 4B**

EP 4 454 345 B1

FIG. 5A — Downlink

FIG. 5B — Uplink

FIG. 6

1 Frame (10 ms)

| 0 | 1 | 2 | 3 | 4 | 5 | 6 | 7 | 8 | 9 |

1 Subframe (1 ms)

Subcarrier spacing = 15 kHz
1 slot per subframe

1 Slot (1 ms, 14 OFDM Symbols)

Subcarrier spacing = 30 kHz
2 slots per subframe

1 Slot (0.5 ms, 14 OFDM Symbols)

Subcarrier spacing = 60 kHz
4 slots per subframe

1 Slot (0.25 ms, 14 OFDM Symbols)

Subcarrier spacing = 120 kHz
8 slots per subframe

1 Slot (0.0125 ms, 14 OFDM Symbols)

**FIG. 7**

Resource Element (RE)
1 Symbol x 1 Subcarrier

Resource Block (RB)
12 Subcarriers

NR Carrier Bandwidth
(Up to 3300 Subcarriers)

Frequency

Time

One Slot (14 Symbols)

**FIG. 8**

EP 4 454 345 B1

**FIG. 9**

EP 4 454 345 B1

Component Carrier

Intraband,
contiguous
1002

Freq. Band
A

Freq. Band
B

Intraband,
non-contiguous
1004

Freq. Band
A

Freq. Band
B

Interband
1006

Freq. Band
A

Freq. Band
B

## FIG. 10A

PUCCH Group
1010

PUCCH Group
1050

Downlink
Component
Carriers

PCell
1011

SCell
1012

SCell
1013

PSCell
1051

SCell
1052

SCell
1053

UCI
1031

UCI
1032

UCI
1033

UCI
1071

UCI
1072

UCI
1073

Uplink
Component
Carriers

PCell
1021

SCell
1022

SCell
1023

PSCell
1061

SCell
1062

SCell
1063

## FIG. 10B

**FIG. 11A**

**FIG. 11B**

FIG. 12A

FIG. 12B

EP 4 454 345 B1

FIG. 13A

FIG. 13B

FIG. 13C

CORESET
1403

CORESET
1402

CORESET
1401

Bandwidth

One slot

**FIG. 14A**

| CORESET | → | CCE-to-REG mapping | → | Search Space | → | PDCCH candidate |
| | | | | | | PDCCH candidate |
| | | | | | | PDCCH candidate |

**FIG. 14B**

FIG. 15

**FIG. 16A**

**FIG. 16B**

**FIG. 16D**

**FIG. 16C**

EP 4 454 345 B1

EP 4 454 345 B1

**FIG. 17**

**RA configurations of cell**

**RA configurations for slice1/slice-group1**

| RA resources for slice1/slice-group1 | Preamble indexes for slice1/slice-group1 | Prioritization policy for slice1/slice-group1 (e.g., preamble power ramping step size, etc.) | preamble power offset for slice1/slice-group1 | preamble received target power for slice1/slice-group1 | ••• |

**RA configurations for slice2/slice-group2**

| RA resources for slice2/slice-group2 | Preamble indexes for slice2/slice-group2 | Prioritization policy for slice1/slice-group2 (e.g., preamble power ramping step size, etc.) | preamble power offset for slice2/slice-group2 | preamble received target power for slice2/slice-group2 | ••• |

⋮

**RA configurations for common**

| RA resources for common | Preamble indexes for common | Prioritization policy for common (e.g., preamble power ramping step size, etc.) | preamble power offset for common | preamble received target power for common | ••• |

**FIG. 18**

Indication of slice-group2 and slice-group3

Cell3

Indication of slice-group1

Indication of slice-group2

Cell1

Cell2

UE

UE determines to use slice1
→ select and/or camp on cell1 based on the indication of slice-group1 via cell1
and based on information that slice-group1 comprises slice1

FIG. 19

EP 4 454 345 B1

Radio Access Network (RAN)

RA based on the RA config
for slice-group1

| RA config for slice-group1 | RA config for slice-group2 | • • • | RA config for common |

Cell1

UE

UE determines to use slice1
→ perform RA procedure using the RA config for slice-group1,
based on information that slice-group1 comprises slice1

FIG. 20

FIG. 21

FIG. 22

```
UE                              BS                    Core Network Device
│                               │                              │
│ RAN-slicing information indicating that UE needs mapping     │
│ information between slice(s) and slice group (e.g., indication that
│ UE supports slice-based cell reselection and/or slice-based RA)
│──────────────────────────────────────────────────────────────>│
│                               │                              │
│                               │            Determine to send mapping information
│                               │            between slice(s) and slice group to UE,
│                               │            based on the RAN-slicing information of UE
│                               │                              │
│<─────────────────────────────────────────────────────────────│
│                               │ mapping information indicating that slice group1 comprises slice1
```

Determine to use slice1

```
│<──────────────────────────────│
│         indication of slice-group1 supported by cell
│         and/or RA config for slice-group1 of the cell
```

Select the cell based on the
mapping information and the
indication of slice-group1

```
│<─ ─ ─ ─ ─ ─ ─ ─ ─ ─ ─ ─ ─ ─ ─>│
│   RA procedure via the cell based on the RA config for slice1/slice-
│                    group1
```

FIG. 23

```
   UE                                    BS                            Core Network Device
```

RAN-slicing information indicating that UE does not need mapping
information between slice(s) and slice group (e.g., indication that
UE does not support slice-based cell reselection and/or slice-
based RA)

Determine to not send mapping information
between slice(s) and slice group to UE,
based on the RAN-slicing information of UE

response message without mapping information between slice(s)
and slice group

Determine to use slice1

indication of slice-group1 supported by cell
and/or RA config for slice-group1 of the cell

Select cell regardless of the
indication of slice-group1

RA procedure via the cell based on RA config for common purpose

EP 4 454 345 B1

**FIG. 24**

**Start: UE**

Does UE need mapping information between slice(s) and slice group?
(e.g., Does UE support slice-based cell reselection and/or slice-based RA?)

Yes — No

Send, to core network device, RAN-slicing information indicating that UE needs mapping information between slice(s) and slice group (e.g., indication that UE supports slice-based cell reselection and/or slice-based RA)

Send, to core network device, RAN-slicing information indicating that UE does not need mapping information between slice(s) and slice group (e.g., indication that UE does not support slice-based cell reselection and/or slice-based RA)

Receive, from core network device, mapping information indicating that slice-group1 comprises slice1

Receive, from core network device, response message without mapping information between slice(s) and slice group

Determine to use slice1

Determine to use slice1

Monitor cell(s)

Monitor cell(s)

No

Does UE receive indication that cell supports slice-group1?

Yes

Select and/or camp on the cell based on the mapping information

Select and/or camp on cell (e.g., regardless of indication of slice1/slice-group1 via the cell)

Does the cell provide RA config for slice-group1?

Yes

Perform RA procedure via the cell based on the RA config for slice-group1 and based on the mapping information

Perform RA procedure via the cell based on RA config for common purpose

Does cell supports slice1?

Yes — No

Communicate packets associated with slice1

Communicate packets associated with slice1

**End**

**FIG. 25**

Start: Core Network Device

Receive, from UE, RAN-slicing information of UE

Does the RAN-slicing information indicate that UE needs mapping information between slice(s) and slice group?
(e.g., Does RAN-slicing information indicate that UE supports slice-based cell reselection and/or slice-based RA)

Yes — No

Determine to send mapping information between slice(s) and slice group to UE, based on the RAN-slicing information of UE

Determine to not send mapping information between slice(s) and slice group to UE, based on the RAN-slicing information of UE

Send, to UE, mapping information indicating that slice-group1 comprises slice1

Send, to UE, response message without mapping information between slice(s) and slice group

End

FIG. 26

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023080057 A1

- WO 2023057980 A1

**Non-patent literature cited in the description**

- **CHINA MOBILE**. Support of slice priority and slice group information for cell (re)selection. *3GPP doc. S2-2107535, SA WG2 Meeting #S2-147e*, 18 October 2021
- **SAMSUNG**. Support Slice group for cell re-selection. *3GPP doc. S2-2108620, 3GPP TSG-SA2 Meeting #148E*, 15 November 2021
- **LENOVO et al.** Considerations on scenarios and solution space of RAN slicing enhancements. *3GPP doc. R2-2101061, 3GPP TSG RAN WG2 Meeting #113-e*, 25 January 2021

- **NOKIA et al.** Enabling configuration of Network Slice AS Groups. *3GPP doc. S2-2108866, 3GPP TSG-WG SA2 Meeting #148e*, 15 November 2021
- **ERICSSON**. Running 38.304 CR for RAN slicing. *3GPP doc. R2-2200044, 3GPP TSG-RAN WG2 Meeting #116-bis*, 17 January 2022
- **OPPO**. 38.321 running CR for RAN Slicing. *3GPP doc. R2-2111435, 3GPP TSG-RAN WG2 Meeting #116-e*, 01 November 2021